(19) Europäisches Patentamt
European Patent Office
Office européen des brevets

(11) **EP 3 215 892 B1**

(12) **EUROPEAN PATENT SPECIFICATION**

(45) Date of publication and mention of the grant of the patent:
**18.03.2020 Bulletin 2020/12**

(21) Application number: **15777878.8**

(22) Date of filing: **08.10.2015**

(51) Int Cl.:
***G02F 1/139*** *(2006.01)* ***G02F 1/1337*** *(2006.01)*
***C09K 19/00*** *(2006.01)*

(86) International application number:
**PCT/EP2015/001978**

(87) International publication number:
**WO 2016/070952 (12.05.2016 Gazette 2016/19)**

(54) **LIGHT MODULATION ELEMENT**

LICHTMODULATIONSELEMENT

ÉLÉMENT DE MODULATION DE LUMIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2014 EP 14003732**

(43) Date of publication of application:
**13.09.2017 Bulletin 2017/37**

(73) Proprietor: **Merck Patent GmbH**
**64293 Darmstadt (DE)**

(72) Inventors:
- **FIEBRANZ, Bernd**
  **64839 Muenster (DE)**
- **KRUMWIEDE, Meike**
  **64289 Darmstadt (DE)**
- **SIEMIANOWSKI, Simon**
  **64291 Darmstadt (DE)**

(56) References cited:
- **GIOVANNI CARBONE ET AL: "Uniform Lying Helix Alignment on Periodic Surface Relief Structure Generated via Laser Scanning Lithography", MOLECULAR CRYSTALS AND LIQUID CRYSTALS, vol. 544, no. 1, 30 June 2011 (2011-06-30) , XP055203408, ISSN: 1542-1406, DOI: 10.1080/15421406.2011.569265**
- **KOMITOV L ET AL: "Alignment of cholesteric liquid crystals using periodic anchoring", JOURNAL OF APPLIED PHYSICS, AMERICAN INSTITUTE OF PHYSICS, US, vol. 86, no. 7, 1 October 1999 (1999-10-01), pages 3508-3511, XP012048676, ISSN: 0021-8979, DOI: 10.1063/1.371249**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 215 892 B1

## Description

The invention relates to a light modulation element as defined in claim 1. The invention is further related to a method of production of said light modulation element and to the use of said light modulation element in various types of optical and electro-optical devices, such as electro-optical displays, liquid crystal displays (LCDs), non-linear optic (NLO) devices, and optical information storage devices.

Liquid Crystal Displays (LCDs) are widely used to display information. LCDs are used for direct view displays, as well as for projection type displays. The electro-optical mode, which is employed for most displays, still is the twisted nematic (TN)-mode with its various modifications. Besides this mode, the super twisted nematic (STN)-mode and more recently the optically compensated bend (OCB)-mode and the electrically controlled birefringence (ECB)-mode with their various modifications, as e. g. the vertically aligned nematic (VAN), the patterned ITO vertically aligned nematic (PVA)-, the polymer stabilized vertically aligned nematic (PSVA)-mode and the multi domain vertically aligned nematic (MVA)-mode, as well as others, have been increasingly used. All these modes use an electrical field, which is substantially perpendicular to the substrates, respectively to the liquid crystal layer. Besides these modes there are also electro-optical modes employing an electrical field substantially parallel to the substrates, respectively the liquid crystal layer, like e.g. the In Plane Switching (short IPS) mode (as disclosed e.g. in DE 40 00 451 and EP 0 588 568) and the Fringe Field Switching (FFS) mode. Especially the latter mentioned electro-optical modes, which have good viewing angle properties and improved response times, are increasingly used for LCDs for modern desktop monitors and even for displays for TV and for multimedia applications and thus are competing with the TN-LCDs.

Further to these displays, new display modes using cholesteric liquid crystals having a relatively short cholesteric pitch have been proposed for use in displays exploiting the so-called "flexoelectric" effect, which is described inter alia by Meyer et al., Liquid Crystals 1987, 58, 15; Chandrasekhar, "Liquid Crystals", 2nd edition, Cambridge University Press (1992); and P.G. deGennes et al., "The Physics of Liquid Crystals", 2nd edition, Oxford Science Publications (1995).

Displays exploiting flexoelectric effect are generally characterized by fast response times typically ranging from 500 $\mu$s to 3 ms and further feature excellent grey scale capabilities.

In these displays, the cholesteric liquid crystals are e.g. oriented in the "uniformly lying helix" arrangement (ULH), which also give this display mode its name. For this purpose, a chiral substance, which is mixed with a nematic material, induces a helical twist whilst transforming the material into a chiral nematic material, which is equivalent to a cholesteric material.

The uniform lying helix texture is realized using a chiral nematic liquid crystal with a short pitch, typically in the range from 0.2 $\mu$m to 2 $\mu$m, preferably of 1.5 $\mu$m or less, in particular of 1.0 $\mu$m or less, which is unidirectional aligned with its helical axis parallel to the substrates of a liquid crystal cell. In this configuration, the helical axis of the chiral nematic liquid crystal is equivalent to the optical axis of a birefringent plate.

If an electrical field is applied to this configuration normal to the helical axis, the optical axis is rotated in the plane of the cell, similar as the director of a ferroelectric liquid crystal rotate as in a surface stabilized ferroelectric liquid crystal display.

In liquid crystal displays exploiting the flexoelectric modes the tilt angle ($\Theta$) describes the rotation of the optic axis in the x-y plane of the cell. There are two basic methods of using this effect to generate a white and dark state. The biggest difference between these two methods resides in the tilt angle that is required and in the orientation of the transmission axis of the polarizer relative the optic axis for the ULH in the zero field state. The two different methods are briefly described below with reference to figures 1 and 2.

The main difference between the "$\Theta$ mode" (illustrated in figure 2) and the "2$\Theta$ mode" (shown in figure 1) is that the optical axis of the liquid crystal in the state at zero field is either parallel to one of the polarizer axis (in the case of the 2$\Theta$ mode) or at an angle of 22.5° to axis one of the polarizers (in the case of the $\Theta$ mode). The advantage of the 2$\Theta$ mode over the $\Theta$ mode is that the liquid crystal display appears black when there is no field applied to the cell. The advantage of the $\Theta$ mode, however, is that e/K may be lower because only half of the switching angle is required for this mode compared to the 2$\Theta$ mode.

The angle of rotation of the optical axis ($\Phi$) is given in good approximation by formula (1)

$$\tan \Phi = \bar{e} \; P_0 \, E \, / \, (2 \, \pi \, K) \qquad (1)$$

wherein

Po is the undisturbed pitch of the cholesteric liquid crystal,

$\bar{e}$ is the average [$\bar{e}$ = ½ ($e_{splay}$ + $e_{bend}$)] of the splay flexoelectric coefficient ($e_{splay}$) and the bend flexoelectric coefficient ($e_{bend}$),

E is the electrical field strength and
*K* is the average [$K = ½ (k_{11} + k_{33})$] of the splay elastic constant ($k_{11}$) and the bend elastic constant ($K_{33}$)

and wherein

$\bar{e} / K$ is called the flexo-elastic ratio.

This angle of rotation is half the switching angle in a flexoelectric switching element.
The response time ($\tau$) of this electro-optical effect is given in good approximation by formula (2)

$$\tau = [P_0/(2\pi)]^2 \cdot \gamma / K \quad (2)$$

wherein

$\gamma$ is the effective viscosity coefficient associated with the distortion of the helix.

There is a critical field ($E_c$) to unwind the helix, which can be obtained from equation (3)

$$E_c = (\pi^2 / P_0) \cdot [k_{22}/(\varepsilon_0 \cdot \Delta\varepsilon)]^{1/2} \quad (3)$$

wherein

$k_{22}$ is the twist elastic constant,
$\varepsilon_0$ is the permittivity of vacuum and
$\Delta\varepsilon$ is the dielectric anisotropy of the liquid crystal.

However, the main obstacle preventing the mass production of a ULH display is that its alignment is intrinsically unstable and no single surface treatment (planar, homeotropic or tilted) provides an energetically stable state with additional directionality of the ULH texture. Due to this, obtaining a high quality dark state is difficult as a large amount of defects are present when conventional cells are used.
Attempts to improve ULH alignment mostly involving polymer structures on surfaces or bulk polymer networks, such as, for example described in,
Appl. Phys. Lett. 2010, 96, 113503 " Periodic anchoring condition for alignment of a short pitch cholesteric liquid crystal in uniform lying helix texture*";*
Appl. Phys. Lett. 2009, 95, 011102, "Short pitch cholesteric electro-optical device based on periodic polymer structures*";*
J. Appl. Phys.2006, 99, 023511, "Effect of polymer concentration on stabilized large-tilt-angle flexoelectro-optic switching*";*
J. Appl. Phys. 1999, 86, 7, "Alignment of cholesteric liquid crystals using periodic anchoring*";*
Jap. J. Appl. Phys. 2009, 48, 101302, "Alignment of the Uniform Lying Helix Structure in Cholesteric Liquid Crystals*" or* US 2005/0162585 A1.
Another attempt to improve ULH alignment was suggested by Carbone et al. in Mol. Cryst. Liq. Cryst. 2011, 544, 37 - 49. The authors utilized a surface relief structure created by curing an UV curable material by a two-photon excitation laser-lithography process in order to promote the formation of a stable ULH texture.
However, all above-described attempts require unfavorable processing steps, which are especially not compatible with the commonly known methods for mass production of LC devices.
Thus, one aim of the invention is to provide an alternative or preferably improved flexoelectric light modulation element of the ULH mode, which does not have the drawbacks of the prior art and preferably have the advantages mentioned above and below.
These advantages are amongst others favourable high switching angles, favorable fast response times, favorable low voltage required for addressing, compatible with common driving electronics, and finally, a favorable really dark "off state", which should be achieved by an long term stable alignment of the ULH texture.
Other aims of the present invention are immediately evident to the person skilled in the art from the following detailed description.
Surprisingly, the inventors have found out that one or more of the above-defined aims can be achieved by providing a light modulation element as defined in claim 1.
In particular, the stability of the ULH texture of the cholesteric liquid crystal material in the light modulation

element of the present invention is significantly improved and finally results in an improved dark "off" state compared to devices of the prior art.

Terms and Definitions

The term "liquid crystal", "mesomorphic compound", or "mesogenic compound" (also shortly referred to as "mesogen") means a compound that under suitable conditions of temperature, pressure and concentration can exist as a mesophase (nematic, smectic, etc.) or in particular as a LC phase. Non-amphiphilic mesogenic compounds comprise for example one or more calamitic, banana-shaped or discotic mesogenic groups.

The term "mesogenic group" means in this context, a group with the ability to induce liquid crystal (LC) phase behaviour. The compounds comprising mesogenic groups do not necessarily have to exhibit an LC phase themselves. It is also possible that they show LC phase behaviour only in mixtures with other compounds. For the sake of simplicity, the term "liquid crystal" is used hereinafter for both mesogenic and LC materials.

Throughout the application, the term "aryl and heteroaryl groups" encompass groups, which can be monocyclic or polycyclic, i.e. they can have one ring (such as, for example, phenyl) or two or more rings, which may also be fused (such as, for example, naphthyl) or covalently linked (such as, for example, biphenyl), or contain a combination of fused and linked rings. Heteroary goups contain one or more heteroatoms, preferably selected from O, N, S and Se. Particular preference is given to mono-, bi- or tricyclic aryl groups having 6 to 25 C atoms and mono-, bi- or tricyclic heteroaryl groups having 2 to 25 C atoms, which optionally contain fused rings, and which are optionally substituted. Preference is furthermore given to 5-, 6- or 7-membered aryl and heteroaryl groups, in which, in addition, one or more CH groups may be replaced by N, S or O in such a way that O atoms and/or S atoms are not linked directly to one another. Preferred aryl groups are, for example, phenyl, biphenyl, terphenyl, [1,1':3',1"]terphenyl-2'-yl, naphthyl, anthracene, binaphthyl, phenanthrene, pyrene, dihydropyrene, chrysene, perylene, tetracene, pentacene, benzopyrene, fluorene, indene, indenofluorene, spirobifluorene, more preferably 1,4-phenylene, 4,4'-biphenylene, 1, 4-tephenylene.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole, indolizine, indazole, benzimidazole, benzotriazole, purine, naphthimidazole, phenanthrimidazole, pyridimidazole, pyrazinimidazole, quinoxalinimidazole, benzoxazole, naphthoxazole, anthroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]thiophene, dithienothiophene, isobenzothiophene, dibenzothiophene, benzothiadiazothiophene, or combinations of these groups. The heteroaryl groups may also be substituted by alkyl, alkoxy, thioalkyl, fluorine, fluoroalkyl or further aryl or heteroaryl groups.

In the context of this application, the term "(non-aromatic) alicyclic and heterocyclic groups" encompass both saturated rings, i.e. those that contain exclusively single bonds, and partially unsaturated rings, i.e. those that may also contain multiple bonds. Heterocyclic rings contain one or more heteroatoms, preferably selected from Si, O, N, S and Se. The (non-aromatic) alicyclic and heterocyclic groups can be monocyclic, i.e. contain only one ring (such as, for example, cyclohexane), or polycyclic, i.e. contain a plurality of rings (such as, for example, decahydronaphthalene or bicyclooctane). Particular preference is given to saturated groups. Preference is furthermore given to mono-, bi- or tricyclic groups having 3 to 25 C atoms, which optionally contain fused rings and that are optionally substituted. Preference is furthermore given to 5-, 6-, 7- or 8-membered carbocyclic groups in which, in addition, one or more C atoms may be replaced by Si and/or one or more CH groups may be replaced by N and/or one or more non-adjacent $CH_2$ groups may be replaced by -O- and/or -S-. Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]-pentane-1,3-diyl, bicyclo[2.2.2]octane-1,4-diyl, spiro[3.3]heptane-2,6-diyl, octahydro-4,7-methanoindane-2,5-diyl, more preferably 1,4-cyclohexylene 4,4'- bicyclohexylene, 3,17-hexadecahydro-cyclopenta[a]phenanthrene, optionally being substituted by one or more identical or different groups L. Especially preferred aryl-, heteroaryl-, alicyclic- and heterocyclic groups are 1,4-phenylene, 4,4'-biphenylene, 1, 4-terphenylene, 1,4-cyclohexylene, 4,4'- bicyclohexylene, and 3,17-hexadecahydro-cyclopenta[a]-phenanthrene, optionally being substituted by one or more identical or different groups L.

Preferred substituents (L) of the above-mentioned aryl-, heteroaryl-, alicyclic- and heterocyclic groups are, for example, solubility-promoting groups, such as alkyl or alkoxy and electron-withdrawing groups, such as fluorine, nitro or nitrile. Particularly preferred substituents are, for example, - F, Cl, CN, $NO_2$, $CH_3$, $C_2H_5$, $OCH_3$, $OC_2H_5$, $COCH_3$,

$COC_2H_5$, $COOCH_3$, $COOC_2H_5$, $CF_3$, $OCF_3$, $OCHF_2$ or $OC_2F_5$.

Above and below "halogen" denotes F, Cl, Br or I.

Above and below, the terms "alkyl", "aryl", "heteroaryl", etc., also encompass polyvalent groups, for example alkylene, arylene, heteroarylene, etc. The term "aryl" denotes an aromatic carbon group or a group derived there from. The term "heteroaryl" denotes "aryl" in accordance with the above definition containing one or more heteroatoms.

Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, dodecanyl, trifluoromethyl, perfluoro-n-butyl, 2,2,2-trifluoroethyl, perfluorooctyl, perfluorohexyl, etc.

Preferred alkoxy groups are, for example, methoxy, ethoxy, 2-methoxyethoxy, n-propoxy, i-propoxy, n-butoxy, i-butoxy, s-butoxy, t-butoxy, 2-methylbutoxy, n-pentoxy, n-hexoxy, n-heptoxy, n-octoxy, n-nonoxy, n-decoxy, n-undecoxy, n-dodecoxy.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl.

Preferred alkynyl groups are, for example, ethynyl, propynyl, butynyl, pentynyl, hexynyl, octynyl.

Preferred amino groups are, for example, dimethylamino, methylamino, methylphenylamino, phenylamino.

The term "chiral" in general is used to describe an object that is non-superimposable on its mirror image.

"Achiral" (non- chiral) objects are objects that are identical to their mirror image.

The terms "chiral nematic" and "cholesteric" are used synonymously in this application, unless explicitly stated otherwise.

The pitch induced by the chiral substance (Po) is in a first approximation inversely proportional to the concentration (c) of the chiral material used. The constant of proportionality of this relation is called the helical twisting power (HTP) of the chiral substance and defined by equation (5)

$$HTP \equiv 1 / (c \cdot P_0) \qquad (5)$$

wherein

c is concentration of the chiral compound.

The term "bimesogenic compound" relates to compounds comprising two mesogenic groups in the molecule. Just like normal mesogens, they can form many mesophases, depending on their structure. In particular, bimesogenic compound may induce a second nematic phase, when added to a nematic liquid crystal medium. Bimesogenic compounds are also known as "dimeric liquid crystals".

A "photoresist" is a light-sensitive material used in several industrial processes, such as photolithography and photoengraving to form a patterned coating on a surface. The most important light types include UV, and the g and I lines having wavelength of 436 nm and 365 nm respectively of a mercury-vapor lamp.

"Ultraviolet (UV) light" is electromagnetic radiation having a wavelength in the range between approximately 400 nm and 200 nm.

A "positive photoresist" or "positive tone photoresist" is a type of photoresist in which the portion of the photoresist that is exposed to light becomes soluble to the photoresist developer. The portion of the photoresist that is unexposed remains insoluble to the photoresist developer and corresponds in this case to the photoresist mask.

A "negative photoresist" or "positive tone photoresist" is a type of photoresist in which the portion of the photoresist that is exposed to light becomes insoluble to the photoresist developer and corresponds in this case to the photoresist mask. The unexposed portion of the photoresist is dissolved by the photoresist developer.

"Photoresist developers" are used in a photolithography process to create on the wafer surface the patterned image projected onto the photoresist. The developers are typically basic aqueous solutions, formulated either with an organic amine such as TMAH, or an inorganic salt such as potassium hydroxide.

The term "stripes" relates in particular to stripes having a straight, curvy or zig-zag- pattern but is not limited to this. Furthermore, the outer shape or the cross-section of the stripes encompasses but is not limited to triangular, circular, semi-circular, or quadrangular shapes.

The term "substantially parallel" encompasses also stripe patterns having small deviations in their parallelism to each other, such as deviations less than 10°, preferably less than 5°, in particular less than 2° with respect to their orientation to each other.

The term "alignment" or "orientation" relates to alignment (orientation ordering) of anisotropic units of material such as small molecules or fragments of big molecules in a common direction named "alignment direction". In an aligned

layer of liquid-crystalline material, the liquid-crystalline director coincides with the alignment direction so that the alignment direction corresponds to the direction of the anisotropy axis of the material.

The term "planar orientation/alignment", for example in a layer of an liquid-crystalline material, means that the long molecular axes (in case of calamitic compounds) or the short molecular axes (in case of discotic compounds) of a proportion of the liquid-crystalline molecules are oriented substantially parallel (about 180°) to the plane of the layer.

The term "homeotropic orientation/alignment", for example in a layer of a liquid-crystalline material, means that the long molecular axes (in case of calamitic compounds) or the short molecular axes (in case of discotic compounds) of a proportion of the liquid-crystalline molecules are oriented at an angle θ ("tilt angle") between about 80° to 90° relative to the plane of the layer.

The wavelength of light generally referred to in this application is 550 nm, unless explicitly specified otherwise.

The birefringence Δn herein is defined in equation (6)

$$\Delta n = n_e - n_o \qquad (6)$$

wherein ne is the extraordinary refractive index and no is the ordinary refractive index, and the average refractive index $n_{av.}$ is given by the following equation (7).

$$n_{av.} = [(2\, n_o^2 + n_e^2)/3]^{1/2} \qquad (7)$$

The extraordinary refractive index $n_e$ and the ordinary refractive index $n_o$ can be measured using an Abbe refractometer. Δn can then be calculated from equation (6).

In the present application the term "dielectrically positive" is used for compounds or components with $\Delta\varepsilon > 3.0$, "dielectrically neutral" with $-1.5 \leq \Delta\varepsilon \leq 3.0$ and "dielectrically negative" with $\Delta\varepsilon < -1.5$. Δε is determined at a frequency of 1 kHz and at 20 °C. The dielectric anisotropy of the respective compound is determined from the results of a solution of 10 % of the respective individual compound in a nematic host mixture. In case the solubility of the respective compound in the host medium is less than 10 % its concentration is reduced by a factor of 2 until the resultant medium is stable enough at least to allow the determination of its properties. Preferably, the concentration is kept at least at 5 %, however, in order to keep the significance of the results a high as possible. The capacitance of the test mixtures are determined both in a cell with homeotropic and with homogeneous alignment. The cell gap of both types of cells is approximately 20 μm. The voltage applied is a rectangular wave with a frequency of 1 kHz and a root mean square value typically of 0.5 V to 1.0 V, however, it is always selected to be below the capacitive threshold of the respective test mixture.

Δε is defined as $(\varepsilon|| - \varepsilon\perp)$, whereas $\varepsilon_{av.}$ is $(\varepsilon|| + 2\,\varepsilon\perp) / 3$.

The dielectric permittivity of the compounds is determined from the change of the respective values of a host medium upon addition of the compounds of interest. The values are extrapolated to a concentration of the compounds of interest of 100 %. The host mixture is disclosed in H.J. Coles et al., J. Appl. Phys. 2006, 99, 034104 and has the composition given in the table 1.

Table 1: Host mixture composition

| Compound | Concentration |
|---|---|
| F-PGI-ZI-9-ZGP-F | 25 % |
| F-PGI-ZI-11-ZGP-F | 25 % |
| FPGI-O-5-O-PP-N | 9.5 % |
| FPGI-O-7-O-PP-N | 39 % |
| CD-1 | 1.5 % |

Furthermore, the definitions as given in C. Tschierske, G. Pelzl and S. Diele, Angew. Chem. 2004, 116, 6340-6368 shall apply to non-defined terms related to liquid crystal materials in the instant application.

Brief Description of Drawings

Fig. 1 shows a schematic illustration of the "2Θ mode"

Fig. 2 shows a schematic illustration of the "Θ mode"

Fig. 3 shows a schematic drawing of a light modulation element according to the present invention. It shows in detail the two substrates (1), the electrode structures (2), the alignment layers (3), and the photoresist patterns consisting of periodic substantially parallel stripes (4). The cholesteric liquid crystalline medium layer is omitted because of clarity reasons.
As can be seen, the setup of the assembled cell is mirrored.

Fig. 4 shows a schematic drawing of another embodiment of a light modulation element according to the present invention. It shows in detail the two substrates (1), the electrode structures (2), the alignment layer (3), and the photoresist pattern consisting of periodic substantially parallel stripes (4). The cholesteric liquid crystalline medium layer is omitted because of clarity reasons.

Detailed Description

In the following description of the invention the terms "preferably" or "preferred" and the auxiliary verb "may" are frequently used, which imply that certain features described subsequently might be optional only. However, whenever those words are used in combination with a feature required by one of the appended independent claims, the respective features in question are to be construed as indispensable, and thus actually form part of the corresponding embodiments.
In a preferred embodiment, the light modulation element comprises a cholesteric liquid crystalline medium sandwiched between two substrates (1), each provided with an electrode structure (2), wherein at least one of the substrates is additionally provided with an alignment layer (3) which is provided with a photoresist pattern consisting of periodic substantially parallel stripes (4).
In another preferred embodiment, the light modulation element comprises a cholesteric liquid crystalline medium sandwiched between two substrates (1), each provided with an electrode structure (2), wherein both substrates are additionally provided with an alignment layer (3) which are provided with a photoresist pattern consisting of periodic substantially parallel stripes (4).
In accordance with the invention, the substrates may consist, inter alia, each and independently from another of a polymeric material, of metal oxide, for example ITO and of glass or quartz plates, preferably each and independently of another of glass and/or ITO, in particular glass/glass.
Suitable and preferred polymeric substrates are for example films of cyclo olefin polymer (COP), cyclic olefin copolymer (COC), polyester such as polyethyleneterephthalate (PET) or polyethylene-naphthalate (PEN), polyvinylalcohol (PVA), polycarbonate (PC) or triacetylcellulose (TAC), very preferably PET or TAC films. PET films are commercially available for example from DuPont Teijin Films under the trade name Melinex ®. COP films are commercially available for example from ZEON Chemicals L.P. under the trade name Zeonor ® or Zeonex ®. COC films are commercially available for example from TOPAS Advanced Polymers Inc. under the trade name Topas ®.

The substrate layers can be kept at a defined separation from one another by, for example, spacers, or projecting structures in the layer. Typical spacer materials are commonly known to the expert and are selected, for example, from plastic, silica, epoxy resins, etc.

In a preferred embodiment, the substrates are arranged with a separation in the range from approximately 1 μm to approximately 50 μm from one another, preferably in the range from approximately 1 μm to approximately 25 μm from one another, and more preferably in the range from approximately 1 μm to approximately 15 μm from one another. The layer of the cholesteric liquid-crystalline medium is thereby located in the interspace.

In a preferred embodiment, the light modulation element comprises an electrode structure, which is capable to allow the application of an electric field, which is substantially perpendicular to the substrates or the cholesteric liquid-crystalline medium layer.

Preferably, the light modulation element comprises an electrode structure which is provided as an electrode layer on the entire substrate and/or the pixel area.

Suitable electrode materials are commonly known to the expert, as for example electrode structures made of metal or metal oxides, such as, for example transparent indium tin oxide (ITO), which is preferred according to the present invention.

Thin films of ITO are commonly deposited on substrates by physical vapor deposition, electron beam evaporation, or sputter deposition techniques.

Preferably, the electrodes of the light modulation element are associated with a switching element, such as a thin film transistor (TFT) or thin film diode (TFD).

In a preferred embodiment, the light modulation element comprises at least one alignment layer, which induces

a homeotropic alignment to the adjacent liquid crystal molecules, and which is provided on the electrode structure or electrode layer.

Typical alignment layer materials are commonly known to the expert, such as, for example, layers made of alkoxysilanes, alkyltrichlorosilanes, CTAB, or polyimides, such as for example SE-5561 commercially available for example from Nissan.

The alignment layer materials can be applied onto the substrate or electrode layer by conventional coating techniques like spin coating, roll-coating or blade coating. It can also be applied to the substrate or electrode layer by conventional printing techniques which are known to the expert, like for example screen printing, offset printing, reel-to-reel printing, letter press printing, gravure printing, rotogravure printing, flexographic printing, intaglio printing, pad printing, heat-seal printing, ink-jet printing or printing by means of a stamp or printing plate.

Further suitable methods to achieve homeotropic alignment are described for example in J. Cognard, Mol.Cryst.Liq.Cryst. 78, Supplement 1, 1-77 (1981).

The light modulation element in accordance with the present invention comprises at least one alignment layer provided with a photoresist pattern consisting of substantially parallel stripes. Said photoresist pattern is obtainable via commonly known photolithography processes from a layer of a suitable photoresist, which is provided on the alignment layer.

Suitable photoresists, structurable top-coats and photo-spacer materials are commonly known to the expert and can be selected from negative or positive tone photoresists.

Examples of suitable positive tone photoresists are commercially available from AZ Electronic Materials (e.g. RFP series, TFP series, SZP series, HKT series, SFP series), MicroChem (e.g. PMMA Series), Dow (e.g. S1800 Series or SPR-220) and Microresist Technology( e.g. ma-P1200 Series).

Examples of suitable negative tone photoresists are commercially available from AZ Electronic Materials (e.g. CTP series, ANR series), MicroChem (e.g. SU-8 Series or KMPR Series), Dow (e.g. UVN-30) and Microresist Technology( e.g. ma-N 1400 Series or ma-N 2400 Series).

Examples of suitable photo-spacer and structurable top-coat materials are commercially available from JSR Corp. (e.g. Optmer NN series, Optmer PC series).

The photoresist can be applied onto the alignment layer by conventional coating techniques like spin coating, roll coating or blade coating. It can also be applied to the substrate by conventional printing techniques which are known to the expert, like for example screen printing, offset printing, reel-to-reel printing, letter press printing, gravure printing, rotogravure printing, flexographic printing, intaglio printing, pad printing, heat-seal printing, ink-jet printing or printing by means of a stamp or printing plate.

It is also possible to dissolve the photoresist in a suitable solvent. This solution is then coated or printed onto the substrate, for example by spin-coating, printing, or other known techniques, and the solvent is evaporated off before polymerization. In most cases, it is suitable to heat the mixture in order to facilitate the evaporation of the solvent.

As solvents, for example standard organic solvents can be used. The solvents can be selected for example from ethers such as THF, ketones such as acetone, methyl ethyl ketone, methyl propyl ketone or cyclohexanone; acetates such as methyl, ethyl or butyl acetate or methyl acetoacetate; alcohols such as methanol, ethanol or isopropyl alcohol; aromatic solvents such as toluene or xylene; halogenated hydrocarbons such as di- or trichloromethane; glycols or their esters such as PGMEA (propyl glycol monomethyl ether acetate), $\gamma$-butyrolactone, and the like. It is also possible to use binary, ternary, or higher mixtures of the above solvents.

The layer thickness of the applied photoresist can be varied in the range from 30 to 900 nm, preferably in the range from 50 to 600 nm, more preferably in the range from 75 to 400 nm, in particular in the range from 100 to 250 nm. Correspondingly, the height of the periodic substantially parallel stripes of photoresist pattern in the light modulation element in accordance with the present inventioncan be varied in the range from 30 to 900 nm, preferably in the range from 50 to 600 nm, more preferably in the range from 75 to 400 nm, in particular in the range from 100 to 250 nm

In most cases, it is suitable to heat the photoresist coated substrate (so called prebaking) in order to facilitate the evaporation of the solvent, typically at 90 to 120 °C for 30 to 90 seconds on a hotplate.

After prebaking, the photoresist is exposed to actinic radiation through a suitable photomask. The exposure to light causes a chemical change that allows some of the photoresist to be removed by a suitable photoresist developer. In detail, after irradiation, areas of irradiated positive photoresist become soluble in the developer and the unexposed positive photoresist polymerizes and becomes insoluble in the developer. In case of the application of a negative photoresist, unexposed regions are soluble in the developer and the exposed negative photoresist polymerizes and becomes insoluble in the developer.

Suitable photoresist developer can be selected from organic or inorganic developers such as for example commercially available from AZ Electronic Materials (AZ 300 MIF, AZ 326 MIF, AZ 330 MIF, AZ 405 MIF, AZ 726 MIF, AZ 833 MIF, AZ Developer, AZ 400K Developer, AZ 421K Developer) or Microresist Technology (e.g. mr-Dev600).

Actinic radiation means irradiation with light, preferably UV light.

The radiation wavelength can be adjusted by UV band pass filters. The irradiation wavelength is preferably in

the range from 250 nm to 450 nm, more preferably in the range from 320 nm to 390 nm. Especially preferred is an irradiation wavelength of about 365 nm.

As a source for UV radiation, for example a single UV lamp can be used. When using a high lamp power the curing time can be reduced. Another possible source for UV radiation is a laser.

The curing time is dependent, inter alia, on the reactivity of the photoresist, the thickness of the coated layer, and the power of the UV lamp. The curing time is preferably ≤ 5 minutes, very preferably ≤ 3 minutes, most preferably ≤ 1 minute. For mass production, short curing times of ≤ 30 seconds are preferred.

A suitable UV radiation power is preferably in the range from 5 to 200 $mWcm^{-2,}$ more preferably in the range from 10 to 175 $mWcm^{-2}$ and most preferably in the range from 15 to 150 $mWcm^{-2}$.

In connection with the applied UV radiation and as a function of time, a suitable UV dose is preferably in the range from 25 to 7200 $mJcm^{-2}$ more preferably in the range from 500 to 7200 $mJcm^{-2}$ and most preferably in the range from 3000 to 7200 $mJcm^{-2}$.

In accordance with the present invention, the irradiation is performed by exposing only distinct parts of the layer of the photoresist to actinic radiation. This can be achieved, for example, by masking techniques, which are commonly known to the expert, like for example by using a photo-mask, preferably a stripe mask.

As described above, the structure of the photoresist pattern derives directly from the utilized photomask. Preferably, the photomask or the photoresist pattern is selected as such that at the same time the gap between the stripes and the width of the stripes are identical and corresponds to the half of the helical pitch of the applied cholesteric liquid crystalline material. For instance with respect to a cholesteric liquid crystalline material having a pitch of 1 μm, a photoresist pattern consisting of periodic substantially parallel stripes is preferred, which has a gap between the stripes of 500 nm and a width of the stripes of 500 nm.

In another preferred embodiment, the photomask or the corresponding photoresist pattern is selected as such that at the same time the gap between the stripes and the width of the stripes are identical and corresponds to the even multiple of the helical pitch of the applied cholesteric liquid crystalline material.

In a further preferred embodiment, the photomask or the corresponding photoresist pattern is selected as such that at the same time the gap between the stripes and the width of the stripes are not identical but corresponds to the half of the helical pitch of the applied cholesteric liquid crystalline material or to the even multiple of the helical pitch of the applied cholesteric liquid crystalline material.

After developing, the resulting stripe-patterned photoresist pattern is then "hard-baked", typically at 120 to 250 °C for 20 to 30 minutes.

Optionally, the photoresist pattern can be rubbed by techniques known to the skilled person in parallel direction to the stripes. This leads to an inducement of planar alignment of the adjacent liquid crystalline molecules. Consequently the rubbed photoresist pattern has a function of another alignment area Therefore, a periodic sequence of aligning areas in the light modulation element, which are capable to induce homeotropic and planar alignment to the adjacent liquid crystalline molecules, can be realized and the ULH texture can be further stabilized.

In a preferred embodiment of the invention, the light modulation element comprises two or more polarisers, at least one of which is arranged on one side of the layer of the liquid-crystalline medium and at least one of which is arranged on the opposite side of the layer of the liquid-crystalline medium. The layer of the liquid-crystalline medium and the polarisers here are preferably arranged parallel to one another.

The polarisers can be linear polarisers. Preferably, precisely two polarisers are present in the light modulation element. In this case, it is furthermore preferred for the polarisers either both to be linear polarisers. If two linear polarisers are present in the light modulation element, it is preferred in accordance with the invention for the polarisation directions of the two polarisers to be crossed.

It is furthermore preferred in the case where two circular polarisers are present in the light modulation element for these to have the same polarisation direction, i.e. either both are right-hand circular-polarised or both are lefthand circular-polarised.

The polarisers can be reflective or absorptive polarisers. A reflective polariser in the sense of the present application reflects light having one polarisation direction or one type of circular-polarised light, while being transparent to light having the other polarisation direction or the other type of circular-polarised light. Correspondingly, an absorptive polariser absorbs light having one polarisation direction or one type of circular-polarised light, while being transparent to light having the other polarisation direction or the other type of circular-polarised light. The reflection or absorption is usually not quantitative; meaning that complete polarisation of the light passing through the polariser does not take place.

For the purposes of the present invention, both absorptive and reflective polarisers can be employed. Preference is given to the use of polarisers, which are in the form of thin optical films. Examples of reflective polarisers which can be used in the light modulation element according to the invention are DRPF (diffusive reflective polariser film, 3M), DBEF (dual brightness enhanced film, 3M), DBR (layered-polymer distributed Bragg reflectors, as described in US 7,038,745 and US 6,099,758) and APF (advanced polariser film, 3M).

Examples of absorptive polarisers, which can be employed in the light modulation elements according to the

invention, are the Itos XP38 polariser film and the Nitto Denko GU-1220DUN polariser film. An example of a circular polariser, which can be used in accordance with the invention, is the APNCP37-035-STD polariser (American Polarizers). A further example is the CP42 polariser (ITOS).

The light modulation element may furthermore comprise filters, which block light of certain wavelengths, for example, UV filters. In accordance with the invention, further functional layers commonly known to the expert may also be present, such as, for example, protective films and/or compensation films.

Suitable cholesteric liquid crystalline media for the light modulation element according to the present invention are commonly known by the expert and typically comprise at least one bimesogenic compound and at least one chiral compound.

In view of the bimesogenic compounds for the ULH-mode, the Coles group published a paper (Coles et al., 2012 (Physical Review E 2012, 85, 012701)) on the structure-property relationship for dimeric liquid crystals.

Further bimesogenic compounds are known in general from prior art (cf. also Hori, K., Limuro, M., Nakao, A., Toriumi, H., J. Mol. Struc. 2004, 699, 23-29 or GB 2 356 629).

Symmetrical dimeric compounds showing liquid crystalline behaviour are further disclosed in Joo-Hoon Park et al. "Liquid Crystalline Properties of Dimers Having o-, m- and p- Positional Molecular structures", Bill. Korean Chem. Soc., 2012, Vol. 33, No. 5, pp. 1647-1652.

Similar liquid crystal compositions with short cholesteric pitch for flexoelectric devices are known from EP 0 971 016, GB 2 356 629 and Coles, H.J., Musgrave, B., Coles, M.J., and Willmott, J., J. Mater. Chem., 11, p. 2709-2716 (2001). EP 0 971 016 reports on mesogenic estradiols, which, as such, have a high flexoelectric coefficient.

Typically, for light modulation elements utilizing the ULH mode the optical retardation d*Δn (effective) of the cholesteric liquid-crystalline medium should preferably be such that the equation (8)

$$\sin 2(\pi \cdot d \cdot \Delta n/\lambda) = 1 \qquad (8)$$

wherein

d is the cell gap and

λ is the wavelength of light

is satisfied. The allowance of deviation for the right hand side of equation is +/- 3 %.

The dielectric anisotropy (Δε) of a suitable cholesteric liquid-crystalline medium should be chosen in that way that unwinding of the helix upon application of the addressing voltage is prevented. Typically, Δε of a suitable liquid crystalline medium is preferably higher than -2, and more preferably 0 or more, but preferably 10 or less, more preferably 5 or less and most preferably 3 or less.

The utilized cholesteric liquid-crystalline medium preferably have a clearing point of approximately 65°C or more, more preferably approximately 70°C or more, still more preferably 80°C or more, particularly preferably approximately 85°C or more and very particularly preferably approximately 90°C or more.

The nematic phase of the utilized cholesteric liquid-crystalline medium according to the invention preferably extends at least from approximately 0°C or less to approximately 65°C or more, more preferably at least from approximately -20°C or less to approximately 70°C or more, very preferably at least from approximately -30°C or less to approximately 70°C or more and in particular at least from approximately -40°C or less to approximately 90°C or more. In individual preferred embodiments, it may be necessary for the nematic phase of the media according to the invention to extend to a temperature of approximately 100°C or more and even to approximately 110°C or more.

Typically, the cholesteric liquid-crystalline medium utilized in a light modulation element in accordance with the present invention comprises one or more bimesogenic compounds which are preferably selected from the group of compounds of formulae A-I to A-III,

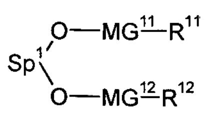

A-I

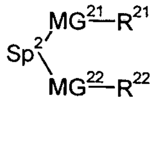

A-II

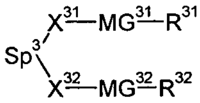

A-III

and wherein

$R^{11}$ and $R^{12}$, $R^{21}$ and $R^{22}$, and $R^{31}$ and $R^{32}$ are each independently H, F, Cl, CN, NCS or a straight-chain or branched alkyl group with 1 to 25 C atoms which may be unsubstituted, mono- or polysubstituted by halogen or CN, it being also possible for one or more non-adjacent $CH_2$ groups to be replaced, in each occurrence independently from one another, by -O-, -S-, -NH-, $-N(CH_3)-$, -CO-, -COO-, -OCO-, -O-CO-O-, -S-CO-, -CO-S-, -CH=CH-,-CH=CF-, -CF=CF- or -C≡C- in such a manner that oxygen atoms are not linked directly to one another,

$MG^{11}$ and $MG^{12}$, $MG^{21}$ and $MG^{22}$, and $MG^{31}$ and $MG^{32}$ are each independently a mesogenic group,

$Sp^1$, $Sp^2$ and $Sp^3$ are each independently a spacer group comprising 5 to 40 C atoms, wherein one or more non-adjacent $CH_2$ groups, with the exception of the $CH_2$ groups of $Sp^1$ linked to O-$MG^{11}$ and/or O-$MG^{12}$, of $Sp^2$ linked to $MG^{21}$ and/or $MG^{22}$ and of $Sp^3$ linked to $X^{31}$ and $X^{32}$, may also be replaced by -O-, -S-, -NH-, $-N(CH_3)-$, -CO-, -O-CO-, -S-CO-, -O-COO-, -CO-S-, -CO-O-, -CH(halogen)-, -CH(CN)-, -CH=CH- or -C≡C-, however in such a way that no two O-atoms are adjacent to one another, no two -CH=CH- groups are adjacent to each other, and no two groups selected from -O-CO-, -S-CO-, -O-COO-, -CO-S-, -CO-O- and -CH=CH- are adjacent to each other and

$X^{31}$ and $X^{32}$ are independently from one another a linking group selected from -CO-O-, -O-CO-, -CH=CH-, -C≡C- or-S-, and, alternatively, one of them may also be either -O- or a single bond, and, again alternatively, one of them may be -O- and the other one a single bond.

Preferably used are compounds of formulae A-I to A-III wherein

$Sp^1$, $Sp^2$ and $Sp^3$ are each independently $-(CH_2)_n-$ with

n an integer from 1 to 15, most preferably an uneven integer, wherein one or more $-CH_2-$ groups may be replaced by -CO-.

Especially preferably used are compounds of formula A-III wherein

$-X^{31}-Sp^3-X^{32}-$ is $-Sp^3-O-$, $-Sp^3-CO-O-$, $-Sp^3-O-CO-$, $-O-Sp^3-$, $-O-Sp^3-CO-O-$, $-O-Sp^3-O-CO-$, $-O-CO-Sp^3-O-$, $-O-CO-Sp^3-O-CO-$, $-CO-O-Sp^3-O-$ or $-CO-O-Sp^3-CO-O-$, however under the condition that in $-X^{31}-Sp^3-X^{32}-$ no two O-atoms are adjacent to one another, no two -CH=CH- groups are adjacent to each other and no two groups selected from -O-CO-, -S-CO-, -O-COO-, -CO-S-, -CO-O- and -CH=CH- are adjacent to each other.

Preferably used are compounds of formula A-I in which

$MG^{11}$ and $MG^{12}$ are independently from one another $-A^{11}-(Z^1-A^{12})_m-$

wherein

$Z^1$ is -COO-, -OCO-, -O-CO-O-, $-OCH_2-$, $-CH_2O-$, $-CH_2CH_2-$, $-(CH_2)_4-$, $-CF_2CF_2-$, -CH=CH-,-CF=CF-, -CH=CH-COO-, -OCO-CH=CH-, -C≡C- or a single bond,

$A^{11}$ and $A^{12}$ are each independently in each occurrence 1,4-phenylene, wherein in addition one or more CH groups may be replaced by N, trans-1,4-cyclo-hexylene in which, in addition, one or two non-adjacent $CH_2$ groups may be replaced by O and/or S, 1,4-cyclohexenylene, 1,4-bicyclo-(2,2,2)-octylene, piperidine-1,4-diyl, naphthalene-2,6-diyl, decahydro-naphthalene-2,6-diyl, 1,2,3,4-tetrahydro-naphthalene-2,6-diyl, cyclobutane-1,3-diyl, spiro[3.3]heptane-2,6-diyl or dispiro[3.1.3.1] decane-2,8-diyl, it being possible for all these groups to be unsubstituted, mono-, di-, tri- or tetrasubstituted with F, Cl, CN or alkyl, alkoxy, alkylcarbonyl or alkoxycarbonyl groups with 1 to 7 C atoms, wherein one or more H atoms may be substituted by F or Cl, and

m is 0, 1, 2 or 3.

Preferably used are compounds of formula A-II in which

$MG^{21}$ and $MG^{22}$ are independently from one another $-A^{21}-(Z^2-A^{22})_m-$

wherein

$Z^2$ is -COO-, -OCO-, -O-CO-O-, $-OCH_2-$, $-CH_2O-$, $-CH_2CH_2-$, $-(CH_2)_4-$, $-CF_2CF_2-$, -CH=CH-,-CF=CF-, -CH=CH-COO-, -OCO-CH=CH-, -C≡C- or a single bond,

$A^{21}$ and $A^{22}$ are each independently in each occurrence 1,4-phenylene, wherein in addition one or more CH groups may be replaced by N, trans-1,4-cyclo-hexylene in which, in addition, one or two non-adjacent $CH_2$ groups may be replaced by O and/or S, 1,4-cyclohexenylene, 1,4-bicyclo-(2,2,2)-octylene, piperidine-1,4-diyl, naphthalene-2,6-diyl, decahydro-naphthalene-2,6-diyl, 1,2,3,4-tetrahydro-naphthalene-2,6-diyl, cyclobutane-1,3-diyl, spiro[3.3]heptane-2,6-diyl or dispiro[3.1.3.1] decane-2,8-diyl, it being possible for all these groups to be unsubstituted, mono-, di-, tri- or tetrasubstituted with F, Cl, CN or alkyl, alkoxy, alkylcarbonyl or alkoxycarbonyl groups with 1 to 7 C atoms, wherein one or more H atoms may be substituted by F or Cl, and

m is 0, 1, 2 or 3.

Most preferably used are compounds of formula A-III in which

$MG^{31}$ and $MG^{32}$ are independently from one another $-A^{31}-(Z^3-A^{32})_m-$

wherein

$Z^3$ is -COO-, -OCO-, -O-CO-O-, $-OCH_2-$, $-CH_2O-$, $-CH_2CH_2-$, $-(CH_2)_4-$, $-CF_2CF_2-$, -CH=CH-,-CF=CF-, -CH=CH-COO-, -OCO-CH=CH-, -C≡C- or a single bond,

$A^{31}$ and $A^{32}$ are each independently in each occurrence 1,4-phenylene, wherein in addition one or more CH groups may be replaced by N, trans-1,4-cyclo-hexylene in which, in addition, one or two non-adjacent $CH_2$ groups may be replaced by O and/or S, 1,4-cyclohexenylene, 1,4-bicyclo-(2,2,2)-octylene, piperidine-1,4-diyl, naphthalene-2,6-diyl, decahydro-naphthalene-2,6-diyl, 1,2,3,4-tetrahydro-naphthalene-2,6-diyl, cyclobutane-1,3-diyl, spiro[3.3]heptane-2,6-diyl or dispiro[3.1.3.1] decane-2,8-diyl, it being possible for all these groups to be unsubstituted, mono-, di-, tri- or tetrasubstituted with F, Cl, CN or alkyl, alkoxy, alkylcarbonyl or alkoxycarbonyl groups with 1 to 7 C atoms, wherein one or more H atoms may be substituted by F or Cl, and

m is 0, 1, 2 or 3.

Preferably, the compounds of formula A-III are asymmetric compounds, preferably having different mesogenic groups $MG^{31}$ and $MG^{32}$.

Generally preferred are compounds of formulae A-I to A-III in which the dipoles of the ester groups present in the mesogenic groups are all oriented in the same direction, i.e. all -CO-O- or all -O-CO-.

Especially preferred are compounds of formulae A-I and/or A-II and/or A-III wherein the respective pairs of mesogenic groups ($MG^{11}$ and $MG^{12}$) and ($MG^{21}$ and $MG^{22}$) and ($MG^{31}$ and $MG^{32}$) at each occurrence independently from each other comprise one, two or three six-atomic rings, preferably two or three six-atomic rings.

A smaller group of preferred mesogenic groups is listed below. For reasons of simplicity, Phe in these groups is 1,4-phenylene, PheL is a 1,4-phenylene group which is substituted by 1 to 4 groups L, with L being preferably F, Cl, CN, OH, $NO_2$ or an optionally fluorinated alkyl, alkoxy or alkanoyl group with 1 to 7 C atoms, very preferably F, Cl, CN, OH, $NO_2$, CH3, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, in particular F, Cl, CN, $CH_3$, $C_2H_5$, $OCH_3$, $COCH_3$ and $OCF_3$ , most preferably F, Cl, $CH_3$, $OCH_3$ and $COCH_3$ and Cyc is 1,4-cyclohexylene. This list comprises the sub-formulae shown below as well as their mirror images

-Phe-Z-Phe- II-1

-Phe-Z-Cyc- II-2

-Cyc-Z-Cyc- II-3

-PheL-Z-Phe- II-4

-PheL-Z-Cyc- II-5

-PheL-Z-PheL- II-6

-Phe-Z-Phe-Z-Phe- II-7

-Phe-Z-Phe-Z-Cyc- II-8

-Phe-Z-Cyc-Z-Phe- II-9

-Cyc-Z-Phe-Z-Cyc- II-10

-Phe-Z-Cyc-Z-Cyc- II-11

-Cyc-Z-Cyc-Z-Cyc- II-12

-Phe-Z-Phe-Z-PheL- II-13

-Phe-Z-PheL-Z-Phe- II-14

-PheL-Z-Phe-Z-Phe- II-15

-PheL-Z-Phe-Z-PheL- II-16

-PheL-Z-PheL-Z-Phe- II-17

-PheL-Z-PheL-Z-PheL- II-18

-Phe-Z-PheL-Z-Cyc- II-19

-Phe-Z-Cyc-Z-PheL- II-20

-Cyc-Z-Phe-Z-PheL- II-21

-PheL-Z-Cyc-Z-PheL- II-22

-PheL-Z-PheL-Z-Cyc- II-23

-PheL-Z-Cyc-Z-Cyc- II-24

-Cyc-Z-PheL-Z-Cyc- II-25

Particularly preferred are the sub formulae II-1, II-4, II-6, II-7, II-13, II-14, II-15, II-16, II-17 and II-18.

In these preferred groups, Z in each case independently has one of the meanings of $Z^1$ as given above for $MG^{21}$ and $MG^{22}$. Preferably Z is -COO-, -OCO-, $-CH_2CH_2-$, -C≡C- or a single bond, especially preferred is a single bond.

Very preferably the mesogenic groups $MG^{11}$ and $MG^{12}$, $MG^{21}$ and $MG^{22}$ and $MG^{31}$ and $MG^{32}$are each and independently selected from the following formulae and their mirror images

Very preferably, at least one of the respective pairs of mesogenic groups $MG^{11}$ and $MG^{12}$, $MG^{21}$ and $MG^{22}$ and $MG^{31}$ and $MG^{32}$ is, and preferably, both of them are each and independently, selected from the following formulae IIa to IIn (the two reference Nos. "II i" and "II l" being deliberately omitted to avoid any confusion) and their mirror images

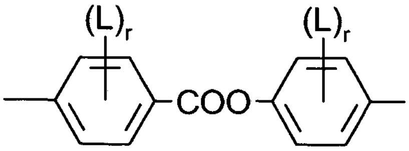

IIa

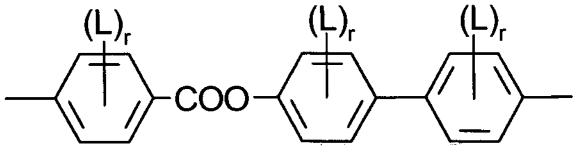

IIb

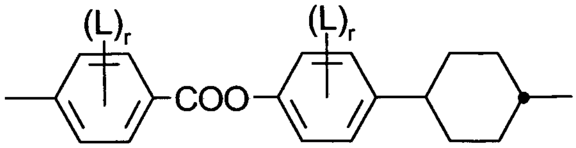

IIc

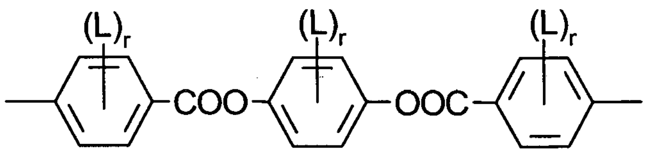

IId

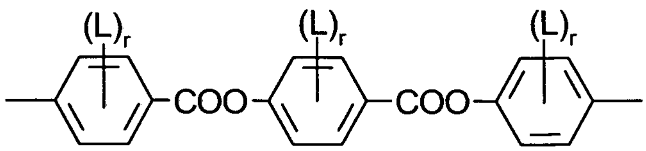

IIe

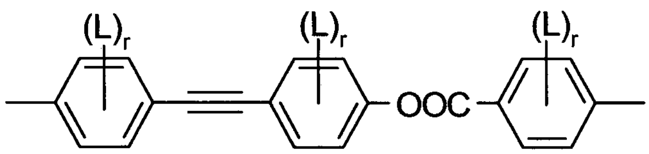

IIf

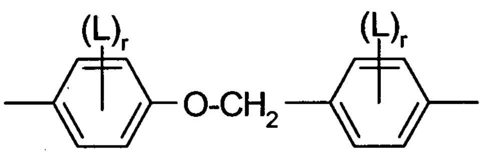

IIg

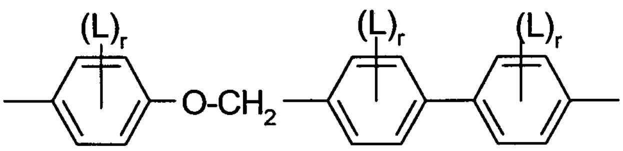

IIh

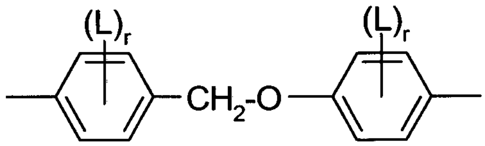

IIj

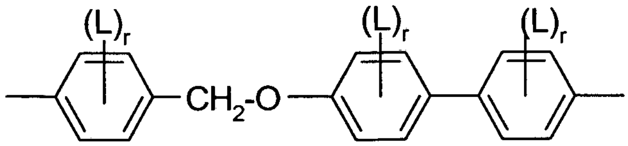

IIk

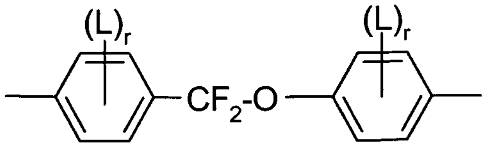

IIm

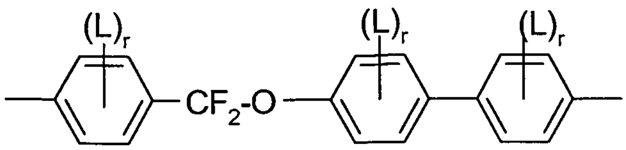

IIn

wherein

L is in each occurrence independently of each other F or Cl, preferably F and

r is in each occurrence independently of each other 0, 1, 2 or 3, preferably 0, 1 or 2.

The group

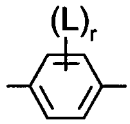

in these preferred formulae is very preferably denoting

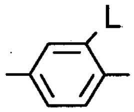 , 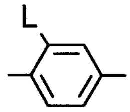 or 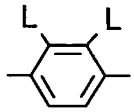 ,

furthermore

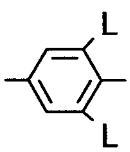 ,

Particularly preferred are the sub formulae IIa, IId, IIg, IIh, IIi, IIk and IIo, in particular the sub formulae IIa and IIg.

In case of compounds with a non-polar group, $R^{11}$, $R^{12}$, $R^{21}$, $R^{22}$, $R^{31}$, and $R^{32}$ are preferably alkyls with up to 15 C atoms or alkoxy with 2 to 15 C atoms.

If $R^{11}$ and $R^{12}$, $R^{21}$ and $R^{22}$ and $R^{31}$ and $R^{32}$ are an alkyl or alkoxy radical, i.e. where the terminal $CH_2$ group is replaced by -O-, this may be straight chain or branched. It is preferably straight-chain, has 2, 3, 4, 5, 6, 7 or 8 carbon

atoms and accordingly is preferably ethyl, propyl, butyl, pentyl, hexyl, heptyl, octyl, ethoxy, propoxy, butoxy, pentoxy, hexoxy, heptoxy, or octoxy, furthermore methyl, nonyl, decyl, undecyl, dodecyl, tridecyl, tetradecyl, pentadecyl, nonoxy, decoxy, undecoxy, dodecoxy, tridecoxy or tetradecoxy, for example.

Oxaalkyl, i.e. where one $CH_2$ group is replaced by -O-, is preferably straight-chain 2-oxapropyl (=methoxymethyl), 2- (=ethoxymethyl) or 3-oxabutyl (=2-methoxyethyl), 2-, 3-, or 4-oxapentyl, 2-, 3-, 4-, or 5-oxahexyl, 2-, 3-, 4-, 5-, or 6-oxaheptyl, 2-, 3-, 4-, 5-, 6- or 7-oxaoctyl, 2-, 3-, 4-, 5-, 6-, 7- or 8-oxanonyl or 2-, 3-, 4-, 5-, 6-,7-, 8- or 9-oxadecyl, for example.

In case of a compounds with a terminal polar group, $R^{11}$ and $R^{12}$, $R^{21}$ and $R^{22}$ and $R^{31}$ and $R^{32}$ are selected from CN, $NO_2$, halogen, $OCH_3$, OCN, SCN, $COR^x$, $COOR^x$ or a mono- oligo- or polyfluorinated alkyl or alkoxy group with 1 to 4 C atoms. $R^x$ is optionally fluorinated alkyl with 1 to 4, preferably 1 to 3 C atoms. Halogen is preferably F or Cl.

Especially preferably $R^{11}$ and $R^{12}$, $R^{21}$ and $R^{22}$ and $R^{31}$ and $R^{32}$ in formulae A-I, A-II, respectively A-III are selected of H, F, Cl, CN, $NO_2$,$OCH_3$, $COCH_3$, $COC_2H_5$, $COOCH_3$, $COOC_2H_5$, $CF_3$, $C_2F_5$, $OCF_3$, $OCHF_2$, and $OC_2F_5$, in particular of H, F, Cl, CN, $OCH_3$ and $OCF_3$, especially of H, F, CN and $OCF_3$.

In addition, compounds of formulae A-I, A-II, respectively A-III containing an achiral branched group $R^{11}$ and/or $R^{21}$ and/or $R^{31}$ may occasionally be of importance, for example, due to a reduction in the tendency towards crystallization. Branched groups of this type generally do not contain more than one chain branch. Preferred achiral branched groups are isopropyl, isobutyl (=methylpropyl), isopentyl (=3-methylbutyl), isopropoxy, 2-methyl-propoxy and 3-methylbutoxy.

The spacer groups $Sp^1$, $Sp^2$ and $Sp^3$ are preferably a linear or branched alkylene group having 5 to 40 C atoms, in particular 5 to 25 C atoms, very preferably 5 to 15 C atoms, in which, in addition, one or more non-adjacent and non-terminal $CH_2$ groups may be replaced by -O-, -S-, -NH-, $-N(CH_3)-$, -CO-, -O-CO-, -S-CO-, -O-COO-, -CO-S-, -CO-O-, -CH(halogen)-, -CH(CN)-, -CH=CH- or $-C\equiv C-$.

"Terminal" $CH_2$ groups are those directly bonded to the mesogenic groups. Accordingly, "non-terminal" $CH_2$ groups are not directly bonded to the mesogenic groups $R^{11}$ and $R^{12}$, $R^{21}$ and $R^{22}$ and $R^{31}$ and $R^{32}$.

Typical spacer groups are for example $-(CH_2)_o-$, $-(CH_2CH_2O)_p-CH_2CH_2-$, with o being an integer from 5 to 40, in particular from 5 to 25, very preferably from 5 to 15, and p being an integer from 1 to 8, in particular 1, 2, 3 or 4.

Preferred spacer groups are pentylene, hexylene, heptylene, octylene, nonylene, decylene, undecylene, dodecylene, octadecylene, diethyleneoxyethylene, dimethyleneoxybutylene, pentenylene, heptenylene, nonenylene and undecenylene, for example.

Especially preferred are compounds of formulae A-I, A-II and A-III wherein $Sp^1$, $Sp^2$, respectively $Sp^3$ are alkylene with 5 to 15 C atoms. Straight-chain alkylene groups are especially preferred.

Preferred are spacer groups with even numbers of a straight-chain alkylene having 6, 8, 10, 12 and 14 C atoms.

In another embodiment of the present invention are the spacer groups preferably with odd numbers of a straight-chain alkylene having 5, 7, 9, 11, 13 and 15 C atoms. Very preferred are straight-chain alkylene spacers having 5, 7, or 9 C atoms.

Especially preferred are compounds of formulae A-I, A-II and A-III wherein $Sp^1$, $Sp^2$, respectively $Sp^3$ are completely deuterated alkylene with 5 to 15 C atoms. Very preferred are deuterated straight-chain alkylene groups. Most preferred are partially deuterated straight-chain alkylene groups.

Preferred are compounds of formula A-I wherein the mesogenic groups $R^{11}$-$MG^{11}$- and $R^{12}$-$MG^1$- are different. Especially preferred are compounds of formula A-I wherein $R^{11}$-$MG^{11}$- and $R^{12}$-$MG^{12}$- in formula A-I are identical.

Preferred compounds of formula A-I are selected from the group of compounds of formulae A-I-1 to A-I-3

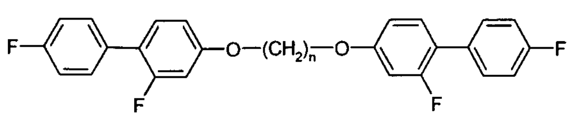

A-I-1

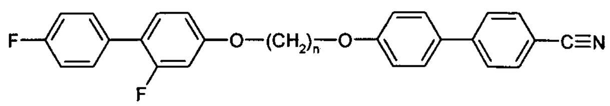

A-I-2

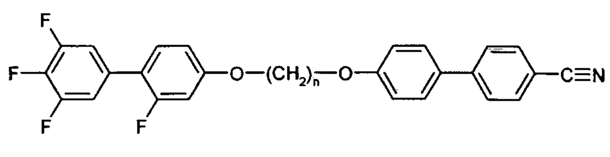

A-I-3

wherein the parameter n has the meaning given above and preferably is 3, 5, 7 or 9, more preferably 5, 7 or 9.

Preferred compounds of formula A-II are selected from the group of compounds of formulae A-II-1 to A-II-4

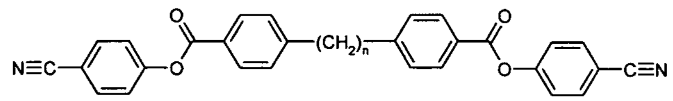
A-II-1

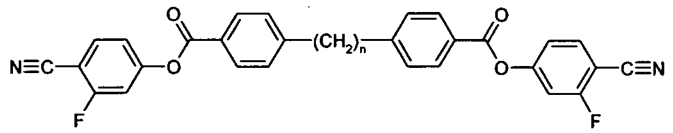
A-II-2

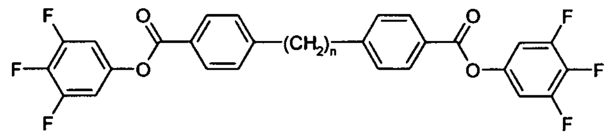
A-II-3

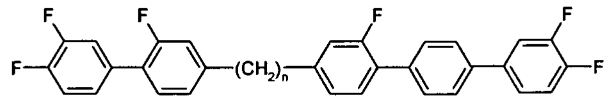
A-II-4

wherein the parameter n has the meaning given above and preferably is 3, 5, 7 or 9, more preferably 5, 7 or 9.

Preferred compounds of formula A-III are selected from the group of compounds of formulae A-III-1 to A-III-11

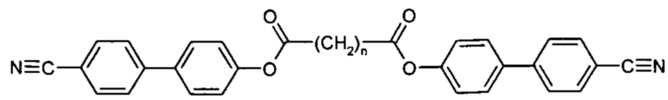
A-III-1

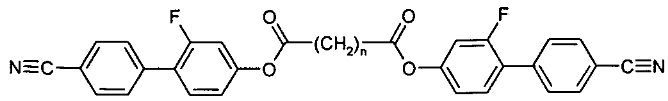
A-III-2

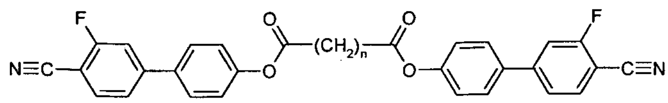
A-III-3

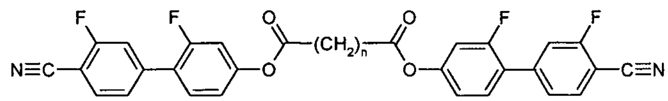
A-III-4

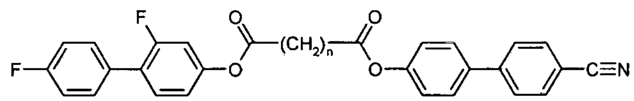
A-III-5

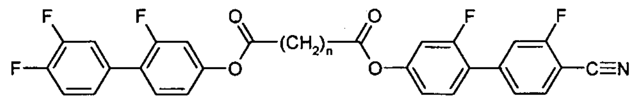
A-III-6

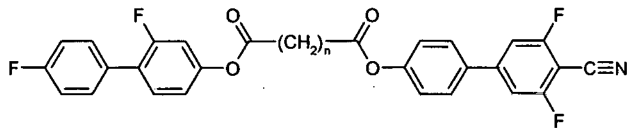

A-III-7

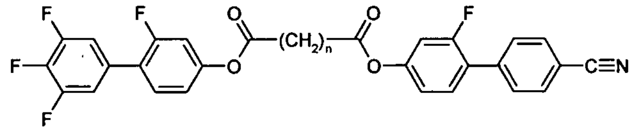

A-III-8

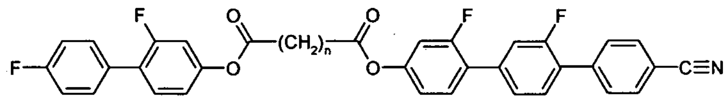

A-III-9

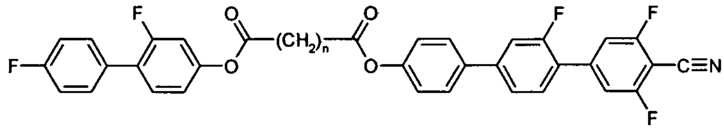

A-III-10

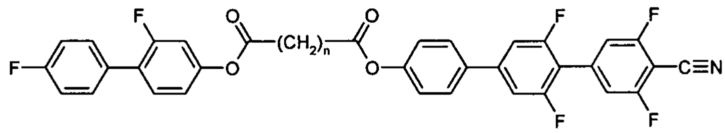

A-III-11

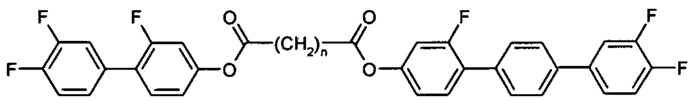

A-III-12

wherein the parameter n has the meaning given above and preferably is 3, 5, 7 or 9, more preferably 5, 7 or 9.

Particularly preferred exemplary compounds of formulae A-I are the following compounds:

symmetrical ones:

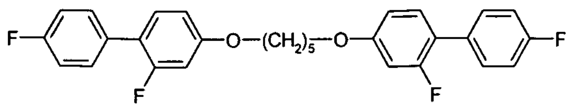

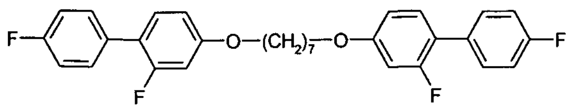

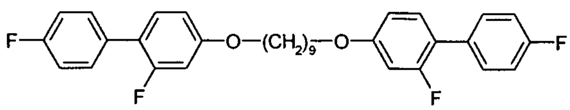

and non-symmetrical ones:

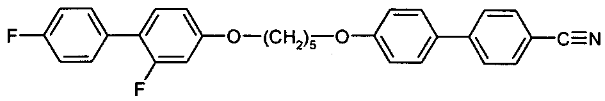

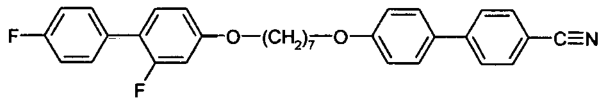

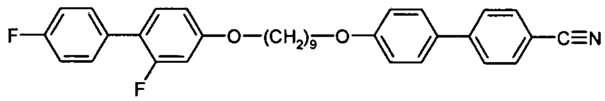

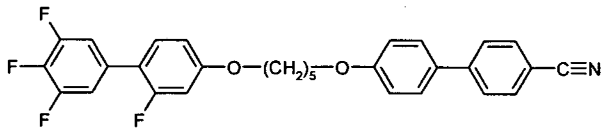

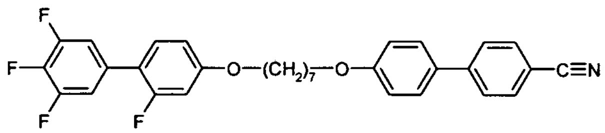

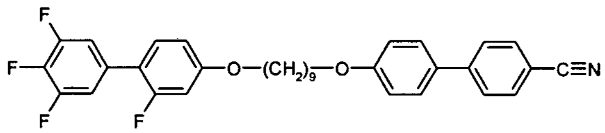

Particularly preferred exemplary compounds of formulae A-II are the following compounds:

symmetrical ones:

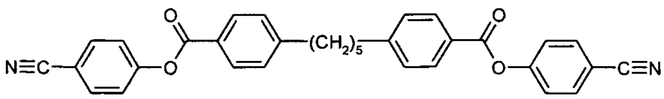

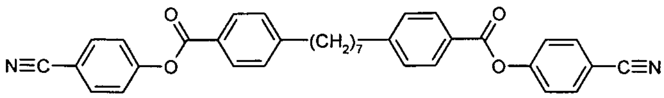

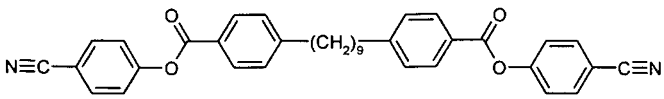

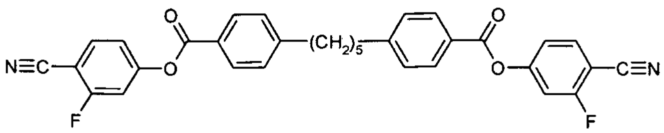

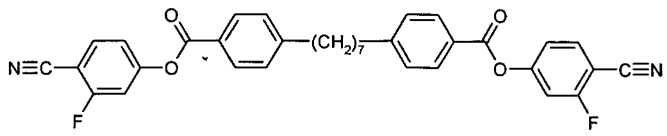

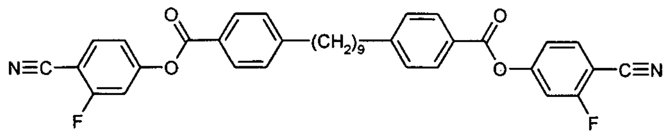

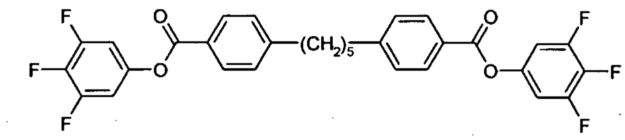

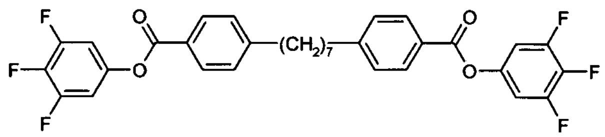

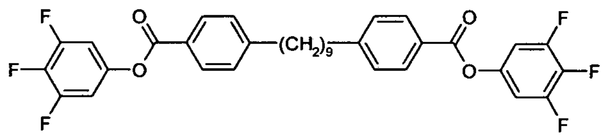

and non-symmetrical ones:

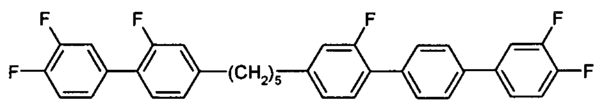

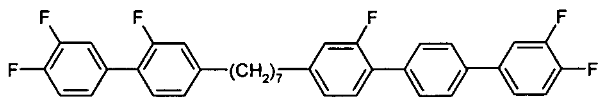

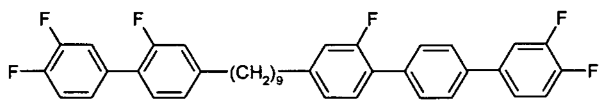

Particularly preferred exemplary compounds of formulae A-III are the following compounds:

symmetrical ones:

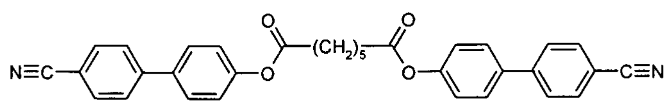

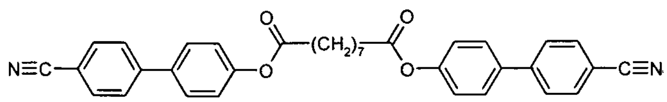

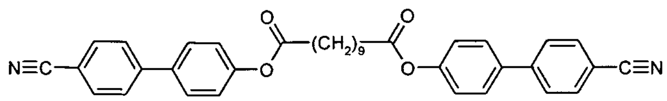

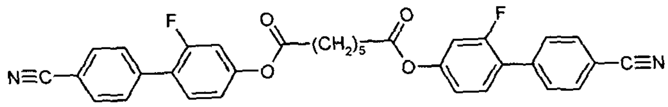

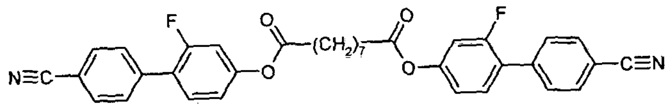

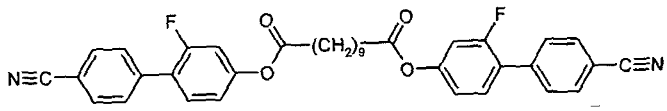

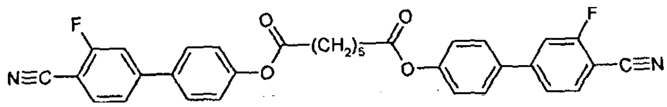

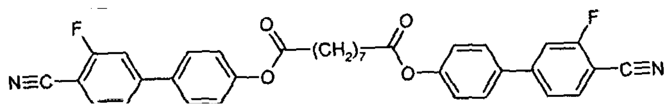

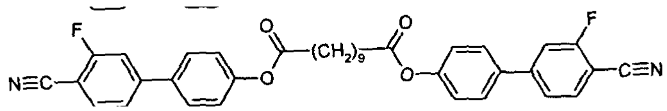

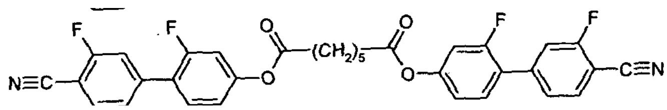

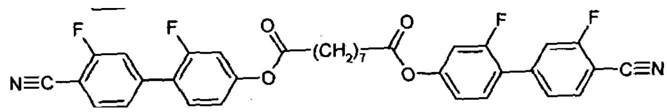

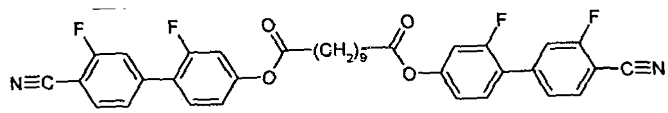

and non-symmetrical ones:

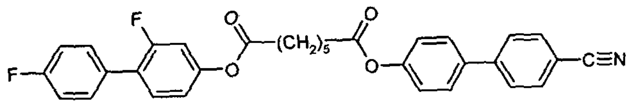

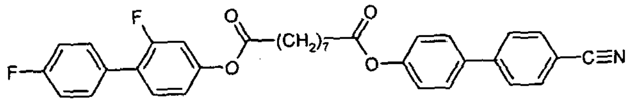

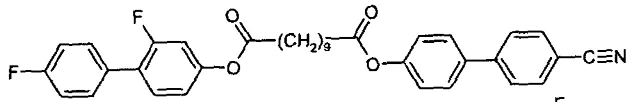

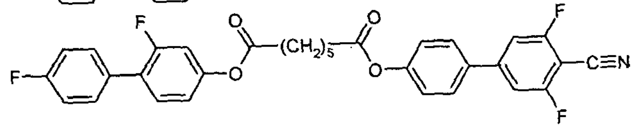

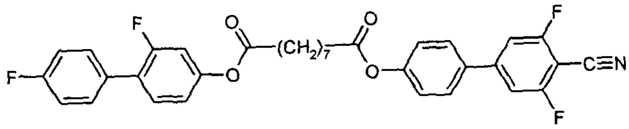

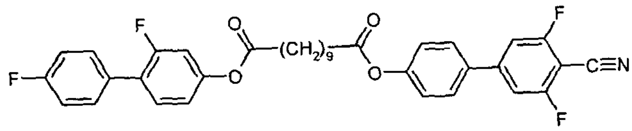

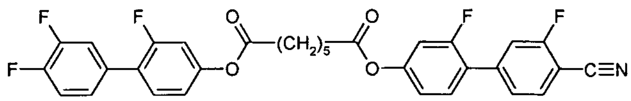

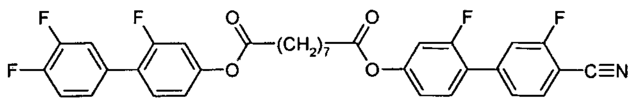

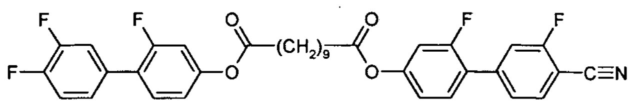

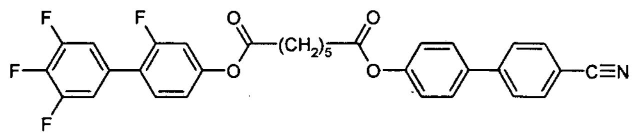

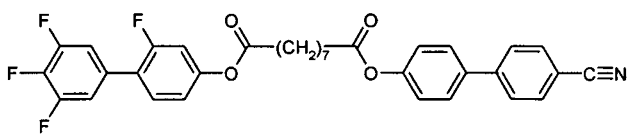

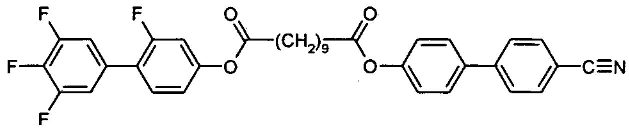

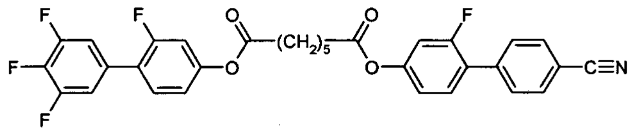

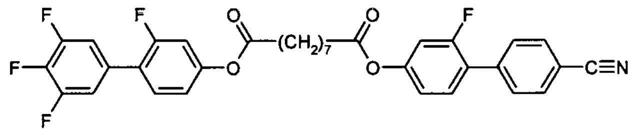

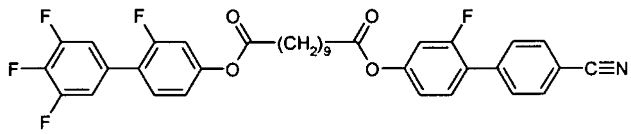

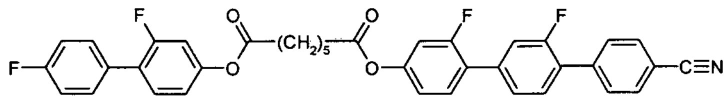

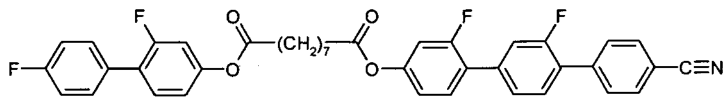

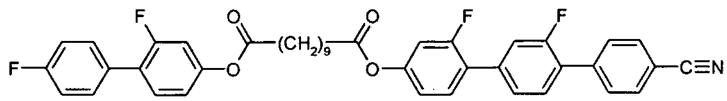

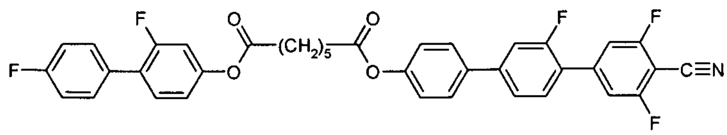

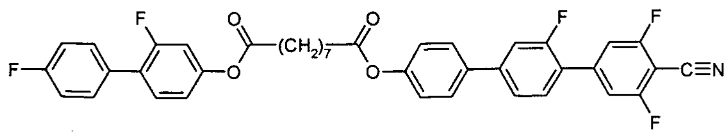

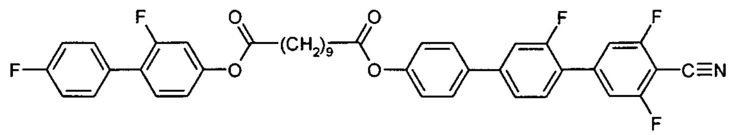

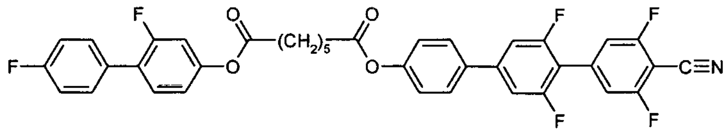

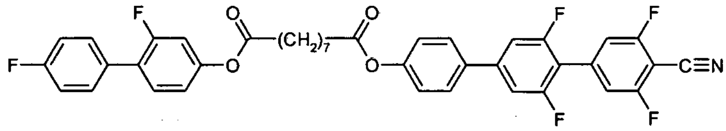

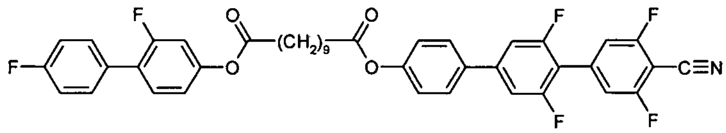

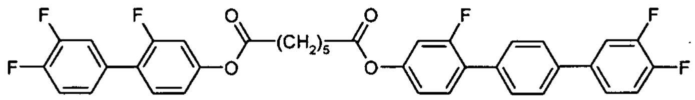

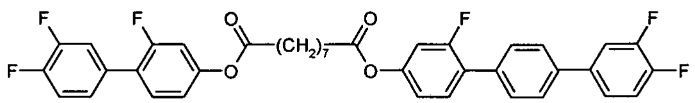

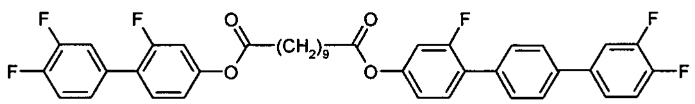

The bimesogenic compounds of formula A-I to A-III are particularly useful in flexoelectric liquid crystal displays as they can easily be aligned into macroscopically uniform orientation, and lead to high values of the elastic constant $k_{11}$ and a high flexoelectric coefficient e in the applied liquid crystalline media.

The compounds of formulae A-I to A-III can be synthesized according to or in analogy to methods which are known per se and which are described in standard works of organic chemistry such as, for example, Houben-Weyl, Methoden der organischen Chemie, Thieme-Verlag, Stuttgart.

In a preferred embodiment, the cholesteric liquid crystalline medium optionally comprise one or more nematogenic compounds, which are preferably selected from the group of compounds of formulae B-I to B-III

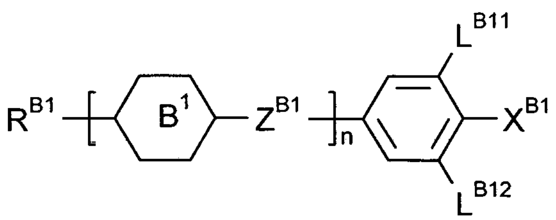

B-I

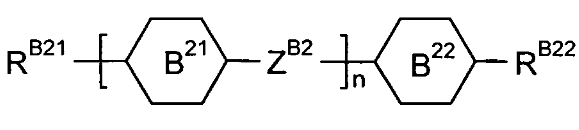

B-II

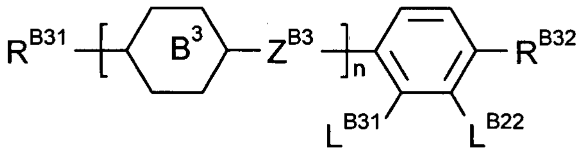

B-III

wherein

$L^{B11}$ to $L^{B31}$ are independently H or F, preferably one is H and the other H or F and most preferably both are H or both are F.

$R^{B1}$, $R^{B21}$ and $R^{B22}$ and $R^{B31}$ and $R^{B32}$ are each independently H, F, Cl, CN, NCS or a straight-chain or branched alkyl group with 1 to 25 C atoms which may be unsubstituted, mono- or polysubstituted by halogen or CN, it being also possible for one or more non-adjacent $CH_2$ groups to be replaced, in each occurrence independently from one another, by -O-, -S-, -NH-, -N($CH_3$)-, -CO-, -COO-, -OCO-, -O-CO-O-, -S-CO-, -CO-S-, -CH=CH-, -CH=CF-, -CF=CF- or -C≡C-in such a manner that oxygen atoms are not linked directly to one another,

$X^{B1}$ is F, Cl, CN, NCS, preferably CN,

$Z^{B1}$, $Z^{B2}$ and $Z^{B3}$ are in each occurrence independently -$CH_2$-$CH_2$-, -CO-O-, -O-CO-, -$CF_2$-O-, -O- $CF_2$-, -CH=CH-, -C≡C- or a single bond, preferably -$CH_2$-$CH_2$-, -CO-O-, -CH=CH-, -C≡C- or a single bond,

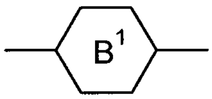

,

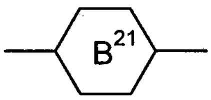

,

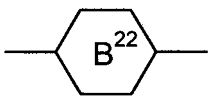

and

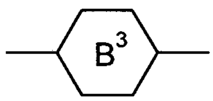

are in each occurrence independently

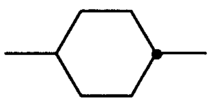

,

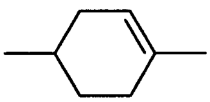

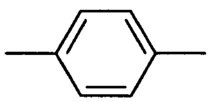

or

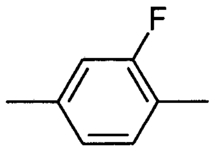,

preferably

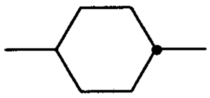, 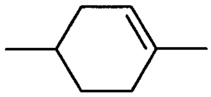 or 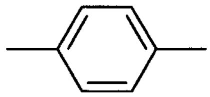,

alternatively one or more of

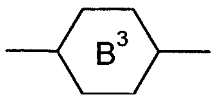

are

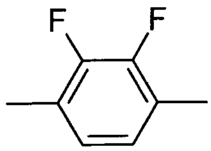

and

n is 1, 2 or 3, preferably 1 or 2.

Further preferred are cholesteric liquid-crystalline media comprising one or more nematogens of formula B-I selected from the from the group of formulae B-I-1 to B-I-, preferably of formula B-I-2 and/or B-I-4, most preferably B-I-4

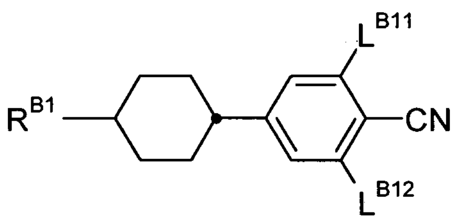

B-I-1

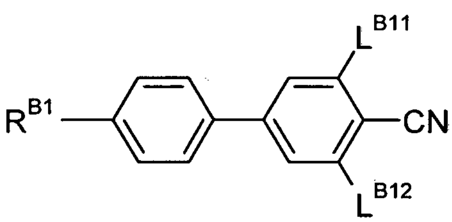

B-I-2

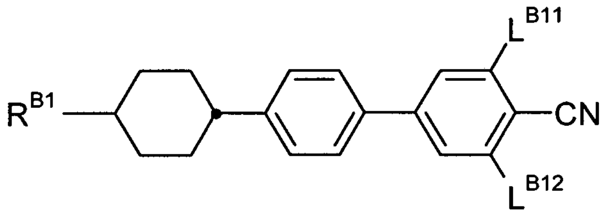

B-I-3

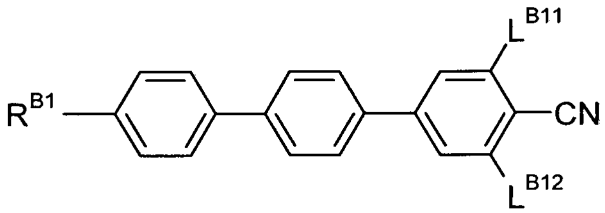

B-I-4

wherein the parameters have the meanings given above and preferably

| | |
|---|---|
| $R^{B1}$ | is alkyl, alkoxy, alkenyl or alkenyloxy with up to 12 C atoms, and |
| $L^{B11}$ and $L^{B12}$ | are independently H or F, preferably one is H and the other H or F and most preferably both are H. |

Further preferred are cholesteric liquid-crystalline media comprising one or more nematogens of formula B-II selected from the from the group of formulae B-II-1 and B-II-2, preferably of formula B-II-2 and/or B-II-4, most preferably of formula B-II-1

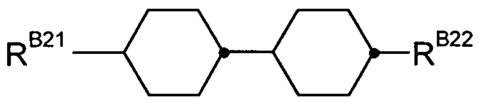

B-II-1

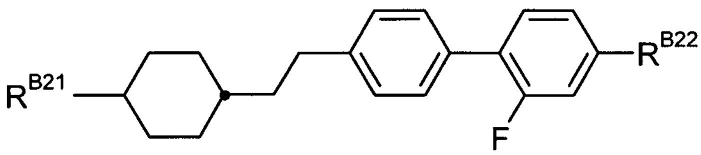

B-II-2

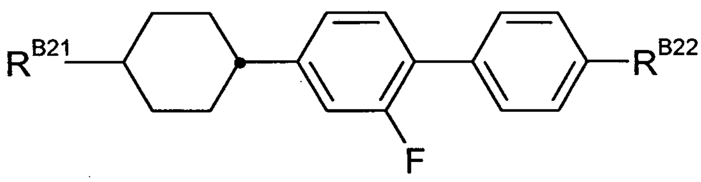

B-II-3

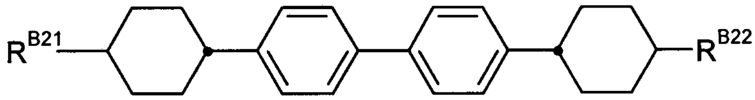

B-II-4

wherein the parameters have the meanings given above and preferably

| | |
|---|---|
| $R^{B21}$ and $R^{B22}$ | are independently alkyl, alkoxy, alkenyl or alkenyloxy with up to 12 C atoms, more preferably $R^{B21}$ is alkyl and $R^{B22}$ is alkyl, alkoxy or alkenyl and in formula B-II-1 most preferably alkenyl, in particular vinyl or 1-propenyl, and in formula B-II-2, most preferably alkyl. |

Further preferred are cholesteric liquid-crystalline media comprising one or more nematogens of formula B-III,

preferably selected from the group compounds of formulae B-III-1 to B-III-9

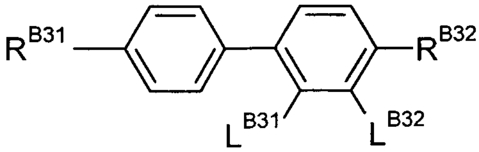

B-III-1

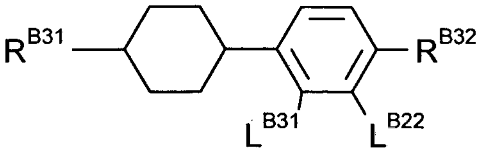

B-III-2

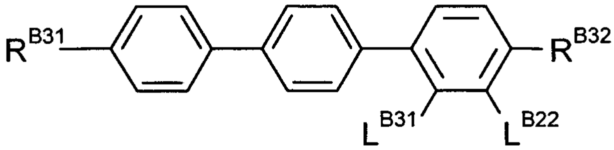

B-III-3

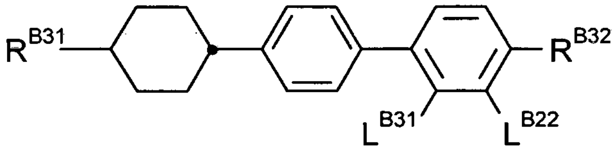

B-III-4

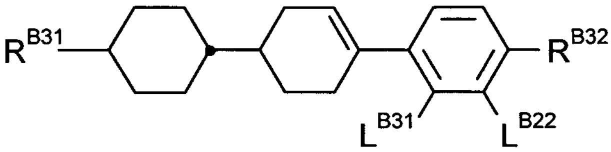

B-III-5

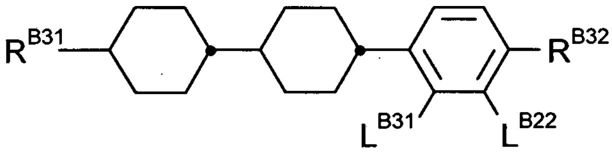

B-III-6

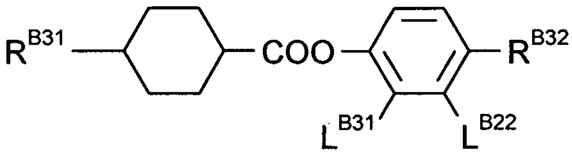

B-III-7

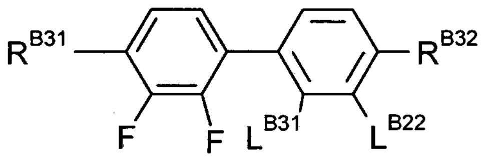

B-III-8

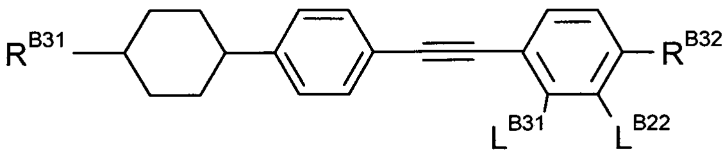

B-III-9

wherein the parameters have the meanings given above and preferably

| | |
|---|---|
| $R^{B31}$ and $R^{B32}$ | are independently alkyl, alkoxy, alkenyl or alkenyloxy with up to 12 C atoms, more preferably $R^{B31}$ is alkyl and $R^{B32}$ is alkyl or alkoxy and most preferably alkoxy, and |
| $L^{B22}$ and $L^{B31}$ $L^{B32}$ | are independently H or F, preferably one is F and the other H or F and most preferably both are F. |

The compounds of formulae B-I to B-III are either known to the expert and can be synthesized according to or in analogy to methods which are known per se and which are described in standard works of organic chemistry such as, for example, Houben-Weyl, Methoden der organischen Chemie, Thieme-Verlag, Stuttgart.

Suitable cholesteric liquid-crystalline media for the ULH mode comprise one or more chiral compounds with a suitable helical twisting power (HTP), in particular those disclosed in WO 98/00428.

Preferably, the chiral compounds are selected from the group of compounds of formulae C-I to C-III,

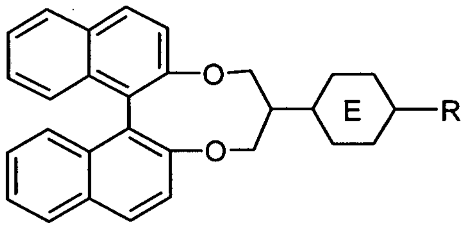

C-I

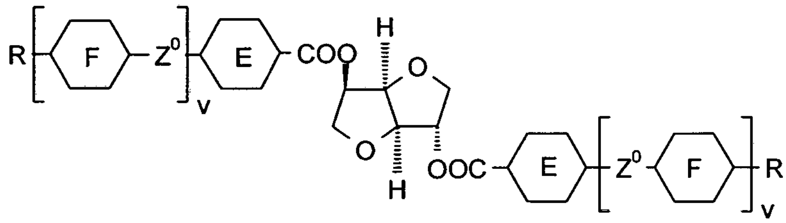

C-II

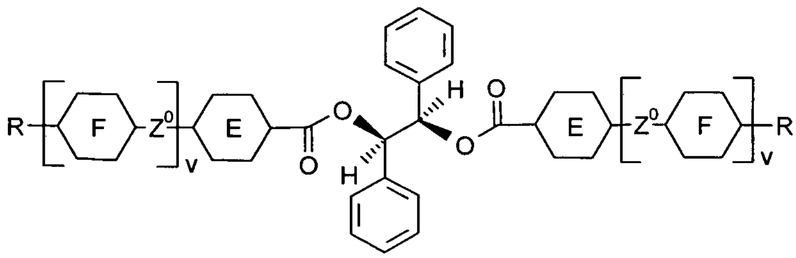

C-III

the latter ones including the respective (S,S) enantiomers,

wherein E and F are each independently 1,4-phenylene or trans- 1,4-cyclohexylene, v is 0 or 1, $Z^0$ is -COO-, -OCO-, $-CH_2CH_2-$ or a single bond, and R is alkyl, alkoxy or alkanoyl with 1 to 12 C atoms.

Particularly preferred cholesteric liquid-crystalline media comprise at least one or more chiral compounds which themselves do not necessarily have to show a liquid crystalline phase and give good uniform alignment themselves.

The compounds of formula C-II and their synthesis are described in WO 98/00428. Especially preferred is the compound CD-1, as shown in table D below. The compounds of formula C-III and their synthesis are described in GB 2 328 207.

Further, typically used chiral compounds are e.g. the commercially available R/S-5011, CD-1, R/S-811 and CB-15 (from Merck KGaA, Darmstadt, Germany).

The above mentioned chiral compounds R/S-5011 and CD-1 and the (other) compounds of formulae C-I, C-II and C-III exhibit a very high helical twisting power (HTP), and are therefore particularly useful for the purpose of the present invention.

The cholesteric liquid-crystalline medium preferably comprises preferably 1 to 5, in particular 1 to 3, very preferably 1 or 2 chiral compounds, preferably selected from the above formula C-II, in particular CD-1, and/or formula C-III and/or R-5011 or S-5011, very preferably, the chiral compound is R-5011, S-5011 or CD-1.

The amount of chiral compounds in the cholesteric liquid-crystalline medium is preferably from 1 to 20 %, more preferably from 1 to 15 %, even more preferably 1 to 10 %, and most preferably 1 to 5 %, by weight of the total mixture.

In a further preferred embodiment, a small amount (for example 0.3% by weight, typically < 1% by weight) of

a polymerisable compound is added to the above described cholesteric liquid-crystalline medium and, after introduction into the light modulation element, is polymerised or crosslinked in situ, usually by UV photopolymerisation. The addition of polymerisable mesogenic or liquid-crystalline compounds, also known as "reactive mesogens" (RMs), to the LC mixture has been proven particularly suitable in order further to stabilise the ULH texture (eg. Lagerwall et al., Liquid Crystals 1998, 24, 329 - 334.).

Suitable polymerisable liquid-crystalline compounds are preferably selected from the group of compounds of formula D,

$$P\text{-}Sp\text{-}MG\text{-}R^0 \qquad D$$

wherein

| | |
|---|---|
| P | is a polymerisable group, |
| Sp | is a spacer group or a single bond, |
| MG | is a rod-shaped mesogenic group, which is preferably selected of formula M, |
| M | is $-(A^{D21}-Z^{D21})_k-A^{D22}-(Z^{D22}-A^{D23})_l-$, |
| $A^{D21}$ to $A^{D23}$ | are in each occurrence independently of one another an aryl-, heteroaryl-, heterocyclic- or alicyclic group optionally being substituted by one or more identical or different groups L, preferably 1,4-cyclohexylene or 1,4-phenylene, 1,4 pyridine, 1,4-pyrimidine, 2,5-thiophene, 2,6-dithieno[3,2-b:2',3'-d] thiophene, 2,7- fluorine, 2,6-naphtalene, 2,7-phenanthrene optionally being substituted by one or more identical or different groups L, |
| $Z^{D21}$ and $Z^{D22}$ | are in each occurrence independently from each other, -O-, -S-, -CO-, -COO-, -OCO-, -S-CO-, -CO-S-, -O-COO-, $-CO-NR^{01}-$, $-NR^{01}-CO-$, $-NR^{01}-CO-NR^{02}$, $-NR^{01}-CO-O-$, $-O-CO-NR^{01}-$, $-OCH_2-$, $-CH_2O-$, $-SCH_2-$, $-CH_2S-$, $-CF_2O-$, -OCF2-, -CF2S-, -SCF2-, $-CH_2CH_2-$, $-(CH_2)_4-$, -CF2CH2-, $-CH_2CF_2-$, $-CF_2CF_2-$, -CH=N-, -N=CH-, -N=N-, $-CH=CR^{01}-$, $-CY^{01}=CY^{02}-$, -C≡C-, -CH=CH-COO-, -OCO-CH=CH-, or a single bond, preferably -COO-, -OCO-, -CO-O-, -O-CO-, -OCH2-, $-CH_2O-$, -, $-CH_2CH_2-$, $-(CH_2)_4-$, $-CF_2CH_2-$,$-CH_2CF_2-$, $-CF_2CF_2-$, -C≡C-, -CH=CH-COO-, -OCO-CH=CH-, or a single bond, |
| L | is in each occurrence independently of each other F or Cl,, |
| $R^0$ | is H, alkyl, alkoxy, thioalkyl, alkylcarbonyl, alkoxycarbonyl, alkylcarbonyloxy or alkoxycarbonyloxy with 1 to 20 C atoms more, preferably 1 to 15 C atoms which are optionally fluorinated, or is $Y^{D0}$ or P-Sp-, |
| $Y^0$ | is F, Cl, CN, $NO_2$, $OCH_3$, OCN, SCN, optionally fluorinated alkylcarbonyl, alkoxycarbonyl, alkylcarbonyloxy or alkoxycarbonyloxy with 1 to 4 C atoms, or mono- oligo- or polyfluorinated alkyl or alkoxy with 1 to 4 C atoms, preferably F, Cl, CN, $NO_2$, $OCH_3$, or mono- oligo- or polyfluorinated alkyl or alkoxy with 1 to 4 C atoms |
| $Y^{01}$ and $Y^{02}$ | each, independently of one another, denote H, F, Cl or CN, |
| $R^{01}$ and $R^{02}$ | have each and independently the meaning as defined above $R^0$, and |
| k and l | are each and independently 0, 1, 2, 3 or 4, preferably 0, 1 or 2, most preferably 1. |

Preferred polymerisable mono-, di-, or multireactive liquid crystalline compounds are disclosed for example in WO 93/22397, EP 0 261 712, DE 195 04 224, WO 95/22586, WO 97/00600, US 5,518,652, US 5,750,051, US 5,770,107 and US 6,514,578.

Preferred polymerisable groups are selected from the group consisting of $CH_2=CW^1-COO-$, $CH_2=CW^1-CO-$,

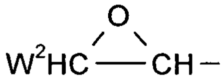, 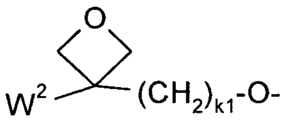,

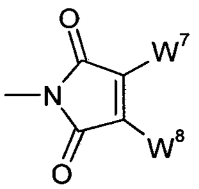, 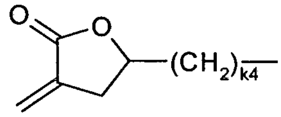,

$CH_2=CW^2-(O)_{k3}-$, $CW^1=CH-CO-(O)_{k3}-$, $CW^1=CH-CO-NH-$, $CH_2=GW^1-CO-NH-$, $CH_3-CH=CH-O-$, $(CH_2=CH)_2CH-OCO-$, $(CH_2=CH-CH_2)_2CH-OCO-$, $(CH_2=CH)_2CH-O-$, $(CH_2=CH-CH_2)_2N-$, $(CH_2=CH-CH_2)_2N-CO-$, $HO-CW^2W^3-$, $HS-CW^2W^3-$, $HW^2N-$, $HO-CW^2W^3-NH-$, $CH_2=CW^1-CO-NH-$, $GH_2=CH-(COO)_{k1}-Phe-(O)_{k2}-$, $CH_2=CH-(CO)_{k1}-Phe-(O)_{k2}-$, Phe-CH=CH-, HOOC-, OCN- and $W^4W^5W^6Si-$, in which $W^1$ denotes H, F, Cl, CN, $CF_3$, phenyl or alkyl having 1 to 5 C atoms, in particular H, F, Cl or $CH_3$, $W^2$ and $W^3$ each, independently of one another, denote H or alkyl having 1 to 5 C atoms, in particular H, methyl, ethyl or n-propyl, $W^4$, $W^5$ and $W^6$ each, independently of one another, denote Cl, oxaalkyl or oxacarbonylalkyl having 1 to 5 C atoms, $W^7$ and $W^8$ each, independently of one another, denote H, Cl or alkyl having 1 to 5 C atoms, Phe denotes 1,4-phenylene, which is optionally substituted by one or more radicals L as being defined above but being different from P-Sp, and $k_1$, $k_2$ and $k_3$ each, independently of one another, denote 0 or 1, $k_3$ preferably denotes 1, and $k_4$ is an integer from 1 to 10.

Particularly preferred groups P are $CH_2=CH-COO-$, $CH_2=C(CH_3)-COO-$, $CH_2=CF-COO-$, $CH_2=CH-$, $CH_2=CH-O-$, $(CH_2=CH)_2CH-OCO-$, $(CH_2=CH)_2CH-O-$,

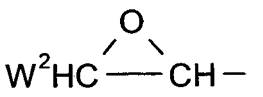 and 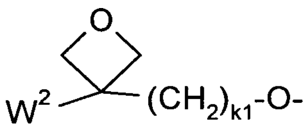,

in particular vinyloxy, acrylate, methacrylate, fluoroacrylate, chloroacrylate, oxetane and epoxide.

In a further preferred embodiment of the invention, the polymerisable compounds of the formulae I* and II* and sub-formulae thereof contain, instead of one or more radicals P-Sp-, one or more branched radicals containing two or more polymerisable groups P (multifunctional polymerisable radicals). Suitable radicals of this type, and polymerisable compounds containing them, are described, for example, in US 7,060,200 B1 or US 2006/0172090 A1. Particular preference is given to multifunctional polymerisable radicals selected from the following formulae:

$-X-alkyl-CHP^1-CH_2-CH_2P^2$ I*a

$-X-alkyl-C(CH_2P^1)(CH_2P^2)-CH_2P^3$ I*b

$-X-alkyl-CHP^1CHP^2-CH_2P^3$ I*c

$-X-alkyl-C(CH_2P^1)(CH_2P^2)-C_{aa}H_{2aa+1}$ I*d

$-X-alkyl-CHP^1-CH_2P^2$ I*e

$-X-alkyl-CHP^1P^2$ I*f

$-X-alkyl-CP^1P^2-C_{aa}H_{2aa+1}$ I*g

$-X-alkyl-C(CH_2P^1)(CH_2P^2)-CH_2OCH_2-C(CH_2P^3)(CH_2P^4)CH_2P^5$ I*h

$-X-alkyl-CH((CH_2)_{aa}P^1)((CH_2)_{bb}P^2)$ I*i

-X-alkyl-$CHP^1CHP^2-C_{aa}H_{2aa+1}$ I*k

in which

alkyl denotes a single bond or straight-chain or branched alkylene having 1 to 12 C atoms, in which one or more non-adjacent $CH_2$ groups may each be replaced, independently of one another, by $-C(R^x)=C(R^x)-$, -C≡C-, $-N(R^x)-$, -O-, -S-, -CO-, -CO-O-, -O-CO-, -O-CO-O- in such a way that O and/or S atoms are not linked directly to one another, and in which, in addition, one or more H atoms may be replaced by F, Cl or CN, where $R^x$ has the above-mentioned meaning and preferably denotes $R^0$ as defined above,

aa and bb each, independently of one another, denote 0, 1, 2, 3, 4, 5 or 6,

X has one of the meanings indicated for X', and
$P^{1-5}$ each, independently of one another, have one of the meanings indicated above for P.

Preferred spacer groups Sp are selected from the formula Sp'-X', so that the radical "P-Sp-" conforms to the formula "P-Sp'-X'-", where

Sp' denotes alkylene having 1 to 20, preferably 1 to 12 C atoms, which is optionally mono- or polysubstituted by F, Cl, Br, I or CN and in which, in addition, one or more non-adjacent $CH_2$ groups may each be replaced, independently of one another, by -O-, -S-, -NH-, $-NR^x-$, $-SiR^xR^{xx}-$, -CO-, -COO-, -OCO-, -OC O-O-, -S-CO-, -CO-S-, $-NR^x-CO-O-$, $-O-CO-NR^x-$, $-NR^x-CO-N R^x-$, -CH=CH- or -C≡C- in such a way that O and/or S atoms are not linked directly to one another,

X' denotes -O-, -S-, -CO-, -COO-, -OCO-, -O-COO-, $-CO-NR^x-$,$-NR^x-CO-$, $-NR^x-CO-NR^x-$, $-OCH_2-$, $-CH_2O-$, $-SCH_2-$, $-CH_2S-$,$-CF_2O-$, $-OCF_2-$, $-CF_2S-$, $-SCF_2-$, $-CF_2CH_2-$, $-CH_2CF_2-$, $-CF_2CF_2-$, -CH=N-, -N=CH-, -N=N-, $-CH=CR^x-$, $-CY^2=CY^3-$, -C≡C-, -C H=CH-COO-, -OCO-CH=CH- or a single bond,

$R^x$ and $R^{xx}$ each, independently of one another, denote H or alkyl having 1 to 12 C atoms, and

$Y^2$ and $Y^3$ each, independently of one another, denote H, F, Cl or CN.

X' is preferably -O-, -S-, -CO-, -COO-, -OCO-, -O-COO-, $-CO-NR^x-$, $-NR^x-CO-$, $-NR^x-CO-NR^x-$ or a single bond.

Typical spacer groups Sp' are, for example, $-(CH_2)_{p1}-$, $-(CH_2CH_2O)_{q1}-CH_2CH_2-$, $-CH_2CH_2-S-CH_2CH_2-$, $-CH_2CH_2-NH-CH_2CH_2-$ or $-(SiR^xR^{xx}-O)p_1-$, in which p1 is an integer from 1 to 12, q1 is an integer from 1 to 3, and $R^x$ and $R^{xx}$ have the above-mentioned meanings.

Particularly preferred groups -X'-Sp'- are $-(CH_2)_{p1}-$, $-O-(CH_2)_{p1}-$, $-OCO-(CH_2)_{p1}-$, $-OCOO-(CH_2)_{p1}-$.

Particularly preferred groups Sp' are, for example, in each case straight-chain ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene.

Further preferred polymerisable mono-, di-, or multireactive liquid crystalline compounds are shown in the following list:

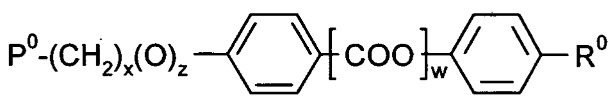
D-1

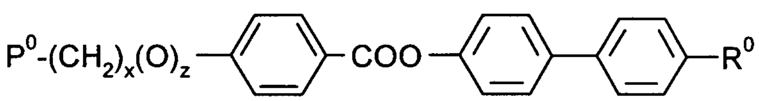
D-2

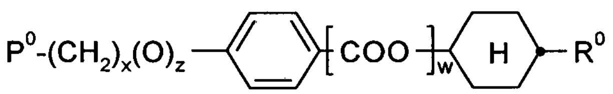
D-3

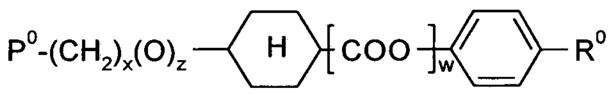

D-4

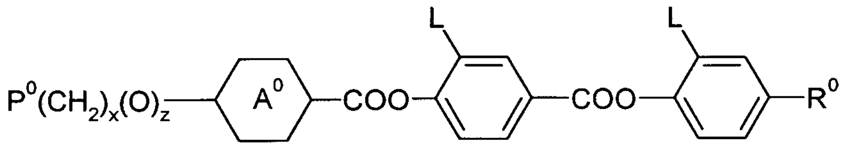

D-5

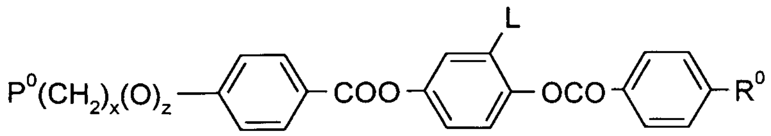

D-6

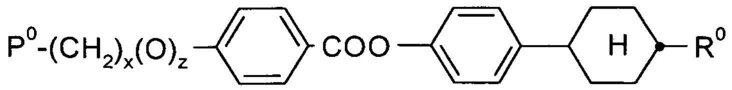

D-7

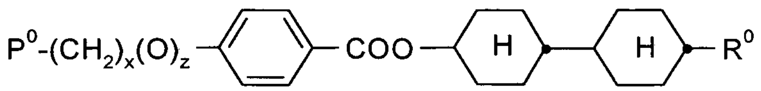

D-8

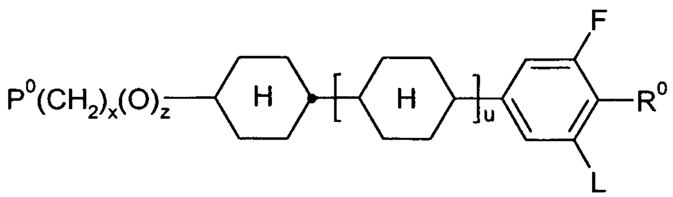

D-9

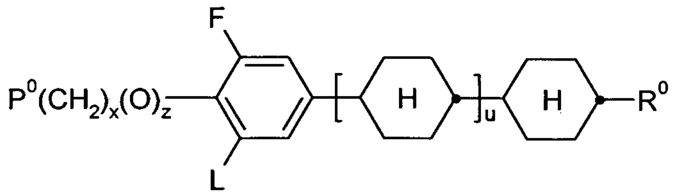

D-10

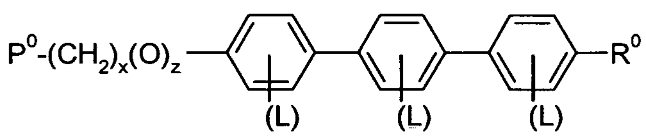

D-11

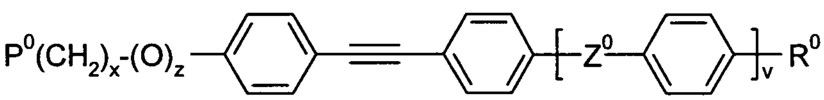

D-12

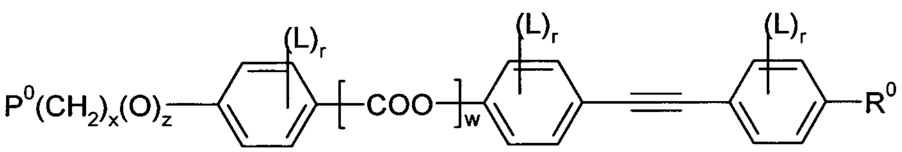

D-13

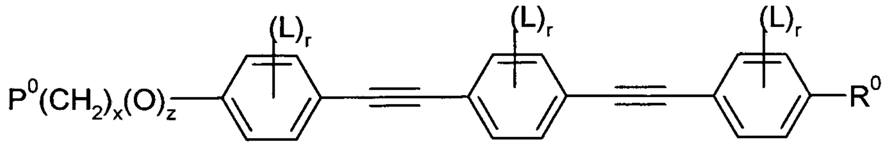

D-14

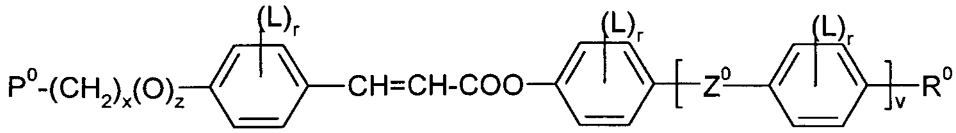

D-15

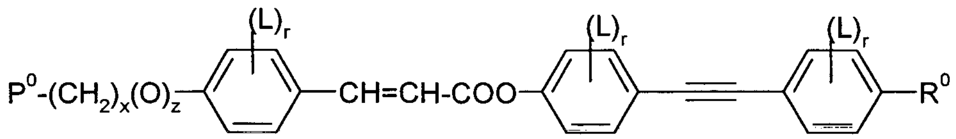

D-16

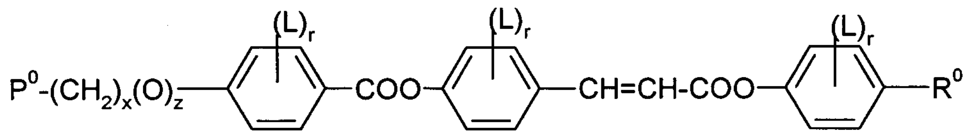

D-17

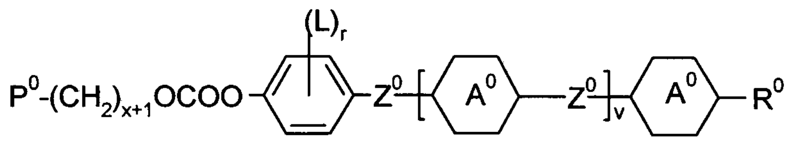

D-18

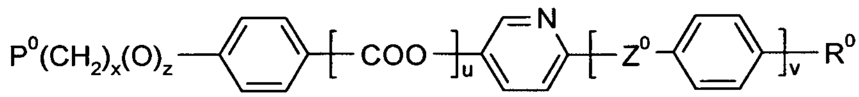

D-19

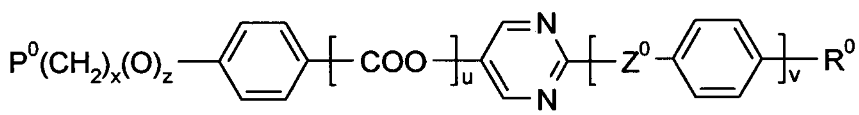

D-20

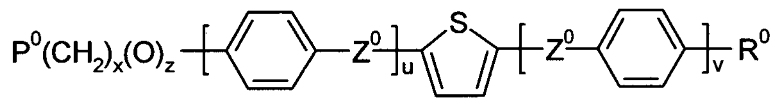

D-21

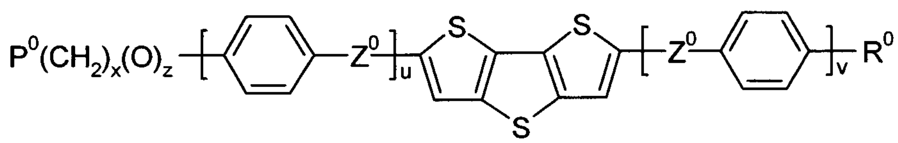

D-22

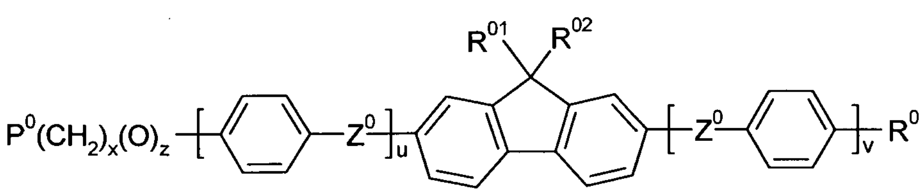

D-23

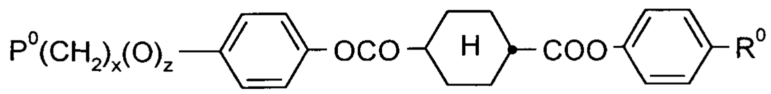
D-24

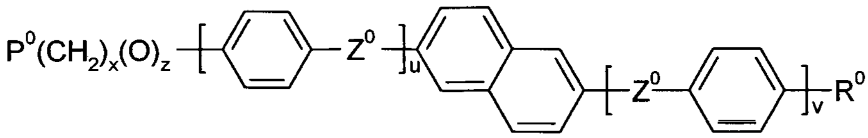
D-25

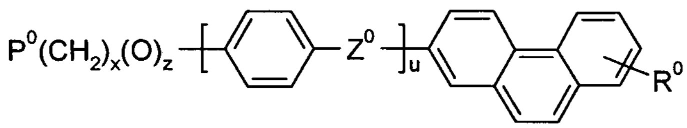
D-26

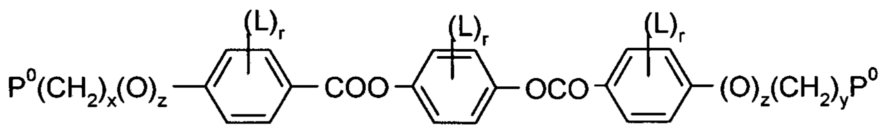
D-27

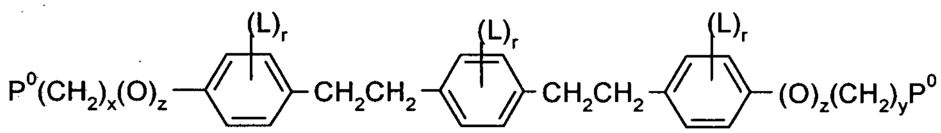
D-28

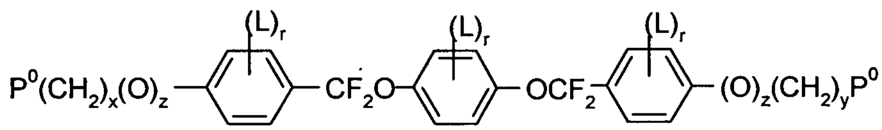
D-29

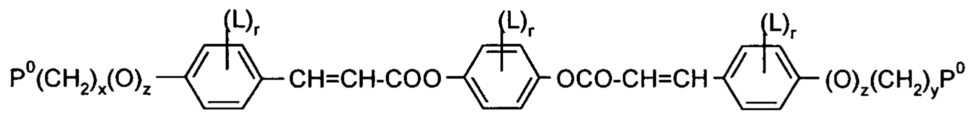
D-30

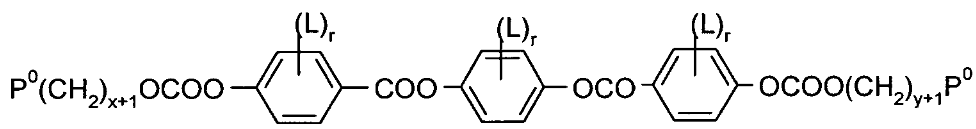
D-31

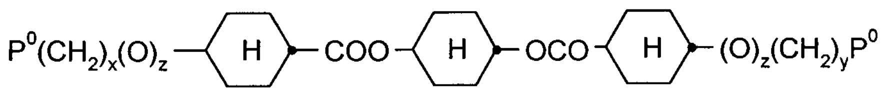
D-32

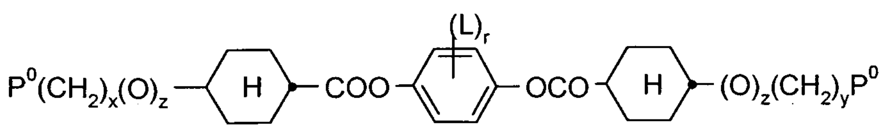
D-33

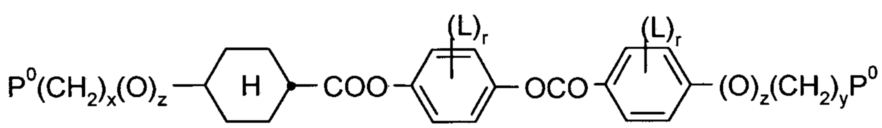
D-34

wherein

$P^0$ is, in case of multiple occurrences independently of one another, a polymerisable group, preferably an acryl, methacryl, oxetane, epoxy, vinyl, vinyloxy, propenyl ether or styrene group,

$A^0$ is, in case of multiple occurrence independently of one another, 1,4-phenylene that is optionally substituted with 1, 2, 3 or 4 groups L, or trans-1,4-cyclohexylene,

$Z^0$ is, in case of multiple occurrence independently of one another, -COO-, -OCO-, $-CH_2CH_2-$, -C≡C-, -CH=CH-, -CH=CH-COO-, -OCO-CH=CH- or a single bond,

r is 0, 1, 2, 3 or 4, preferably 0, 1 or 2,

t is, in case of multiple occurrence independently of one another, 0, 1, 2 or 3,

u and v are independently of each other 0, 1 or 2,

w is 0 or 1,

x and y are independently of each other 0 or identical or different integers from 1 to 12,

z is 0 or 1, with z being 0 if the adjacent x or y is 0,

in addition, wherein the benzene and naphthalene rings can additionally be substituted with one or more identical or different groups L and the parameter $R^0$ , $Y^0$, $R^{01}$, $R^{02}$ and L have the same meanings as given above in formula D.

Further preferred polymerisable mono-, di-, or multireactive liquid crystalline compounds are selected from Table E.

The polymerisable compounds are polymerised or cross-linked (if a compound contains two or more polymerisable groups) by in-situ polymerisation in the LC medium between the substrates of the LC display. Suitable and preferred polymerisation methods are, for example, thermal or photopolymerisation, preferably photopolymerisation, in particular UV photopolymerisation. If necessary, one or more initiators may also be added here. Suitable conditions for the polymerisation, and suitable types and amounts of initiators, are known to the person skilled in the art and are described in the literature. Suitable for free-radical polymerisation are, for example, the commercially available photoinitiators Irgacure651®, Irgacure184®, Irgacure907®, Irgacure369® or Darocure1173® (Ciba AG). If an initiator is employed, its proportion in the mixture as a whole is preferably 0.001 to 5% by weight, particularly preferably 0.001 to 1% by weight. However, the polymerisation can also take place without addition of an initiator. In a further preferred embodiment, the LC medium does not comprise a polymerisation initiator.

The polymerisable component or the cholesteric liquid-crystalline medium may also comprise one or more stabilisers in order to prevent undesired spontaneous polymerisation of the RMs, for example during storage or transport. Suitable types and amounts of stabilisers are known to the person skilled in the art and are described in the literature. Particularly suitable are, for example, the commercially available stabilisers of the Irganox® series (Ciba AG). If stabilisers are employed, their proportion, based on the total amount of RMs or polymerisable compounds, is preferably 10 - 5000 ppm, particularly preferably 50 - 500 ppm.

The above-mentioned polymerisable compounds are also suitable for polymerisation without initiator, which is associated with considerable advantages, such as, for example, lower material costs and in particular less contamination of the LC medium by possible residual amounts of the initiator or degradation products thereof.

The polymerisable compounds can be added individually to the cholesteric liquid-crystalline medium, but it is also possible to use mixtures comprising two or more polymerisable compounds. On polymerisation of mixtures of this type, copolymers are formed. The invention furthermore relates to the polymerisable mixtures mentioned above and below.

The cholesteric liquid-crystalline medium which can be used in accordance with the invention is prepared in a manner conventional per se, for example by mixing one or more of the above-mentioned compounds with one or more polymerisable compounds as defined above and optionally with further liquid-crystalline compounds and/or additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

It goes without saying to the person skilled in the art that the LC media may also comprise compounds in which, for example, H, N, O, Cl, F have been replaced by the corresponding isotopes.

The liquid crystal media may contain further additives like for example further stabilizers, inhibitors, chain-transfer agents, co-reacting monomers, surface-active compounds, lubricating agents, wetting agents, dispersing agents, hydrophobing agents, adhesive agents, flow improvers, defoaming agents, deaerators, diluents, reactive diluents, auxiliaries, colourants, dyes, pigments or nanoparticles in usual concentrations.

The total concentration of these further constituents is in the range of 0.1 % to 10 %, preferably 0.1 % to 6 %, based on the total mixture. The concentrations of the individual compounds used each are preferably in the range of 0.1 % to 3 %. The concentration of these and of similar additives is not taken into consideration for the values and ranges of the concentrations of the liquid crystal components and compounds of the liquid crystal media in this application. This also holds for the concentration of the dichroic dyes used in the mixtures, which are not counted when the concentrations of the compounds respectively the components of the host medium are specified. The concentration of the respective additives is always given relative to the final doped mixture.

In general, the total concentration of all compounds in the media according to this application is 100 %.

A typical method for the production of a light modulation element according to the invention comprises at least the following steps:

- cutting and cleaning of the substrates,
- providing the electrode structure on the substrates,
- coating of at least one alignment layer,
- coating of the photoresist on the alignment layer,
- photolithography of the photoresist layer,
- optionally rubbing over the patterned photoresist,
- assembling the cell using a UV curable adhesive,
- filling the cell with the cholesteric liquid-crystalline medium,
- obtaining the ULH texture, by applying an electric field to the LC medium whilst cooling slowly from the isotropic phase into the cholesteric phase, and
- optionally, curing the polymerisable compounds of the LC medium.

The functional principle of the device according to the invention will be explained in detail below. It is noted that no restriction of the scope of the claimed invention, which is not present in the claims, is to be derived from the comments on the assumed way of functioning.

It is possible to obtain the ULH texture, starting from the focal conic or Grandjean texture, by applying an electric field with a high frequency, of for example 10 V and 200 Hz, to the cholesteric liquid-crystalline medium whilst cooling slowly from its isotropic phase into its cholesteric phase. The field frequency may differ for different media.

Starting from the ULH texture, the cholesteric liquid-crystalline medium can be subjected to flexoelectric switching by application of an electric field. This causes rotation of the optic axis of the material in the plane of the cell substrates, which leads to a change in transmission when placing the material between crossed polarizers. The flexoelectric switching of inventive materials is further described in detail in the introduction above and in the examples.

The uniform lying helix texture in the "off state" of the light modulation element in accordance with the present invention provides significant improved optical extinction and therefore a favourable contrast. In addition the ULH texture is stable after removing the voltage and remains for several days/weeks.

The optics of the device are to some degree self-compensating (similar to a conventional pi-cell) and provide better viewing angle than a conventional light modulation element according to the VA mode.

The required applied electric field strength is mainly dependent on the electrode gap and the e/K of the host mixture. The applied electric field strengths are typically lower than approximately 10 $V/\mu m^{-1}$, preferably lower than approximately 8 $V/\mu m^{-1}$ and more preferably lower than approximately 5 $V/\mu m^{-1}$. Correspondingly, the applied driving voltage of the light modulation element according to the present invention is preferably lower than approximately 30 V, more preferably lower than approximately 20 V, and even more preferably lower than approximately 10 V.

The light modulation element according to the present invention can be operated with a conventional driving waveform as commonly known by the expert.

The light modulation element of the present invention can be used in various types of optical and electro-optical

devices.

Said optical and electro optical devices include, without limitation electro-optical displays, liquid crystal displays (LCDs), non-linear optic (NLO) devices, and optical information storage devices.

Unless the context clearly indicates otherwise, as used herein plural forms of the terms herein are to be construed as including the singular form and vice versa.

The parameter ranges indicated in this application all include the limit values including the maximum permissible errors as known by the expert. The different upper and lower limit values indicated for various ranges of properties in combination with one another give rise to additional preferred ranges.

Throughout this application, the following conditions and definitions apply, unless expressly stated otherwise. All concentrations are quoted in per cent by weight and relate to the respective mixture as a whole, all temperatures are quoted in degrees Celsius and all temperature differences are quoted in differential degrees. All physical properties are determined in accordance with "Merck Liquid Crystals, Physical Properties of Liquid Crystals", Status Nov. 1997, Merck KGaA, Germany, and are quoted for a temperature of 20°C, unless expressly stated otherwise. The optical anisotropy ($\Delta n$) is determined at a wavelength of 589.3 nm. The dielectric anisotropy ($\Delta\varepsilon$) is determined at a frequency of 1 kHz or if explicitly stated at a frequency 19 GHz. The threshold voltages, as well as all other electro-optical properties, are determined using test cells produced at Merck KGaA, Germany. The test cells for the determination of $\Delta\varepsilon$ have a cell thickness of approximately 20 $\mu$m. The electrode is a circular ITO electrode having an area of 1.13 $cm^2$ and a guard ring. The orientation layers are SE-1211 from Nissan Chemicals, Japan, for homeotropic orientation ($\varepsilon\|$) and polyimide AL-1054 from Japan Synthetic Rubber, Japan, for homogeneous orientation ($\varepsilon\perp$). The capacitances are determined using a Solatron 1260 frequency response analyser using a sine wave with a voltage of 0.3 $V_{rms}$. The light used in the electro-optical measurements is white light. A set-up using a commercially available DMS instrument from Autronic-Melchers, Germany, is used here.

Throughout the description and claims of this specification, the words "comprise" and "contain" and variations of the words, for example "comprising" and "comprises", mean "including but not limited to", and are not intended to (and do not) exclude other components. On the other hand, the word "comprise" also encompasses the term "consisting of" but is not limited to it.

It will be appreciated that many of the features described above, particularly of the preferred embodiments, are inventive in their own right and not just as part of an embodiment of the present invention. Independent protection may be sought for these features in addition to, or alternative to any invention presently claimed.

Throughout the present application it is to be understood that the angles of the bonds at a C atom being bound to three adjacent atoms, e.g. in a C=C or C=O double bond or e.g. in a benzene ring, are 120° and that the angles of the bonds at a C atom being bound to two adjacent atoms, e.g. in a C≡C or in a C≡N triple bond or in an allylic position C=C=C are 180°, unless these angles are otherwise restricted, e.g. like being part of small rings, like 3-, 5- or 5-atomic rings, notwithstanding that in some instances in some structural formulae these angles are not represented exactly.

It will be appreciated that variations to the foregoing embodiments of the invention can be made while still falling within the scope of the invention. Alternative features serving the same, equivalent or similar purpose may replace each feature disclosed in this specification, unless stated otherwise. Thus, unless stated otherwise, each feature disclosed is one example only of a generic series of equivalent or similar features.

All of the features disclosed in this specification may be combined in any combination, except combinations where at least some of such features and/or steps are mutually exclusive. In particular, the preferred features of the invention are applicable to all aspects of the invention and may be used in any combination. Likewise, features described in non-essential combinations may be used separately (not in combination).

Without further elaboration, it is believed that one skilled in the art can, using the preceding description, utilize the present invention to its fullest extent. The following examples are, therefore, to be construed as merely illustrative and not limitative of the remainder of the disclosure in any way whatsoever.

The following abbreviations are used to illustrate the liquid crystalline phase behavior of the compounds: K = crystalline; N = nematic; N2 = second nematic; S = smectic; Ch = cholesteric; I = isotropic; Tg = glass transition. The numbers between the symbols indicate the phase transition temperatures in °C.

In the present application and especially in the following examples, the structures of the liquid crystal compounds are represented by abbreviations, which are also called "acronyms". The transformation of the abbreviations into the corresponding structures is straightforward according to the following three tables A to C.

All groups $C_nH_{2n+1}$, $C_mH_{2m+1}$, and $C_lH2_{l+1}$ are preferably straight chain alkyl groups with n, m and l C-atoms, respectively, all groups $C_nH_{2n}$, $C_mH_{2m}$ and $C_lH_{2l}$ are preferably $(CH_2)_n$, $(CH_2)_m$ and $(CH_2)_l$, respectively and -CH=CH- preferably is *trans*- respectively *E* vinylene.

Table A lists the symbols used for the ring elements, table B those for the linking groups and table C those for the symbols for the left hand and the right hand end groups of the molecules.

**Table A: Ring Elements**

| | | | |
|---|---|---|---|
| **C** | 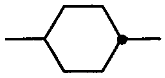 | **P** | 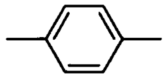 |
| **D** | 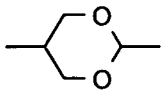 | **DI** | 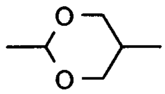 |
| **A** | 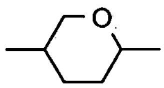 | **AI** | 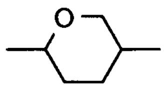 |
| **G** | 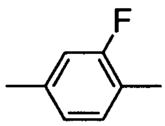 | **GI** | 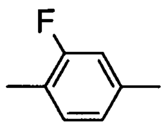 |
| **G(Cl)** | 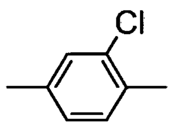 | **GI(Cl)** | 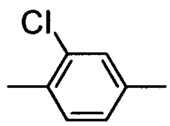 |
| **G(1)** | 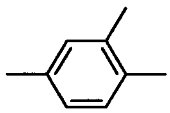 | **GI(1)** | 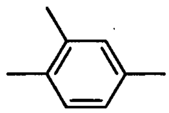 |
| **U** | 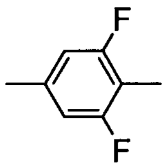 | **UI** | 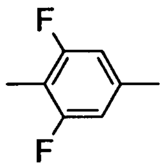 |
| **Y** | 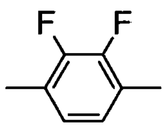 | | |
| **M** | 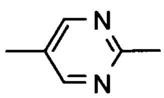 | **MI** | 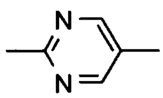 |
| **N** | 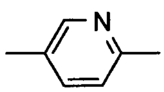 | **NI** | 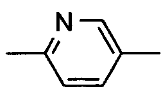 |
| **np** | 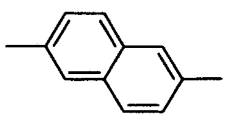 | | |
| **n3f** | 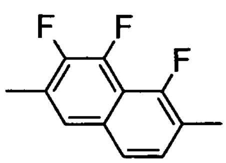 | **n3fI** | 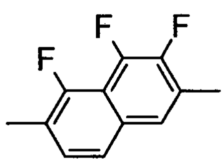 |
| **th** | 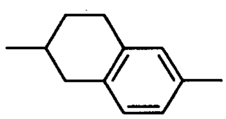 | **thI** | 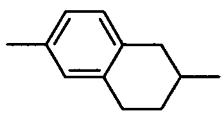 |

(continued)

| | | | |
|---|---|---|---|
| **th2f** | 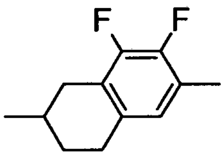 | **th2fI** | 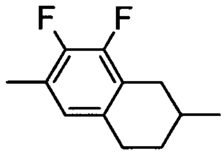 |
| **o2f** | 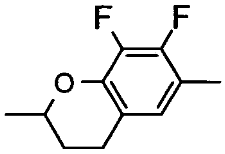 | **o2fI** | 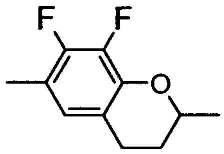 |
| **dh** | 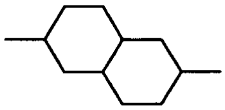 | | |
| **K** | 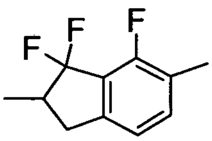 | **KI** | 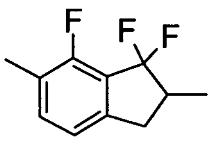 |
| **L** | 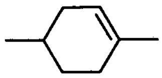 | **LI** | 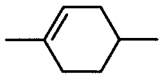 |
| **F** | 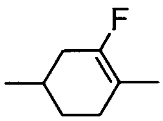 | **FI** | 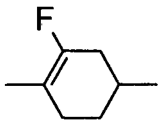 |

**Table B: Linking Groups**

| | | | |
|---|---|---|---|
| **n** | $(-CH_2-)_n$ | "n" is an integer except 0 and 2 | |
| **E** | $-CH_2-CH_2-$ | | |
| **V** | -CH=CH- | | |
| **T** | -C≡C- | | |
| **W** | $-CF_2-CF_2-$ | | |
| **B** | -CF=CF- | | |
| **Z** | -CO-O- | **ZI** | -O-CO- |
| **X** | -CF=CH- | **XI** | -CH=CF- |
| **O** | $-CH_2-O-$ | **OI** | $-O-CH_2-$ |
| **Q** | $-CF_2-O-$ | **QI** | $-O-CF_2-$ |

**Table C: End Groups**

| **Left hand side, used alone or in combination with others** | | **Right hand side, used alone or in combination with others** | |
|---|---|---|---|
| **-n-** | $C_nH_{2n+1}-$ | **-n** | $-C_nH_{2n+1}$ |
| **-nO-** | $C_nH2_{n+1}-O-$ | **-nO** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH- C_nH_{2n}-$ | **-Vn** | $-CH=CH-C_nH2_{n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | N≡C- | **-N** | -C≡N |

(continued)

| Left hand side, used alone or in combination with others | | Right hand side, used alone or in combination with others | |
|---|---|---|---|
| **-S-** | S=C=N- | **-S** | -N=C=S |
| **-F-** | F- | **-F** | -F |
| **-CL-** | Cl- | **-CL** | -Cl |
| **-M-** | $CFH_2$- | **-M** | $-CFH_2$ |
| **-D-** | $CF_2H$- | **-D** | $-CF_2H$ |
| **-T-** | $CF_3$- | **-T** | -CF3 |
| **-MO-** | $CFH_2O$- | **-OM** | $-OCFH_2$ |
| **-DO-** | $CF_2HO$- | **-OD** | $-OCF_2H$ |
| **-TO-** | $CF_3O$- | **-OT** | $-OCF_3$ |
| **-A-** | H-C≡C- | **-A** | -C≡C-H |
| **-nA-** | $C_nH_{2n+1}$-C≡C- | **-An** | -C≡C-$C_nH2_{n+1}$ |
| **-NA-** | N≡C-C≡C- | **-AN** | -C≡C-C≡N |
| **Left hand side, used in combination with others only** | | **Right hand side, used in combination with others only** | |
| **-...n...-** | $-C_nH_{2n}-$ | **-...n...** | $-C_nH_{2n}-$ |
| **-...M...-** | -CFH- | **-...M...** | -CFH- |
| **-...D...-** | $-CF_2-$ | **-...D...** | $-CF_2-$ |
| **-...V...-** | -CH=CH- | **-...V...** | -CH=CH- |
| **-...Z...-** | -CO-O- | **-...Z...** | -CO-O- |
| **...ZI...-** | -O-CO- | **...ZI...** | -O-CO- |
| **-...K...-** | -CO- | **-...K...** | -CO- |
| **-...W...-** | -CF=CF- | **-...W...** | -CF=CF- |

wherein n und m each are integers and three points "..." indicate a space for other symbols of this table.

**Table D**

Table D indicates possible stabilisers which can be added to the LC media (n here denotes an integer from 1 to 12, terminal methyl groups ar not shown).

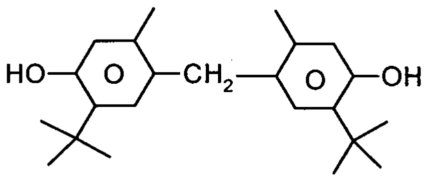

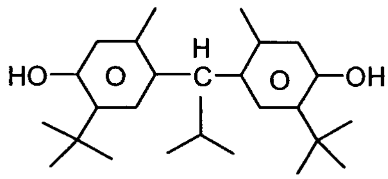

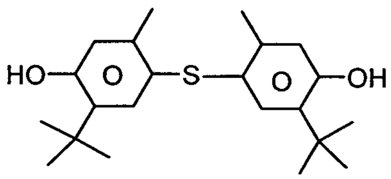

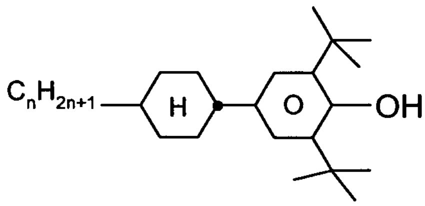

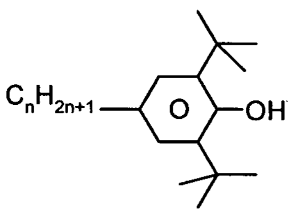

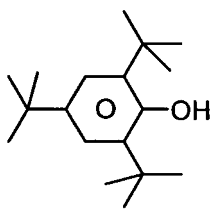

(continued)

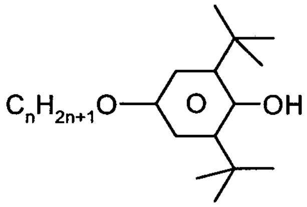
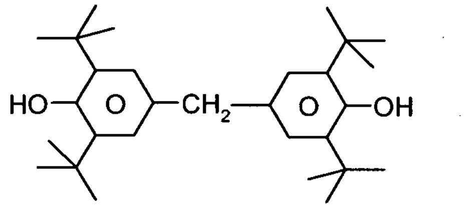
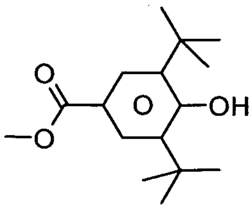
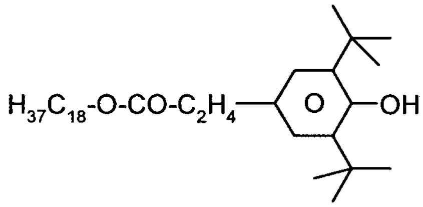
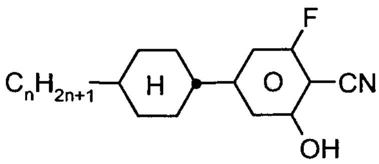
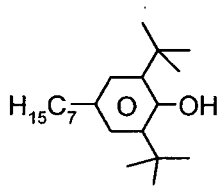
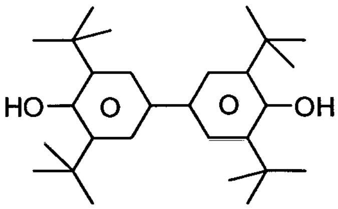
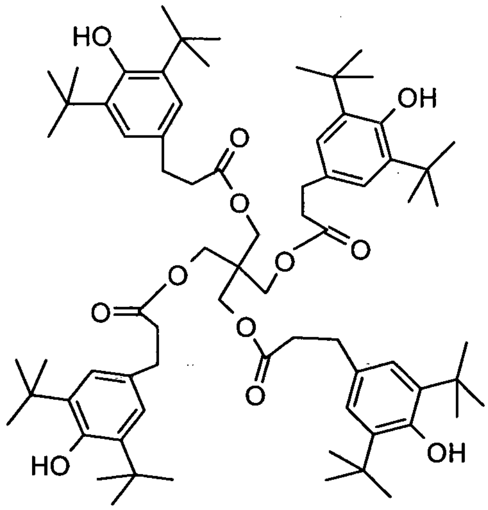
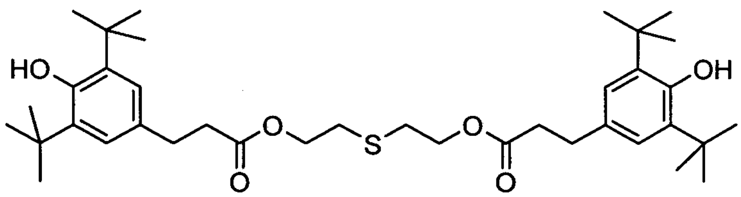
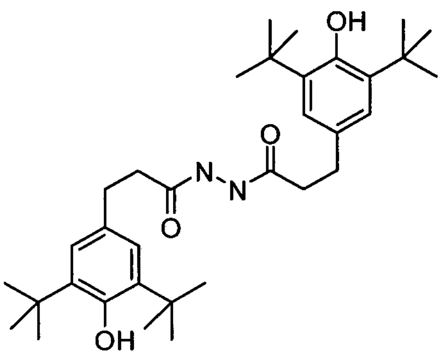
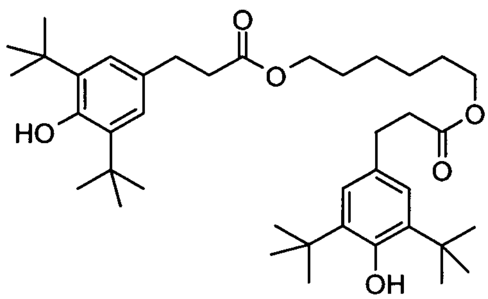

(continued)

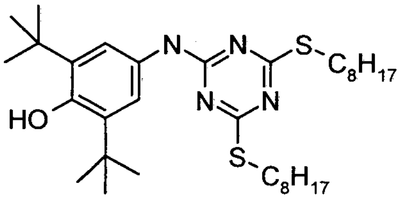

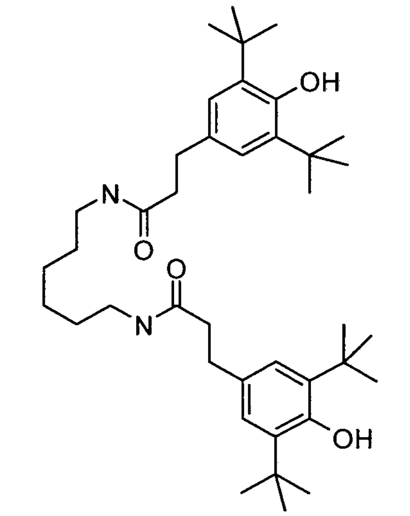

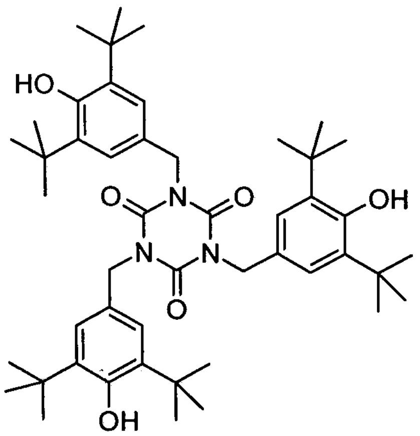

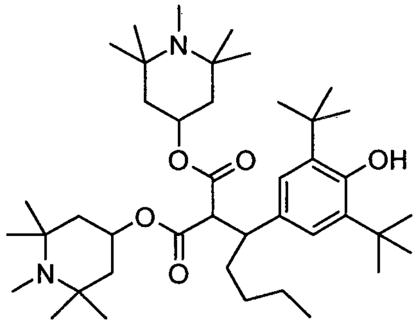

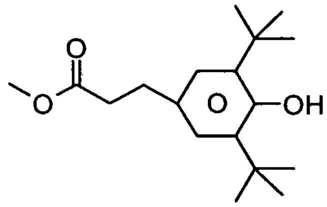

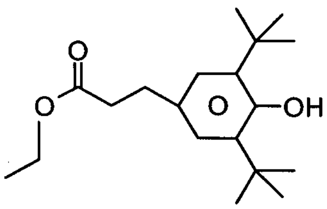

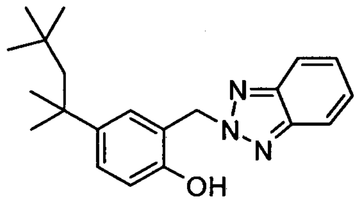

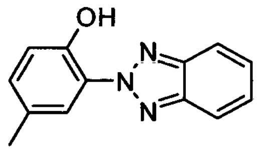

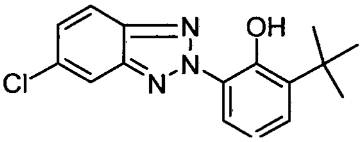

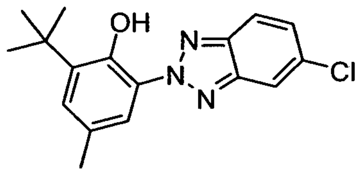

(continued)

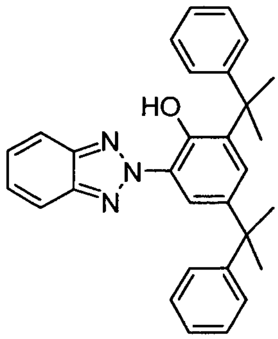

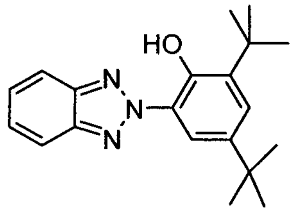

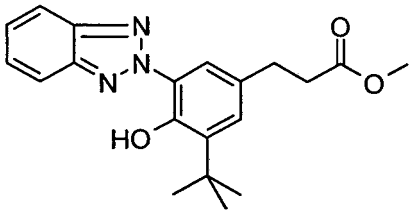

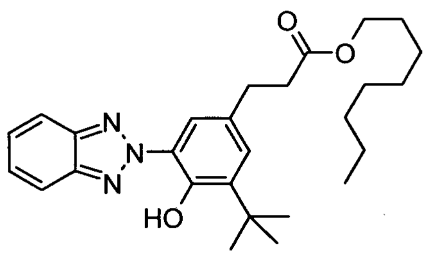

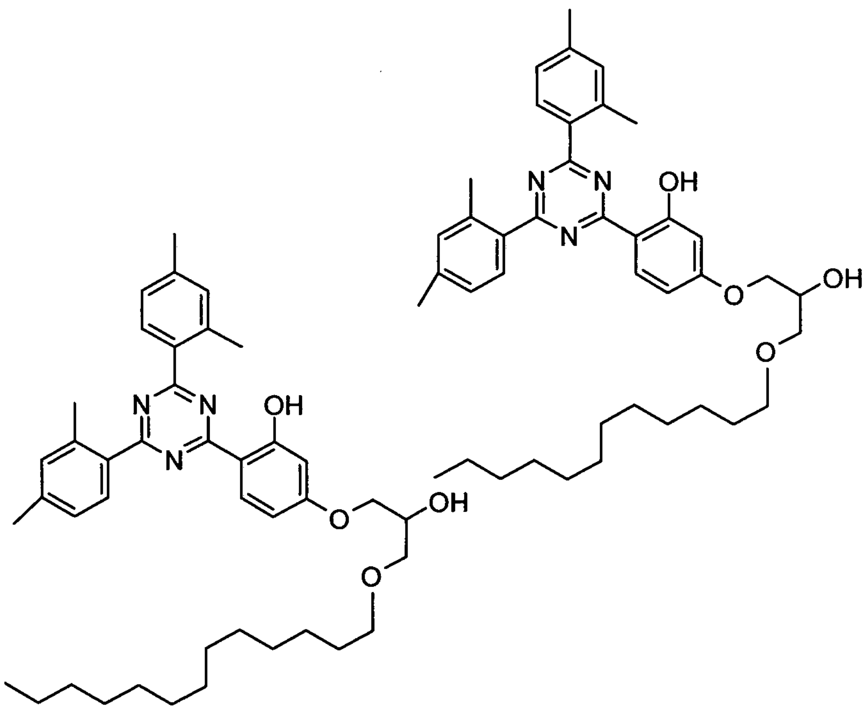

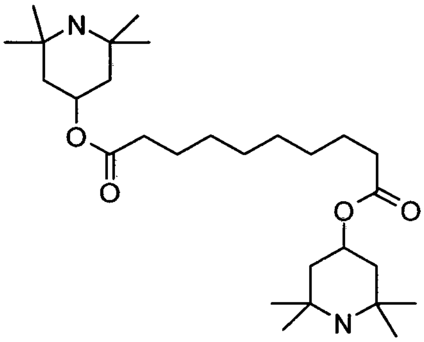

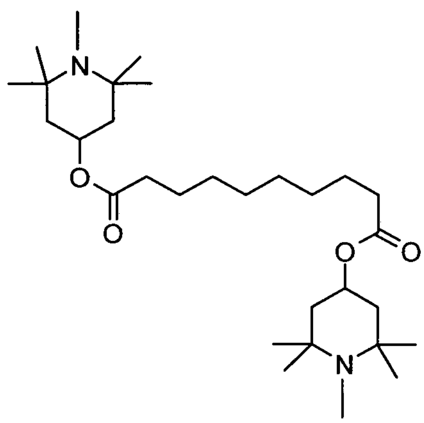

The LC media preferably comprise 0 to 10% by weight, in particular 1 ppm to 5% by weight and particularly preferably 1ppm to 3% by weight, of stabilisers. The LC media preferably comprise one or more stabilisers selected from the group consisting of compounds from Table D.

**Table E**

Table E indicates possible reactive mesogens which can be used in the polymerisable component of LC media.

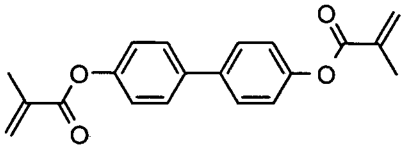
RM-1

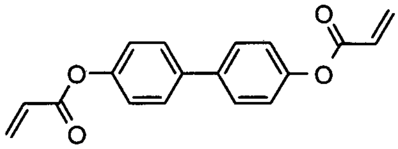
RM-2

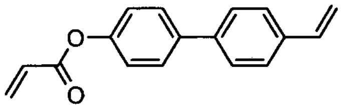
RM-3

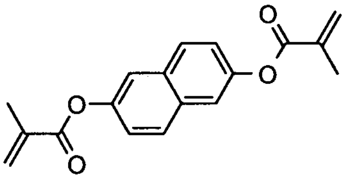
RM-4

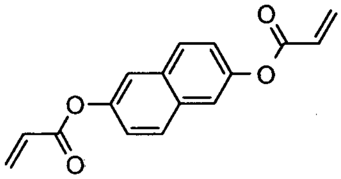
RM-5

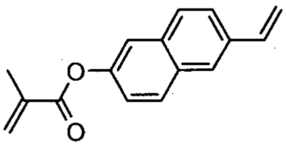
RM-6

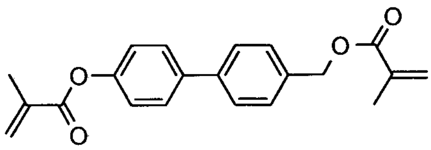
RM-7

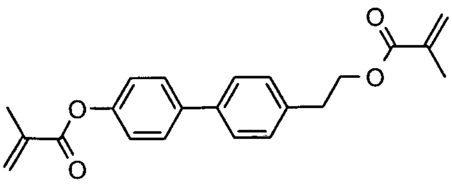
RM-8

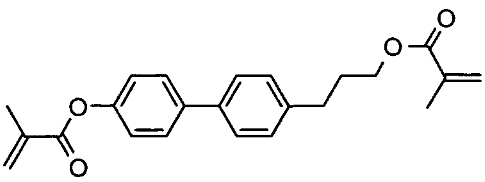
RM-9

(continued)

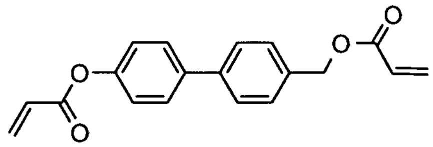

RM-10

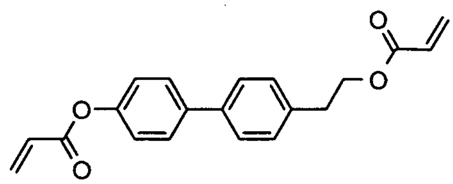

RM-11

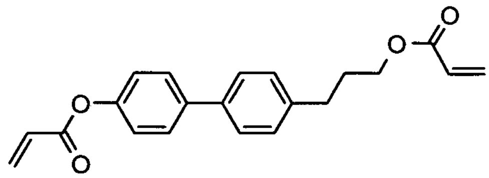

RM-12

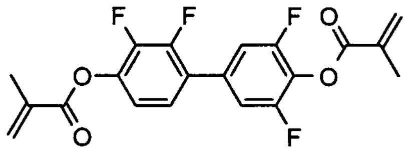

RM-13

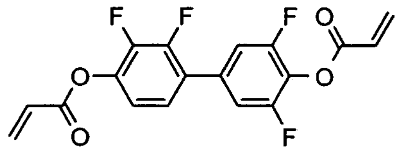

RM-14

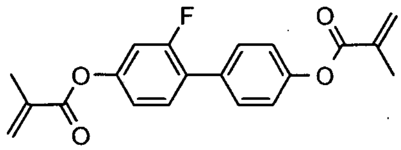

RM-15

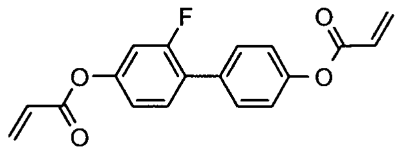

RM-16

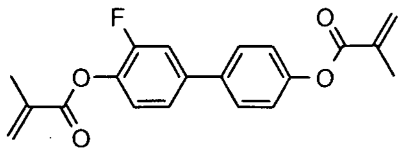

RM-17

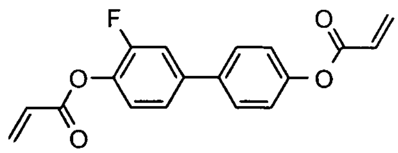

RM-18

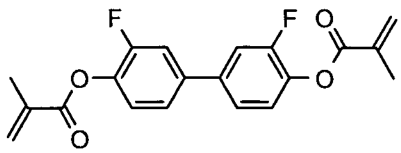

RM-19

(continued)

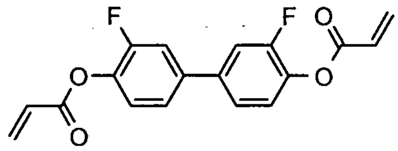

RM-20

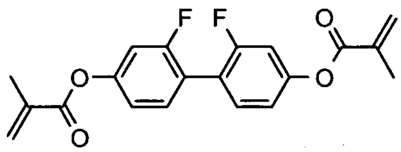

RM-21

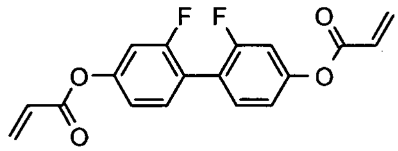

RM-22

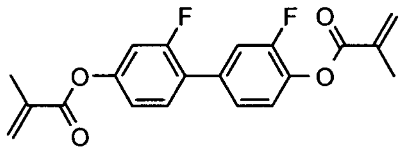

RM-23

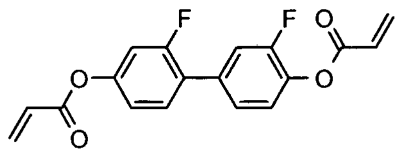

RM-24

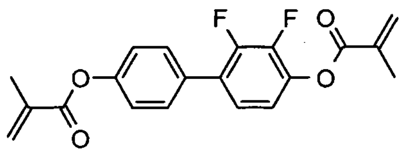

RM-25

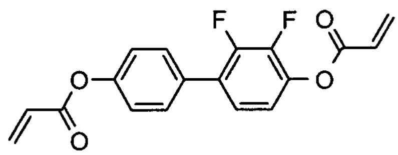

RM-26

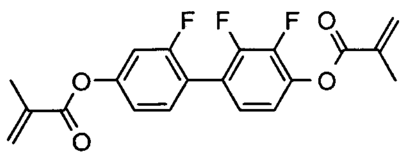

RM-27

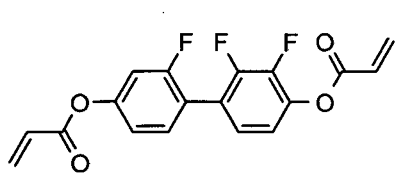

RM-28

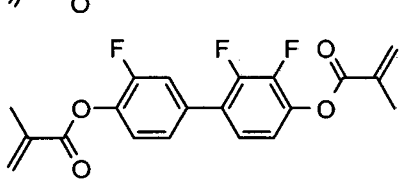

RM-29

(continued)

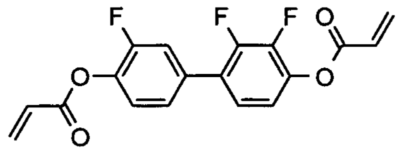

RM-30

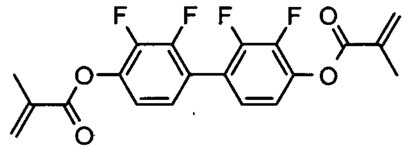

RM-31

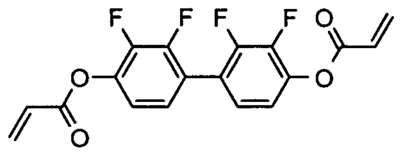

RM-32

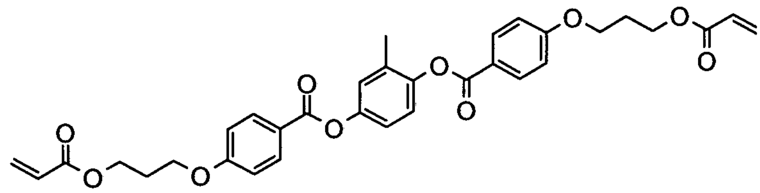

RM-33

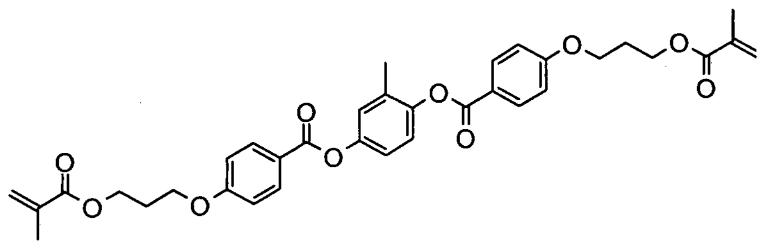

RM-34

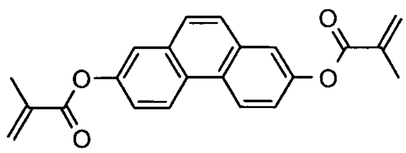

RM-35

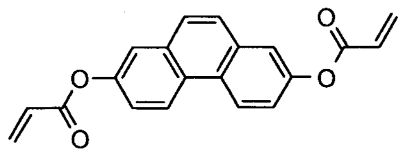

RM-36

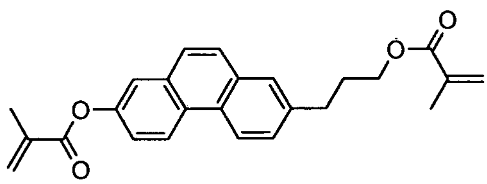

RM-37

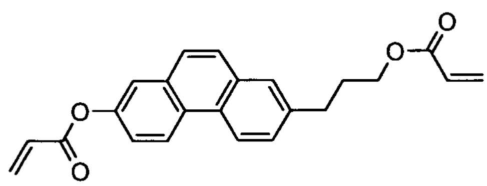

RM-38

(continued)

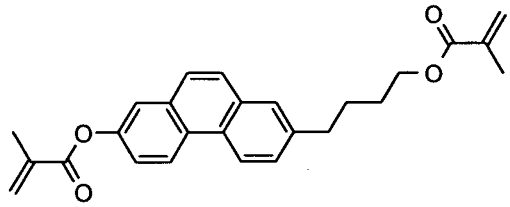

RM-39

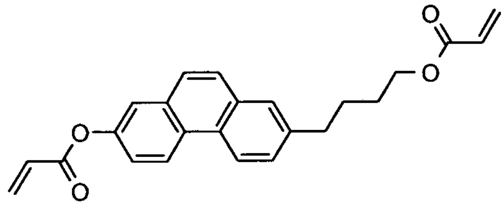

RM-40

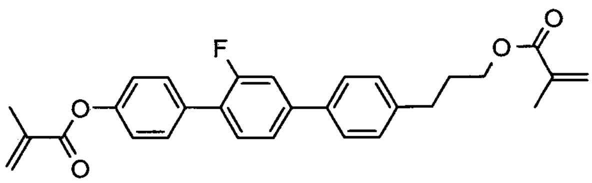

RM-41

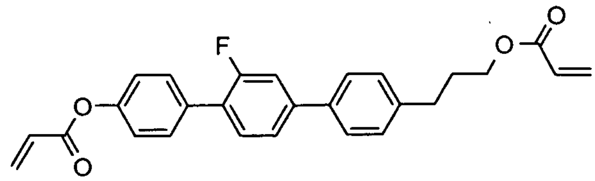

RM-42

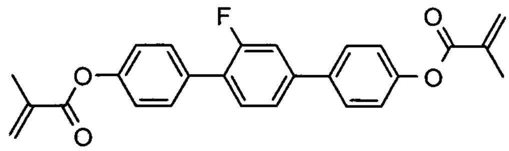

RM-43

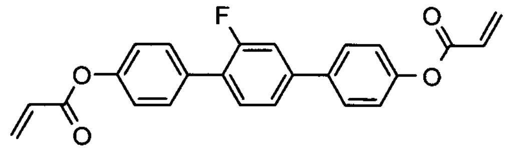

RM-44

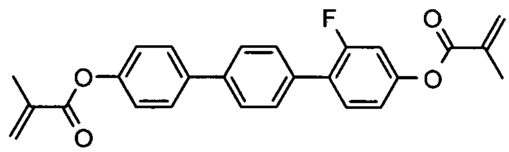

RM-45

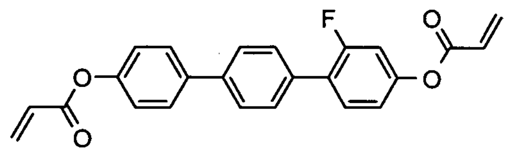

RM-46

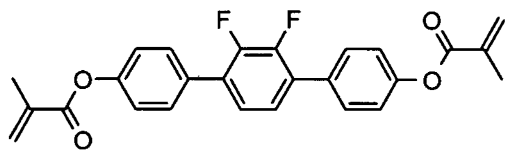

RM-47

(continued)

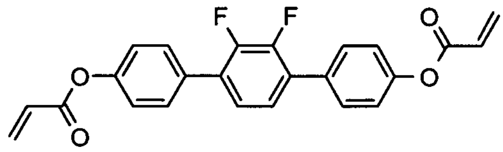
RM-48

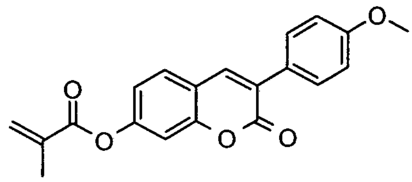
RM-49

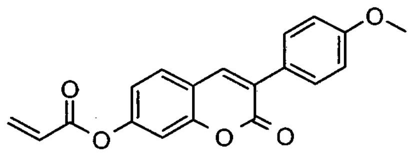
RM-50

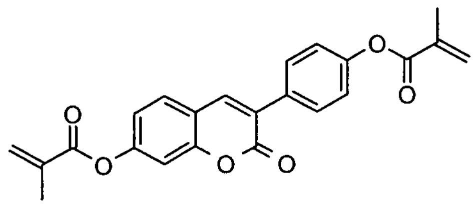
RM-51

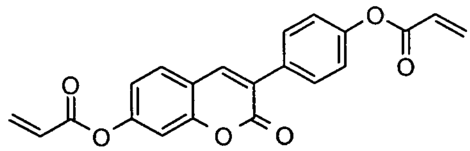
RM-52

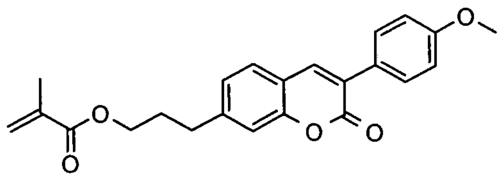
RM-53

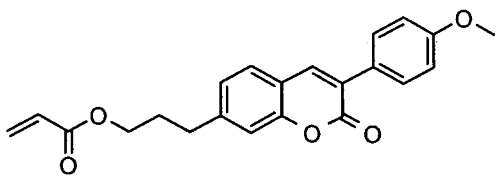
RM-54

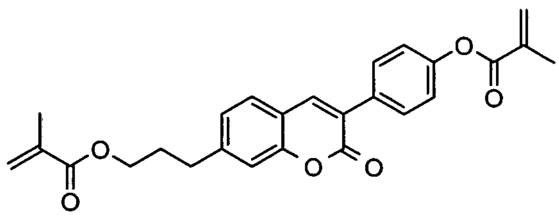
RM-55

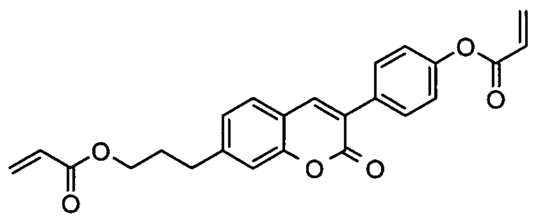
RM-56

(continued)

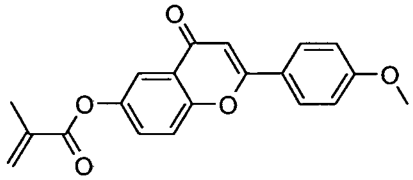

RM-57

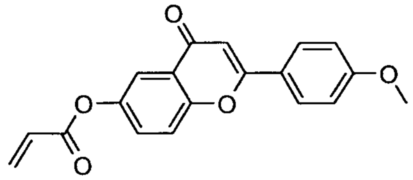

RM-58

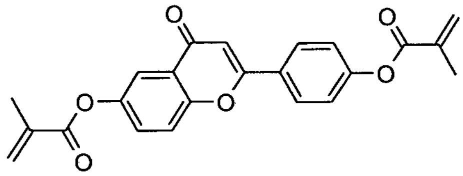

RM-59

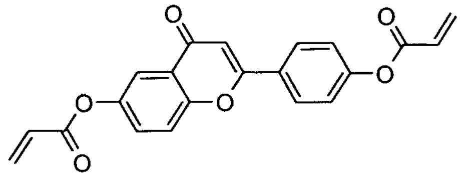

RM-60

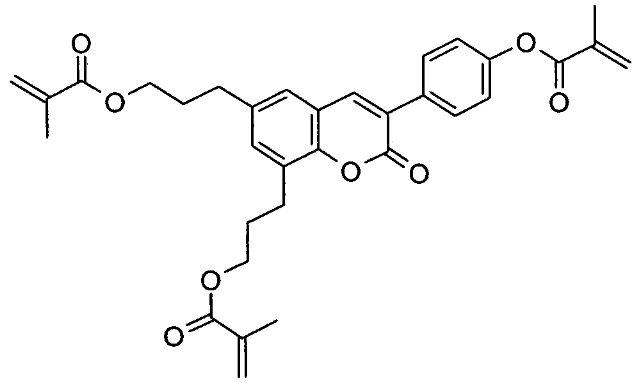

RM-61

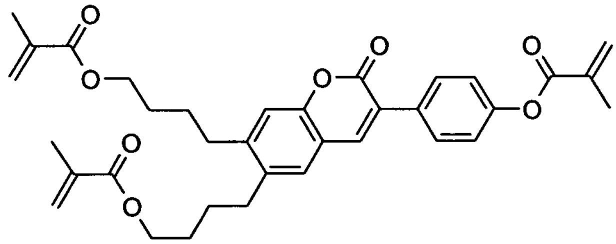

RM-62

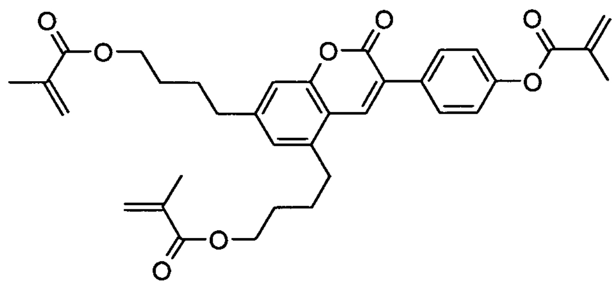

RM-63

(continued)

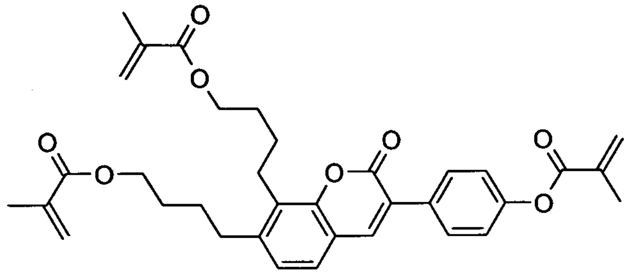

RM-64

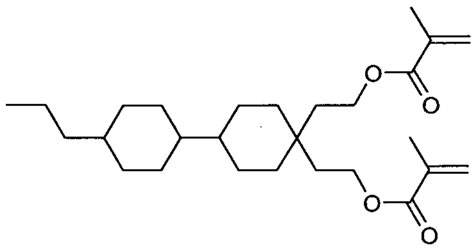

RM-65

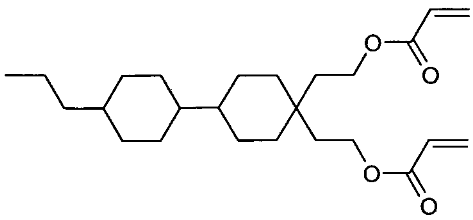

RM-66

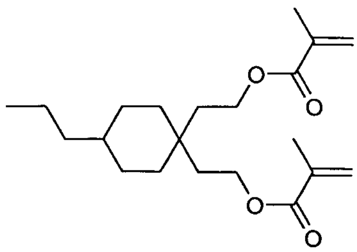

RM-67

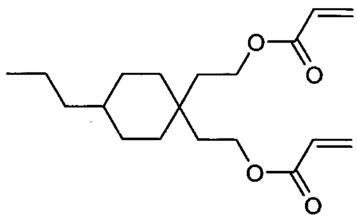

RM-68

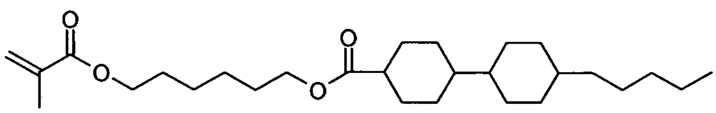

RM-69

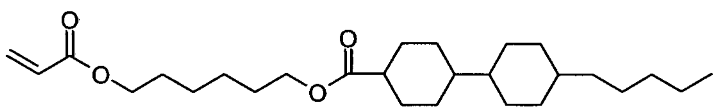

RM-70

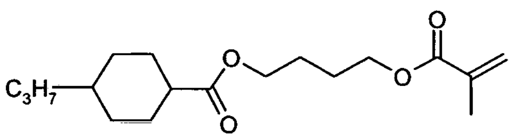

RM-71

(continued)

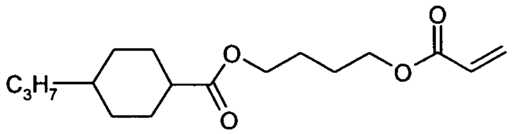

RM-72

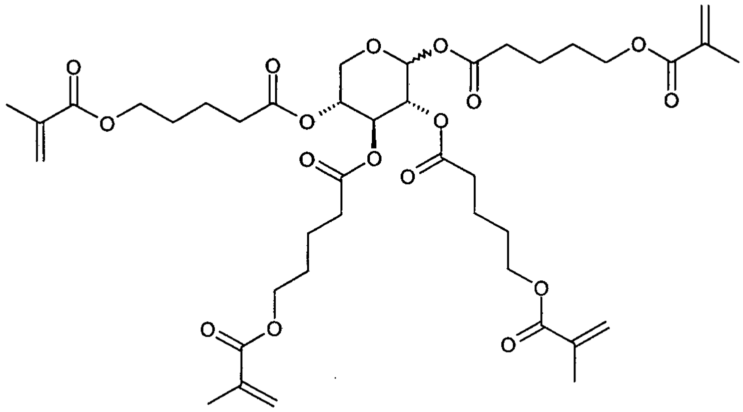

RM-73

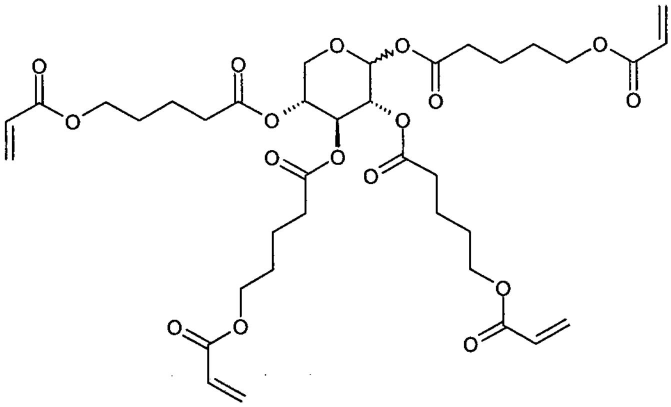

RM-74

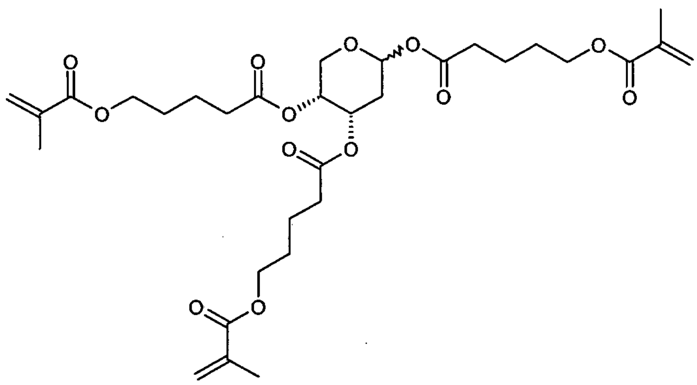

RM-75

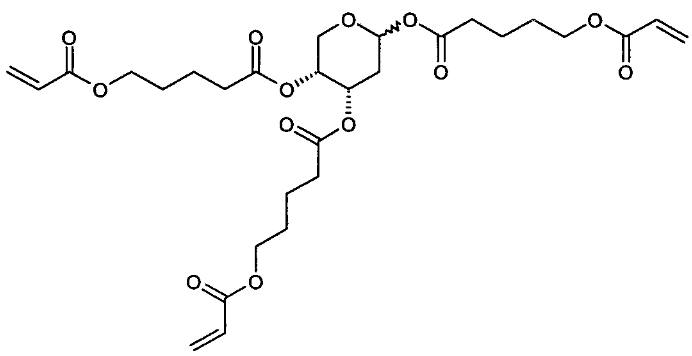

RM-76

(continued)

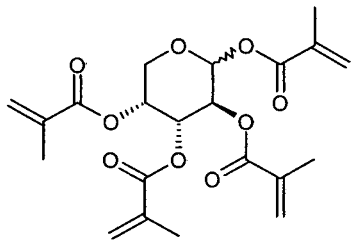

RM-77

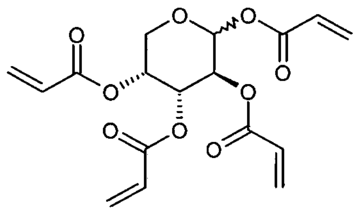

RM-78

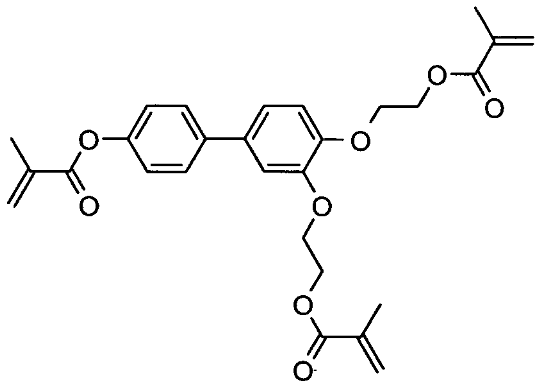

RM-79

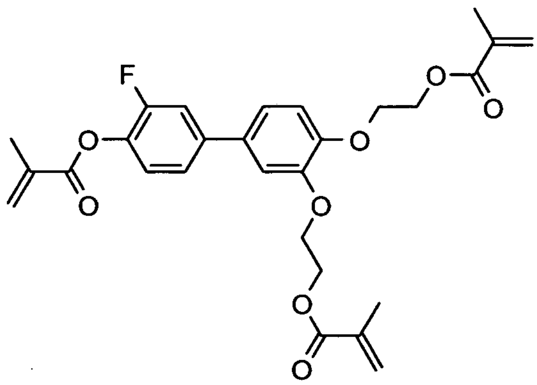

RM-80

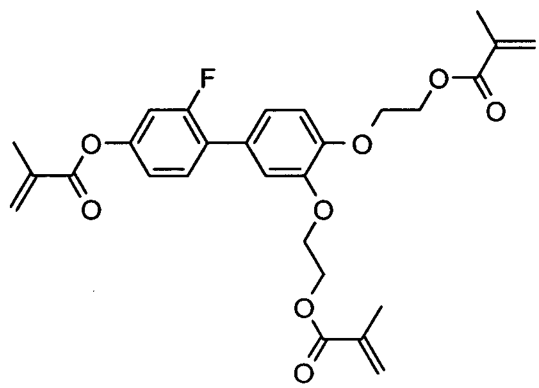

RM-81

(continued)

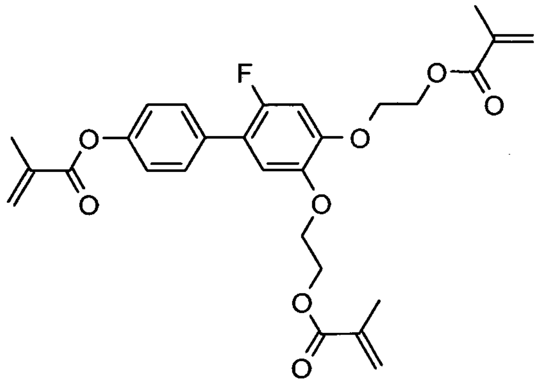

RM-82

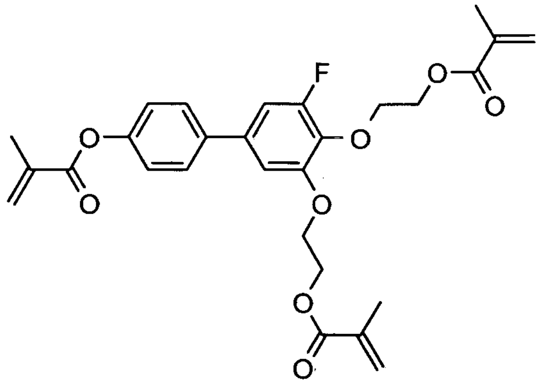

RM-83

The LC media preferably comprise one or more reactive mesogens selected from the group consisting of compounds from Table E.

**Examples**

Example 1:

On an ITO coated glass substrates, a 30 nm VA-polyimide (SE -5561, Nissan) layer is spin coated. After drying, a 160 nm photoresist layer (SU-8, MicroChem) is spin coated and exposed to UV light via a stripe photomask having a stripe gap of 500 nm and a stripe width of 500nm. Following a temper step at 100 °C for 1 min., the photoresist layer is treated with a photoresist developer (mr-Dev 600, MicroResist technologies). The sample is thermally treated for 10 min at 200 °C. The test cell is assembled, while the two of the above described substrates are oriented parallel to each other with a cell gap of 3 μm. The test cell is filled with the following LC medium:

| Compound | Amount [%-w/w] | Physical properties |
|---|---|---|
| R-5011 | 1.9 | T (N,I) = 71°C |
| N-PP-ZI-9-Z-GP-F | 8.4 | |
| N-PP-ZI-7-Z-GP-F | 8.4 | Δn = 0,172 |

(continued)

| Compound | Amount [%-w/w] | Physical properties |
|---|---|---|
| F-PGI-ZI-9-Z-PU-N | 6.9 | |
| F-PGI-ZI-9-Z-PUU-N | 9.6 | |
| N-UIUI-9-UU-N | 8.3 | |
| F-UIGI-ZI-9-Z-GP-N | 6.8 | |
| N-GIZIP-7-PZG-N | 3.4 | |
| N-GI-ZI-9-Z-G-N | 7.0 | |
| F-PGI-ZI-7-Z-PUU-N | 9.6 | |
| F-GIZIGI-9-GZG-F | 2.4 | |
| N-PP-ZI-7-GP-N | 3.9 | |
| N-GIZIGI-9-GZG-N | 3.4 | |
| CY-3-O2 | 3.2 | |
| CCY-3-O1 | 1.6 | |
| CCY-3-O2 | 1.6 | |
| CPY-2-O2 | 2.0 | |
| CPY-3-O2 | 2.0 | |
| CLY-3-O2 | 1.6 | |
| YY-4O-O4 | 2.4 | |
| CPTY-3-O2 | 1.6 | |
| CZY-3-O2 | 2.0 | |
| CZY-5-O2 | 2.0 | |

The test cell is heated above the clearing point of the LC medium and cooled down whilst an electric field is applied to the test cell (10 V, 200Hz) in order to induce the ULH texture.

The ULH texture was generated without any mechanical treatment of the cell (which is typically necessary with rubbed planar orientation layers) and it is surprisingly stable over several days after the electric field has been switched off. In addition defects are significantly reduced.

Example 2:

On an ITO coated glass substrates, a 30 nm VA-polyimide (SE -5561, Nissan) layer is spin coated. After drying, a 160 nm photoresist layer (SU-8, MicroChem) is spin coated and exposed to UV light via a stripe photomask having a stripe gap of 500 nm and a stripe width of 500nm. Following a temper step at 100 °C for 1 min., the photoresist layer is treated with a photoresist developer (mr-Dev 600, MicroResist technologies). The sample is thermally treated for 10 min at 200 °C. After that, the surface of the photoresist pattern is rubbed with a velvet cloth in parallel direction to the stripe pattern. The test cell is assembled, while two of the above described substrates are oriented parallel to each other with a cell gap of 3 μm. The test cell is filled with the same mixture as described example 1. The test cell is heated above the clearing point of the LC medium and cooled down whilst an electric field is applied to the test cell (10 V, 200Hz) in order to induce the ULH texture.

The ULH texture is surprisingly stable over weeks after the electric field has been switched off and the number of defects is in comparison to example 1 further reduced, which can be observed between crossed polarizers.

## Claims

**1.** Light modulation element comprising a pair of substrates (1), each provided with an electrode structure (2), and a

cholesteric liquid-crystalline medium having a helical pitch in the range from 0.2 μm to 2 μm that is sandwiched between the substrates (1), wherein at least one of the substrates is additionally provided with an alignment layer (3) that induces a homeotropic alignment to the adjacent liquid crystal molecules, the alignment layer being provided with a photoresist pattern consisting of periodic substantially parallel stripes (4) that is rubbed in a direction parallel to the extension of the stripes and which is provided on the alignment layer and which has been obtained via photolithography processes from a layer of a suitable photoresist,
wherein the height of the periodic substantially parallel stripes of the photoresist pattern is in the range from 30 to 900 nm, and
wherein the photoresist pattern is selected such that, at the same time, either the gap between the stripes and the width of the stripes corresponds to a half of the helical pitch of the applied cholesteric liquid crystalline material, or the gap between the stripes and the width of the stripes corresponds to an even multiple of the helical pitch of the applied cholesteric liquid crystalline material, and
wherein the cholesteric liquid crystalline material is unidirectional aligned with its helical axis parallel to the substrates of the light modulation element.

2. Light modulation element according to claim 1, wherein the substrates are arranged with a separation in the range from approximately 1 μm to approximately 50 μm from one another.

3. Light modulation element according to claim 1 or 2 wherein the electrode structure is provided as an electrode layer on the entire substrate and/or a pixel area.

4. Light modulation element according to one or more of claims 1 to 3, comprising two or more polarisers, at least one of which is arranged on one side of the layer of the liquid-crystalline medium and at least one of which is arranged on the opposite side of the layer of the liquid-crystalline medium.

5. Light modulation element according to one or more of claims 1 to 4, wherein the cholesteric liquid-crystalline medium comprises at least one bimesogenic compound and at least one chiral compound.

6. Light modulation element according to one or more of claims 1 to 5, wherein the cholesteric liquid-crystalline medium comprises at least one bimesogenic compound, at least one chiral compound and one or more nematogenic compounds.

7. Light modulation element according to one or more of claims 1 to 6, wherein the cholesteric liquid-crystalline medium comprises at least one bimesogenic compound which is selected from the group of compounds of formulae A-I to A-III,

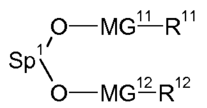

A-I

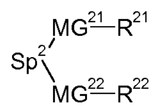

A-II

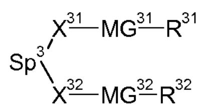

A-III

wherein

$R^{11}$ and $R^{12}$, $R^{21}$ and $R^{22}$, and $R^{31}$ and $R^{32}$ are each independently H, F, Cl, CN, NCS or a straight-chain or branched alkyl group with 1 to 25 C atoms which may be unsubstituted, mono- or polysubstituted by halogen or CN, it being also possible for one or more non-adjacent $CH_2$ groups to be replaced, in each occurrence independently from one another, by -O-, -S-, -NH-, $-N(CH_3)-$, -CO-, -COO-,-OCO-, -O-CO-O-, -S-CO-, -CO-S-, -CH=CH-,-CH=CF-, -CF=CF- or -C≡C- in such a manner that oxygen atoms are not linked directly to one another,
$MG^{11}$ and $MG^{12}$, $MG^{21}$ and $MG^{22}$, and $MG^{31}$ and $MG^{32}$ are each independently a mesogenic group,

$Sp^1$, $Sp^2$ and $Sp^3$ are each independently a spacer group comprising 5 to 40 C atoms, wherein one or more non-adjacent $CH_2$ groups, with the exception of the $CH_2$ groups of $Sp^1$ linked to O-$MG^{11}$ and/or O-$MG^{12}$, of $Sp^2$ linked to $MG^{21}$ and/or $MG^{22}$ and of $Sp^3$ linked to $X^{31}$ and $X^{32}$, may also be replaced by -O-, -S-, -NH-, -N($CH_3$)-, -CO-, -O-CO-, -S-CO-, -O-COO-, -CO-S-, -CO-O-, -CH(halogen)-, -CH(CN)-,-CH=CH- or -C≡C-, however in such a way that no two O-atoms are adjacent to one another, no two -CH=CH- groups are adjacent to each other, and no two groups selected from -O-CO-, -S-CO-, -O-COO-,-CO-S-, -CO-O- and -CH=CH- are adjacent to each other, and

$X^{31}$ and $X^{32}$ are independently from one another a linking group selected from -CO-O-, -O-CO-, -CH=CH-, -C=C- or -S-, and, alternatively, one of them may also be either -O- or a single bond, and, again alternatively, one of them may be -O- and the other one a single bond.

**8.** Light modulation element according to one or more of claims 1 to 7, wherein the cholesteric liquid-crystalline medium comprises one or more chiral compounds, which are selected from the group of compounds of formulae C-I to C-III,

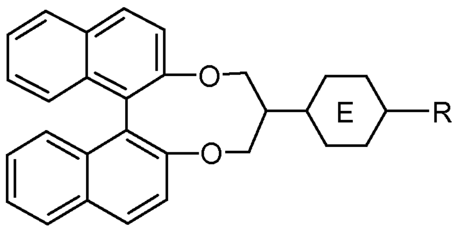

C-I

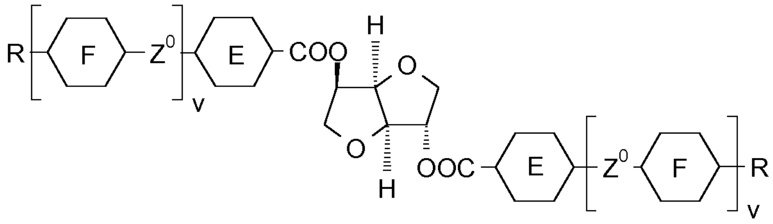

C-II

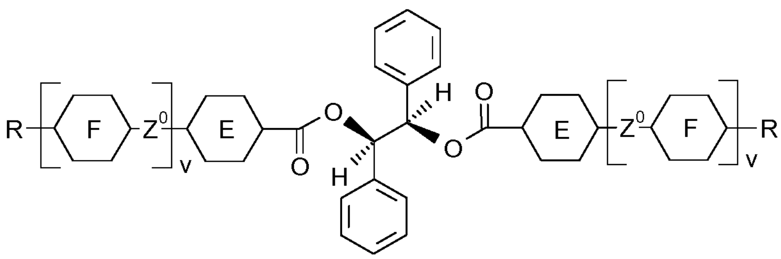

C-III

including the respective (S,S) enantiomers, and
wherein

E and F are each independently 1,4-phenylene or trans-1,4-cyclohexylene,
v is 0 or 1,
$Z^0$ is -COO-, -OCO-, -$CH_2CH_2$- or a single bond, and
R is alkyl, alkoxy or alkanoyl with 1 to 12 C atoms.

**9.** Light modulation element according to one or more of claims 1 to 8, wherein the cholesteric liquid-crystalline medium comprises one or more polymerisable liquid-crystalline compounds which are selected from the group of compounds of formula D,

P-Sp-MG-$R^0$ D

wherein

P is a polymerisable group,
Sp is a spacer group or a single bond,
MG is a rod-shaped mesogenic group, which is preferably selected of formula M,
M is $-(A^{D21}-Z^{D21})_k-A^{D22}-(Z^{D22}-A^{D23})_l-$,
$A^{D21}$ to $A^{D23}$ are in each occurrence independently of one another an aryl-, heteroaryl-, heterocyclic- or alicyclic group optionally being substituted by one or more identical or different groups L, preferably 1,4-cyclohexylene or 1,4-phenylene, 1,4 pyridine, 1,4-pyrimidine, 2,5-thiophene, 2,6-dithieno[3,2-b:2',3'-d]thiophene, 2,7- fluorine, 2,6-naphtalene, 2,7-phenanthrene optionally being substituted by one or more identical or different groups L,
$Z^{D21}$ and $Z^{D22}$ are in each occurrence independently from each other, -O-, -S-, -CO-, -COO-, -OCO-, -S-CO-, -CO-S-, -O-COO-, $-CO-NR^{01}-$, $-NR^{01}-CO-$, $-NR^{01}-CO-NR^{02}$, $-NR^{01}-CO-O-$, $-O-CO-NR^{01}-$, $-OCH_2-$, $-CH_2O-$, $-SCH_2-$, $-CH_2S-$, $-CF_2O-$, $-OCF_2-$, $-CF_2S-$, $-SCF_2-$, $-CH_2CH_2-$, $-(CH_2)_4-$, $-CF_2CH_2-$, $-CH_2CF_2-$, $-CF_2CF_2-$, -CH=N-, -N=CH-, -N=N-, $-CH=CR^{01}-$, $-CY^{01}=CY^{02}-$, -C≡C-, -CH=CH-COO-, -OCO-CH=CH-, or a single bond, preferably -COO-, -OCO-, -CO-O-, -O-CO-, $-OCH_2-$, $-CH_2O-$, $-CH_2CH_2-$, $-(CH_2)_4-$, $-CF_2CH_2-$, $-CH_2CF_2-$, $-CF_2CF_2-$, -C≡C-, -CH=CH-COO-, -OCO-CH=CH-, or a single bond,
L is in each occurrence independently of each other For Cl,
$R^0$ is H, alkyl, alkoxy, thioalkyl, alkylcarbonyl, alkoxycarbonyl, alkylcarbonyloxy or alkoxycarbonyloxy with 1 to 20 C atoms more, or is $Y^0$ or P-Sp-,
$Y^0$ is F, Cl, CN, $NO_2$, $OCH_3$, OCN, SCN, optionally fluorinated alkylcarbonyl, alkoxycarbonyl, alkylcarbonyloxy or alkoxycarbonyloxy with 1 to 4 C atoms, or mono- oligo- or polyfluorinated alkyl or alkoxy with 1 to 4 C atoms,
$Y^{01}$ and $Y^{02}$ each, independently of one another, denote H, F, Cl or CN,
$R^{01}$ and $R^{02}$ have each and independently the meaning as defined above $R^0$, and
k and l are each and independently 0, 1, 2, 3 or 4.

**10.** Method for the production of a light modulation element according to one or more of claims 1 to 9 comprising at least the following steps:

- cutting and cleaning of the substrates,
- providing the electrode structure on the substrates,
- coating of at least one alignment layer,
- coating of the photoresist on the alignment layer,
- photolithography of the photoresist,
- rubbing over the patterned photoresist,
- assembling the cell using a UV curable adhesive,
- filling the cell with the cholesteric liquid-crystalline medium,
- obtaining a ULH texture, by applying an electric field to the LC medium whilst cooling slowly from the isotropic phase into the cholesteric phase, and
- optionally, curing the polymerisable compounds of the LC medium.

**11.** Use of the light modulation element according to one or more of claims 1 to 9 in optical or electro-optical devices.

**12.** Optical or electro-optical device comprising the light modulation element according to one or more of claims 1 to 9.

**13.** Optical or electro-optical device according to claim 12, **characterized in that** it is an electro-optical display, liquid crystal display (LCDs), non-linear optic (NLO) device, or optical information storage device.

**Patentansprüche**

**1.** Lichtmodulationselement enthaltend ein Paar Substrate (1), die jeweils mit einer Elektrodenstruktur (2) versehen sind, und ein cholesterisches flüssigkristallines Medium mit einer helikalen Ganghöhe im Bereich von 0,2 μm bis 2 μm, das zwischen den Substraten (1) angeordnet ist, bei dem mindestens eines der Substrate zusätzlich mit einer Orientierungsschicht (3) versehen ist, die eine homöotrope Orientierung zu den benachbarten Flüssigkristallmolekülen induziert,
wobei die Orientierungsschicht mit einem Photolackmuster versehen ist, das aus regelmäßig wiederkehrenden, im Wesentlichen parallelen Streifen (4) besteht,
das in einer Richtung parallel zur Ausdehnung der Streifen gerieben ist und
das auf der Orientierungsschicht vorgesehen ist und
das durch Photolithographieverfahren aus einer Schicht eines geeigneten Photolacks erhalten wurde,

bei dem die Höhe der regelmäßig wiederkehrenden, im Wesentlichen parallelen Streifen des Photolackmusters im Bereich von 30 bis 900 nm liegt und
bei dem das Photolackmuster so gewählt ist, dass gleichzeitig entweder der Zwischenraum zwischen den Streifen und die Breite der Streifen einer Hälfte der helikalen Ganghöhe des aufgebrachten cholesterischen flüssigkristallinen Materials entsprechen oder der Zwischenraum zwischen den Streifen und die Breite der Streifen einem geradzahligen Vielfachen der helikalen Ganghöhe des aufgebrachten cholesterischen flüssigkristallinen Materials entsprechen, und
bei dem das cholesterische flüssigkristalline Material unidirektional mit seiner Helixachse parallel zu den Substraten des Lichtmodulationselements orientiert ist.

**2.** Lichtmodulationselement nach Anspruch 1, bei dem die Substrate mit einem Abstand im Bereich von ungefähr 1 μm bis ungefähr 50 μm voneinander angeordnet sind.

**3.** Lichtmodulationselement nach Anspruch 1 oder 2, bei dem die Elektrodenstruktur als Elektrodenschicht auf dem gesamten Substrat und/oder einer Pixelfläche vorgesehen ist.

**4.** Lichtmodulationselement nach einem oder mehreren der Ansprüche 1 bis 3, enthaltend zwei oder mehr Polarisatoren, von denen mindestens einer auf einer Seite der Schicht des flüssigkristallinen Mediums angeordnet ist und von denen mindestens einer auf der entgegengesetzten Seite der Schicht des flüssigkristallinen Mediums angeordnet ist.

**5.** Lichtmodulationselement nach einem oder mehreren der Ansprüche 1 bis 4, bei dem das cholesterische flüssigkristalline Medium mindestens eine bimesogene Verbindung und mindestens eine chirale Verbindung enthält.

**6.** Lichtmodulationselement nach einem oder mehreren der Ansprüche 1 bis 5, bei dem das cholesterische flüssigkristalline Medium mindestens eine bimesogene Verbindung, mindestens eine chirale Verbindung und eine oder mehrere nematogene Verbindungen enthält.

**7.** Lichtmodulationselement nach einem oder mehreren der Ansprüche 1 bis 6, bei dem das cholesterische flüssigkristalline Medium mindestens eine bimesogene Verbindung enthält, die ausgewählt ist aus der Gruppe der Verbindungen der Formeln A-I bis A-III

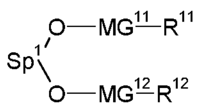

A-I

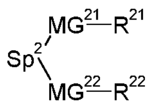

A-II

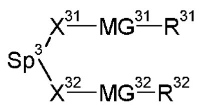

A-III

bei denen

$R^{11}$ und $R^{12}$, $R^{21}$ und $R^{22}$ und $R^{31}$ und $R^{32}$ jeweils unabhängig H, F, Cl, CN, NCS oder eine geradkettige oder verzweigte Alkylgruppe mit 1 bis 25 C-Atomen sind, die unsubstituiert oder ein- oder mehrfach durch Halogen oder CN substituiert sein kann, wobei auch eine oder mehrere nicht benachbarte $CH_2$-Gruppen bei jedem Auftreten unabhängig voneinander so durch -O-, -S-, -NH-, $-N(CH_3)-$, -CO-, -COO-, -OCO-, -O-CO-O-, -S-CO-, -CO-S-, -CH=CH-, -CH=CF-, -CF=CF- oder -C≡C- ersetzt sein können, dass Sauerstoffatome nicht direkt miteinander verknüpft sind,
$MG^{11}$ und $MG^{12}$, $MG^{21}$ und $MG^{22}$ und $MG^{31}$ und $MG^{32}$ jeweils unabhängig eine mesogene Gruppe sind,
$Sp^1$, $Sp^2$ und $Sp^3$ jeweils unabhängig eine Spacergruppe mit 5 bis 40 C-Atomen sind, bei der eine oder mehrere nicht benachbarte $CH_2$-Gruppen, mit Ausnahme der $CH_2$-Gruppen von mit $O-MG^{11}$ und/oder $O-MG^{12}$ verknüpf-

tem $Sp^1$, von mit $MG^{21}$ und/oder $MG^{22}$ verknüpftem $Sp^2$ und von mit $X^{31}$ und $X^{32}$ verknüpftem $Sp^3$, auch durch -O-, -S-, -NH-, -$N(CH_3)$-, -CO-, -O-CO-, -S-CO-, -O-COO-, -CO-S-, -CO-O-, -CH(Halogen)-, -CH(CN)-, -CH=CH- oder -C≡C- ersetzt sein können, jedoch so, dass keine zwei O-Atome einander benachbart sind, keine zwei -CH=CH-Gruppen einander benachbart sind und keine zwei aus -O-CO-, -S-CO-, -O-COO-, -CO-S-, -CO-O- und -CH=CH- ausgewählten Gruppen einander benachbart sind, und
$X^{31}$ und $X^{32}$ unabhängig voneinander eine aus -CO-O-, -O-CO-, -CH=CH-, -C≡C- oder -S- ausgewählte Verknüpfungsgruppe sind und einer von ihnen alternativ auch entweder -O- oder eine Einfachbindung sein kann und wiederum alternativ einer von ihnen -O- und der andere eine Einfachbindung sein kann.

**8.** Lichtmodulationselement nach einem oder mehreren der Ansprüche 1 bis 7, bei dem das cholesterische flüssigkristalline Medium eine oder mehrere chirale Verbindungen enthält, die ausgewählt sind aus der Gruppe der Verbindungen der Formeln C-I bis C-III

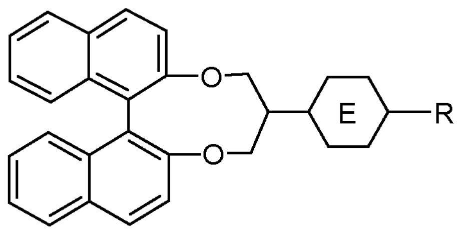

C-I

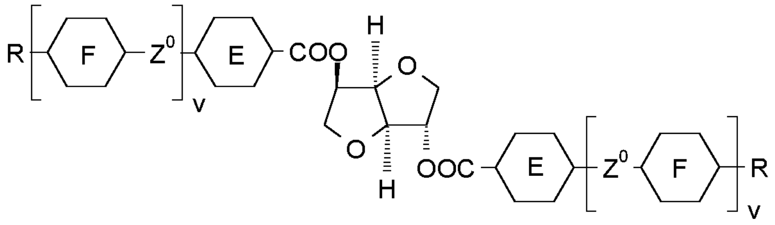

C-II

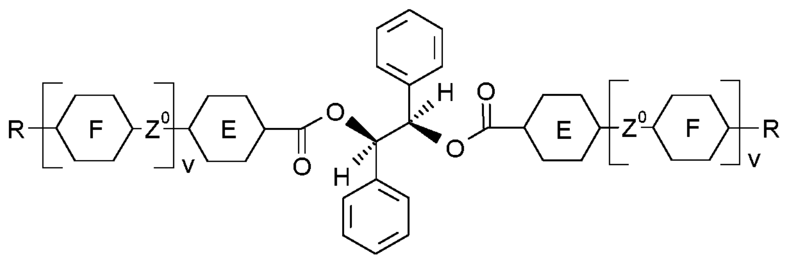

C-III

einschließlich der jeweiligen (S,S)-Enantiomere, und
bei denen

E und F jeweils unabhängig 1,4-Phenylen oder trans-1,4-Cyclohexylen sind,
v 0 oder 1 ist,
$Z^0$ -COO-, -OCO-, -$CH_2CH_2$- oder eine Einfachbindung ist, und
R Alkyl, Alkoxy oder Alkanoyl mit 1 bis 12 C-Atomen ist.

**9.** Lichtmodulationselement nach einem oder mehreren der Ansprüche 1 bis 8, bei dem das cholesterische flüssigkristalline Medium eine oder mehrere polymerisierbare flüssigkristalline Verbindungen enthält, die ausgewählt sind aus der Gruppe der Verbindungen der Formel D

P-Sp-MG-$R^0$ D

bei der

P eine polymerisierbare Gruppe ist,

Sp eine Spacergruppe oder eine Einfachbindung ist,
MG eine stäbchenförmige mesogene Gruppe ist, die vorzugsweise aus der Formel M ausgewählt ist,
M $-(A^{D21}-Z^{D21})_k-A^{D22}-(Z^{D22}-A^{D23})_l-$ ist,
$A^{D21}$ bis $A^{D23}$ bei jedem Auftreten unabhängig voneinander eine Aryl-, Heteroaryl-, heterocyclische oder alicyclische Gruppe sind, die gegebenenfalls durch eine oder mehrere gleiche oder verschiedene Gruppen L substituiert ist, vorzugsweise 1,4-Cyclohexylen oder 1,4-Phenylen, 1,4-Pyridin, 1,4-Pyrimidin, 2,5-Thiophen, 2,6-Dithieno[3,2-b:2',3'-d]thiophen, 2,7-Fluoren, 2,6-Naphtalin, 2,7-Phenanthren, das gegebenenfalls durch eine oder mehrere gleiche oder verschiedene Gruppen L substituiert ist,
$Z^{D21}$ und $Z^{D22}$ bei jedem Auftreten unabhängig voneinander -O-, -S-, -CO-, -COO-, -OCO-, -S-CO-, -CO-S-, -O-COO-, $-CO-NR^{01}-$, $-NR^{01}-CO-$, $-NR^{01}-CO-NR^{02}$, $-NR^{01}-CO-O-$, $-O-CO-NR^{01}-$ $-OCH_2-$, $-CH_2O-$, $-SCH_2-$, $-CH_2S-$, $-CF_2O-$, $-OCF_2-$, $-CF_2S-$, $-SCF_2-$, $-CH_2CH_2-$, $-(CH_2)_4-$, $-CF_2CH_2-$, $-CH_2CF_2-$, $-CF_2CF_2-$, -CH=N-, -N=CH-, -N=N-, $-CH=CR^{01}-$, $-CY^{01}=CY^{02}-$, -C≡C-, -CH=CH-COO-, -OCO-CH=CH- oder eine Einfachbindung, vorzugsweise -COO-, -OCO-, -CO-O-, -O-CO-, $-OCH_2-$, $-CH_2O-$, $-CH_2CH_2-$, $-(CH_2)_4-$, $-CF_2CH_2-$, $-CH_2CF_2-$, $-CF_2CF_2-$, -C≡C-, -CH=CH-COO-, -OCO-CH=CH- oder eine Einfachbindung sind,
L bei jedem Auftreten unabhängig voneinander F oder Cl ist,
$R^0$ H, Alkyl, Alkoxy, Thioalkyl, Alkylcarbonyl, Alkoxycarbonyl, Alkylcarbonyloxy oder Alkoxycarbonyloxy mit 1 bis 20 C-Atomen ist oder $Y^0$ oder P-Sp- ist,
$Y^0$ F, Cl, CN, $NO_2$, $OCH_3$, OCN, SCN, gegebenenfalls fluoriertes Alkylcarbonyl, Alkoxycarbonyl, Alkylcarbonyloxy oder Alkoxycarbonyloxy mit 1 bis 4 C-Atomen oder mono-, oligo- oder polyfluoriertes Alkyl oder Alkoxy mit 1 bis 4 C-Atomen ist,
$Y^{01}$ und $Y^{02}$ jeweils unabhängig voneinander H, F, Cl oder CN bedeuten,
$R^{01}$ und $R^{02}$ jeweils und unabhängig die wie vorstehend für $R^0$ definierte Bedeutung besitzen, und
k und l jeweils und unabhängig 0, 1, 2, 3 oder 4 sind.

**10.** Verfahren zur Herstellung eines Lichtmodulationselements nach einem oder mehreren der Ansprüche 1 bis 9, umfassend zumindest die folgenden Schritte:

- Schneiden und Reinigen der Substrate,
- Bereitstellen der Elektrodenstruktur auf den Substraten,
- Auftragen mindestens einer Orientierungsschicht,
- Auftragen des Photolacks auf die Orientierungsschicht,
- Photolithographie des Photolacks,
- Reiben über den strukturierten Photoresist,
- Zusammensetzen der Zelle mit einem UV-härtbaren Klebstoff,
- Füllen der Zelle mit dem cholesterischen flüssigkristallinen Medium,
- Erhalten einer ULH-Textur durch Anlegen eines elektrischen Feldes an das FK-Medium, während man langsam aus der isotropen Phase in die cholesterische Phase abkühlt, und
- gegebenenfalls Härten der polymerisierbaren Verbindungen des FK-Mediums.

**11.** Verwendung des Lichtmodulationselements nach einem oder mehreren der Ansprüche 1 bis 9 in optischen oder elektrooptischen Vorrichtungen.

**12.** Optische oder elektrooptische Vorrichtung enthaltend das Lichtmodulationselement nach einem oder mehreren der Ansprüche 1 bis 9.

**13.** Optische oder elektrooptische Vorrichtung nach Anspruch 12, **dadurch gekennzeichnet, dass** es sich um eine elektrooptische Anzeige, Flüssigkristallanzeige (LCD), Vorrichtung der nichtlinearen Optik (NLO) oder optische Datenspeichervorrichtung handelt.

## Revendications

**1.** Élément de modulation de la lumière comprenant une paire de substrats (1) dont chacun est muni d'une structure d'électrode(s) (2), et un milieu cristallin liquide cholestérique qui présente un pas d'hélice dans la plage de 0,2 μm à 2 μm et qui est pris en sandwich entre les substrats (1),
dans lequel au moins l'un des substrats est muni de façon additionnelle d'une couche d'alignement (3) qui induit un alignement homéotrope par rapport aux molécules de cristaux liquides adjacentes, la couche d'alignement étant munie d'un motif de photorésist qui est constitué par des bandes sensiblement parallèles périodiques (4) et

qui est frotté dans une direction qui est parallèle à l'extension des bandes et
lequel est prévu sur la couche d'alignement et
lequel a été obtenu via des processus de photolithographie à partir d'une couche en un photorésist appropriée,
dans lequel la hauteur des bandes sensiblement parallèles périodiques du motif de photorésist est dans la plage de 30 à 900 nm, et
dans lequel le motif de photorésist est sélectionné de telle sorte que, en même temps, soit
l'espace entre les bandes et la largeur des bandes correspondent à la moitié du pas d'hélice du matériau cristallin liquide cholestérique appliqué, soit
l'espace entre les bandes et la largeur des bandes correspondent à un multiple pair du pas d'hélice du matériau cristallin liquide cholestérique appliqué, et
dans lequel le matériau cristallin liquide cholestérique est aligné de façon unidirectionnelle de sorte que son axe d'hélice est parallèle aux substrats de l'élément de modulation de la lumière.

**2.** Élément de modulation de la lumière selon la revendication 1, dans lequel les substrats sont agencés selon une séparation dans la plage qui va d'approximativement 1 μm à approximativement 50 l'un par rapport à l'autre.

**3.** Élément de modulation de la lumière selon la revendication 1 ou 2, dans lequel la structure d'électrode(s) est constituée en tant que couche d'électrode(s) sur la totalité du substrat et/ou sur une zone de pixel(s).

**4.** Élément de modulation de la lumière selon une ou plusieurs des revendications 1 à 3, comprenant deux polariseurs ou plus dont au moins l'un est agencé sur un côté de la couche du milieu cristallin liquide et dont au moins l'un est agencé sur le côté opposé de la couche du milieu cristallin liquide.

**5.** Élément de modulation de la lumière selon une ou plusieurs des revendications 1 à 4, dans lequel le milieu cristallin liquide cholestérique comprend au moins un composé bimésogène et au moins un composé chiral.

**6.** Élément de modulation de la lumière selon une ou plusieurs des revendications 1 à 5, dans lequel le milieu cristallin liquide cholestérique comprend au moins un composé bimésogène, au moins un composé chiral et un ou plusieurs composé(s) nématogène(s).

**7.** Élément de modulation de la lumière selon une ou plusieurs des revendications 1 à 6, dans lequel le milieu cristallin liquide cholestérique comprend au moins un composé bimésogène qui est sélectionné parmi le groupe de composés des formules A-I à A-III :

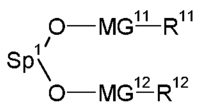

A-I

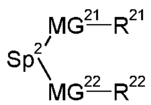

A-II

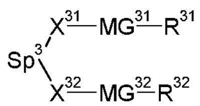

A-III

dans lesquelles :

$R^{11}$ et $R^{12}$, $R^{21}$ et $R^{22}$, et $R^{31}$ et $R^{32}$ sont, chacun de manière indépendante, H, F, Cl, CN, NCS ou un groupe alkyle en chaîne droite ou ramifié qui comporte de 1 à 25 atome(s) de C, lequel peut être non substitué, mono- ou polysubstitué par halogène ou par CN, étant entendu qu'il est également possible qu'un ou plusieurs groupe(s) $CH_2$ non adjacents soit/soient remplacé(s), pour chaque occurrence de manière indépendante les uns des autres, par -O-, -S-, -NH-, -N($CH_3$)-, -CO-, -COO-, -OCO-, -O-CO-O-, -S-CO-, -CO-S-, -CH=CH-, -CH=CF-, -CF=CF- ou -C≡C- de telle sorte que des atomes d'oxygène ne soient pas liés directement les uns aux autres,
$MG^{11}$ et $MG^{12}$, $MG^{21}$ et $MG^{22}$, et $MG^{31}$ et $MG^{32}$ sont, chacun de manière indépendante, un groupe mésogène,

$Sp^1$, $Sp^2$ et $Sp^3$ sont, chacun de manière indépendante, un groupe d'espaceur qui comprend de 5 à 40 atomes de C, dans lequel un ou plusieurs groupe(s) $CH_2$ non adjacents, à l'exception des groupes $CH_2$ de $Sp^1$ en lien sur O-$MG^{11}$ et/ou sur O-$MG^{12}$, de $Sp^2$ en lien sur $MG^{21}$ et/ou sur $MG^{22}$ et de $Sp^3$ en lien sur $X^{31}$ et sur $X^{32}$, peut/peuvent également être remplacé(s) par -O-, -S-, -NH-, -N($CH_3$)-, -CO-, -O-CO-, -S-CO-, -O-COO-, -CO-S-, -CO-O-, -CH(halogène)-, -CH(CN)-, -CH=CH- ou -C≡C-, cependant de telle sorte que deux atomes de O ne soient pas adjacents l'un à l'autre, que deux groupes -CH=CH- ne soient pas adjacents l'un à l'autre, et que deux groupes qui sont sélectionnés parmi -O-CO-, -S-CO-, -O-COO-, -CO-S-, -CO-O- et -CH=CH- ne soient pas adjacents l'un à l'autre, et

$X^{31}$ et $X^{32}$ sont, de manière indépendante l'un de l'autre, un groupe de liaison qui est sélectionné parmi -CO-O-, -O-CO-, -CH=CH-, -C≡C- ou -S-, et, à titre d'alternative, l'un d'entre eux peut également être soit -O-, soit une liaison simple, et, à nouveau à titre d'alternative, l'un d'entre eux peut être -O- et l'autre peut être une liaison simple.

**8.** Élément de modulation de la lumière selon une ou plusieurs des revendications 1 à 7, dans lequel le milieu cristallin liquide cholestérique comprend un ou plusieurs composé(s) chiral/chiraux, lesquels sont sélectionnés parmi le groupe de composés des formules C-I à C-III :

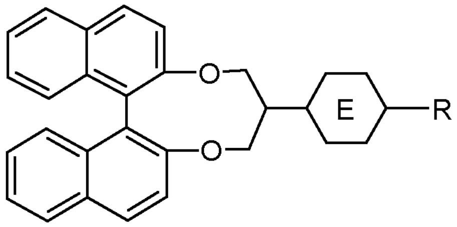

C-I

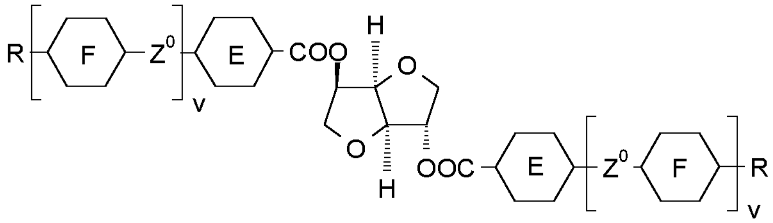

C-II

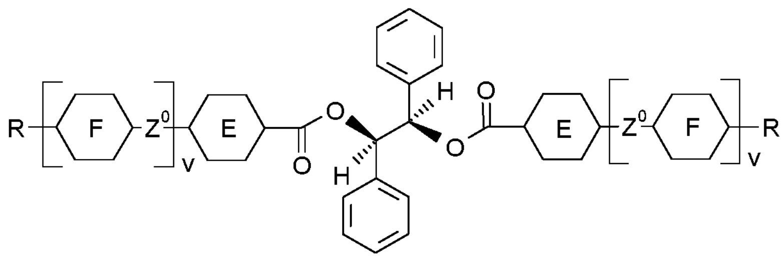

C-III

y compris les énantiomères (S, S) respectifs, et
dans lesquelles :

E et F sont chacun, de manière indépendante, 1,4-phénylène ou trans-1,4-cyclohexylène,
v est 0 ou 1,
$Z^0$ est -COO-, -OCO-, -$CH_2CH_2$- ou une liaison simple, et
R est alkyle, alcoxy ou alkanoyle qui comporte de 1 à 12 atome(s) de C.

**9.** Élément de modulation de la lumière selon une ou plusieurs des revendications 1 à 8, dans lequel le milieu cristallin liquide cholestérique comprend un ou plusieurs composé(s) cristallin(s) liquide(s) polymérisable(s) qui est/sont sélectionné(s) parmi le groupe de composés de la formule D :

P-Sp-MG-$R^0$ D

dans laquelle :

P est un groupe polymérisable,
Sp est un groupe d'espaceur ou une liaison simple,
MG est un groupe mésogène en forme de tige ou barreau, lequel est de préférence sélectionné parmi la formule M,
M est $-(A^{D21}-Z^{D21})_k-A^{D22}-(Z^{D22}-A^{D23})_l-$,
$A^{D21}$ à $A^{D23}$ sont, pour chaque occurrence, de manière indépendante les uns des autres, un groupe aryle, hétéroaryle, hétérocyclique ou alicyclique qui est en option substitué par un ou plusieurs groupe(s) L identiques ou différents, de préférence 1,4-cyclohexylène ou 1,4-phénylène, 1,4 pyridine, 1,4-pyrimidine, 2,5-thiophène, 2,6-dithiéno[3,2-b:2',3'-d]-thiophène, 2,7- fluorène, 2,6-naphtalène, 2,7-phénanthrène qui est/sont en option substitué(s) par un ou plusieurs groupe(s) L identiques ou différents,
$Z^{D21}$ et $Z^{D22}$ sont, pour chaque occurrence, de manière indépendante l'un de l'autre, -O-, -S-, -CO-, -COO-, -OCO-, -S-CO-, -CO-S-, -O-COO-, $-CO-NR^{01}-$, $-NR^{01}-CO-$, $-NR^{01}-CO-NR^{02}$, $-NR^{01}-CO-O-$, $-O-CO-NR^{01}-$, $-OCH_2-$, $-CH_2O-$, $-SCH_2-$, $-CH_2S-$, $-CF_2O-$, $-OCF_2-$, $-CF_2S-$, $-SCF_2-$, $-CH_2CH_2-$, $-(CH_2)_4-$, $-CF_2CH_2-$, $-CH_2CF_2-$, $-CF_2CF_2-$, -CH=N-, -N=CH-, -N=N-, $-CH=CR^{01}-$, $-CY^{01}=CY^{02}-$, -C≡C-, -CH=CH-COO-, -OCO-CH=CH-, ou une liaison simple, de préférence -COO-, -OCO-, -CO-O-, -O-CO-, $-OCH_2-$, $-CH_2O-$, $-CH_2CH_2-$, $-(CH_2)_4-$, $-CF_2CH_2-$, $-CH_2CF_2-$, $-CF_2CF_2-$, -C≡C-, -CH=CH-COO-, -OCO-CH=CH-, ou une liaison simple,
L est, pour chaque occurrence, de manière indépendante les uns des autres, F ou Cl,
$R^0$ est H, alkyle, alcoxy, thioalkyle, alkylcarbonyle, alcoxycarbonyle, alkylcarbonyloxy ou alcoxycarbonyloxy qui comporte de 1 à 20 atome(s) de C, ou est $Y^0$ ou P-Sp-,
$Y^0$ est F, Cl, CN, $NO_2$, $OCH_3$, OCN, SCN, alkylcarbonyle, alcoxycarbonyle, alkylcarbonyloxy ou alcoxycarbonyloxy en option fluoré qui comporte de 1 à 4 atome(s) de C, ou alkyle ou alcoxy mono-, oligo- ou polyfluoré qui comporte de 1 à 4 atome(s) de C,
$Y^{01}$ et $Y^{02}$ représentent chacun, de manière indépendante l'un de l'autre, H, F, Cl ou CN,
$R^{01}$ et $R^{02}$ présentent chacun et de manière indépendante la signification qui a été définie ci-avant pour $R^0$, et
k et l sont chacun et de manière indépendante 0, 1, 2, 3 ou 4.

**10.** Procédé pour la fabrication d'un élément de modulation de la lumière selon une ou plusieurs des revendications 1 à 9, comprenant au moins les étapes qui suivent :

- la coupe et le nettoyage des substrats,
- la constitution de la structure d'électrode(s) sur les substrats,
- le dépôt par revêtement d'au moins une couche d'alignement,
- le dépôt par revêtement du photorésist sur la couche d'alignement,
- la photolithographie du photorésist,
- la réalisation d'un frottement sur le photorésist à motif,
- l'assemblage de la cellule en utilisant un adhésif durcissable aux UV,
- le remplissage de la cellule à l'aide du milieu cristallin liquide cholestérique,
- l'obtention d'une texture ULH, en appliquant un champ électrique sur le milieu LC tout en effectuant un refroidissement lent depuis la phase isotrope selon la phase cholestérique, et
- en option, le durcissement des composés polymérisables du milieu LC.

**11.** Utilisation de l'élément de modulation de la lumière selon une ou plusieurs des revendications 1 à 9 dans les dispositifs optiques ou électro-optiques.

**12.** Dispositif optique ou électro-optique comprenant l'élément de modulation de la lumière selon une ou plusieurs des revendications 1 to 9.

**13.** Dispositif optique ou électro-optique selon la revendication 12, **caractérisé en ce qu'**il s'agit d'un affichage électro-optique, d'un affichage à cristaux liquides (LCD), d'un dispositif optique non linéaire (NLO), ou d'un dispositif de stockage d'information optique.

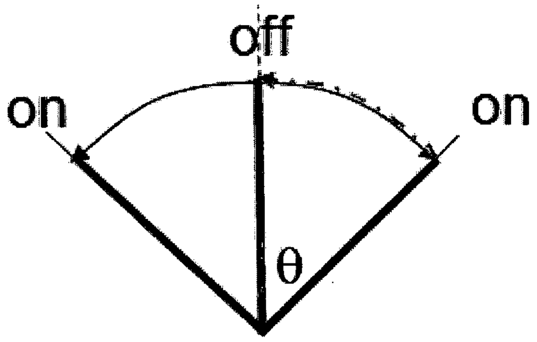


Polariser transmission axis

Fig. 1

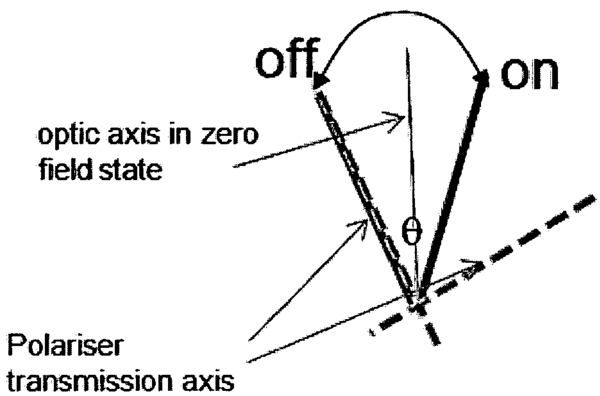


Fig. 2

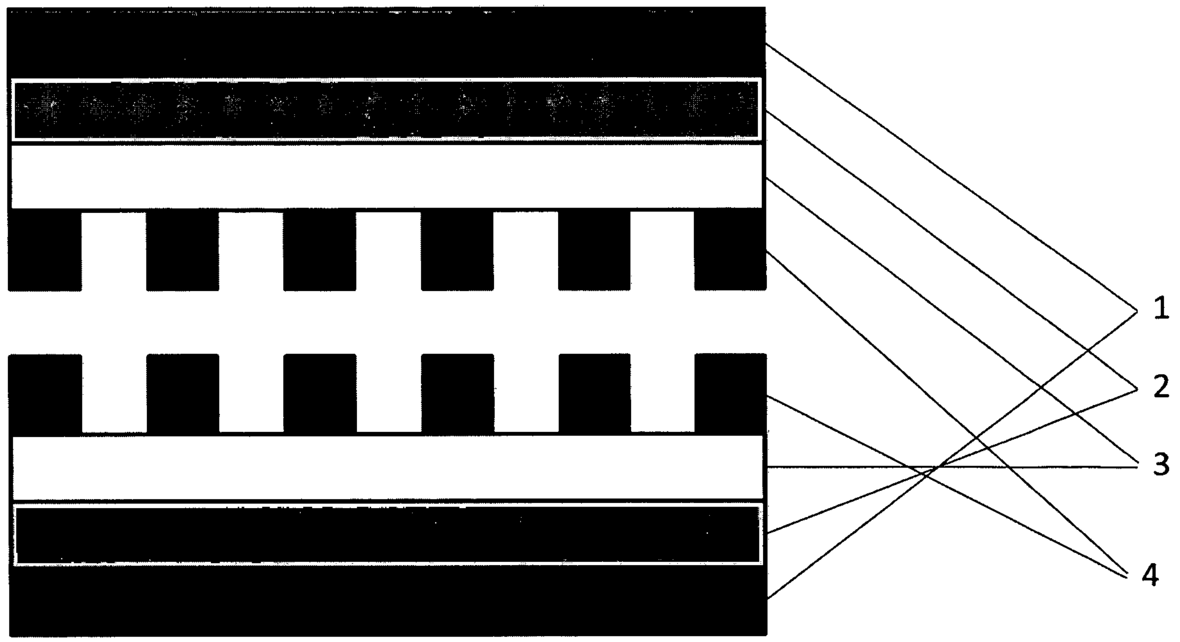


Fig. 3

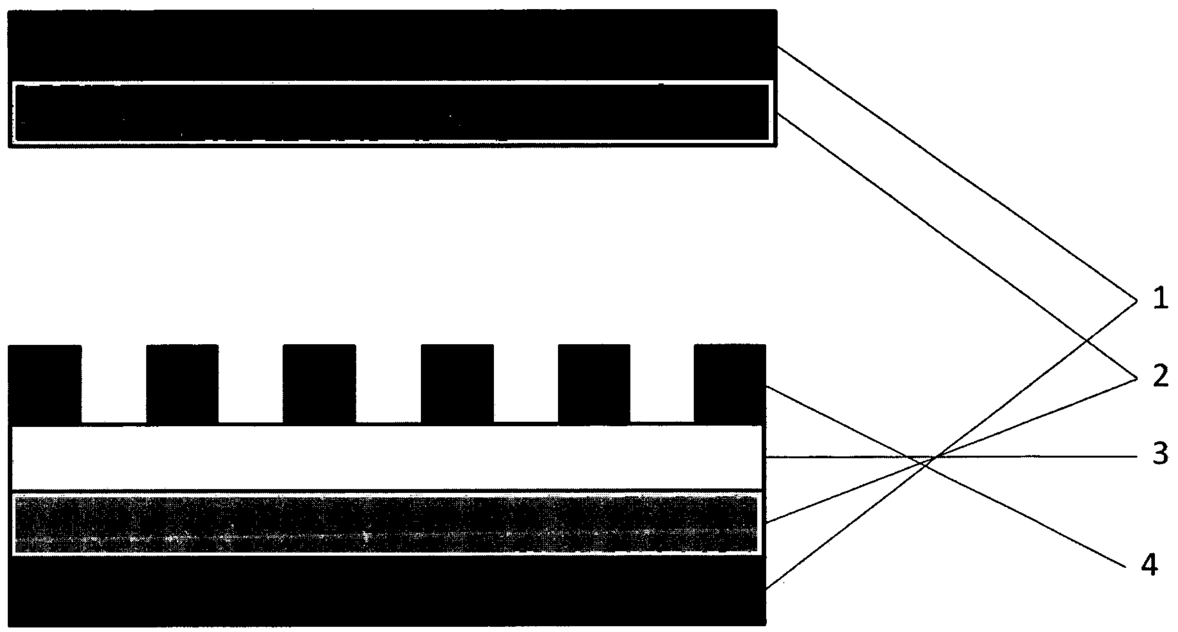


Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 4000451
- EP 0588568 A
- US 20050162585 A1
- US 7038745 B
- US 6099758 A
- GB 2356629 A
- EP 0971016 A
- WO 9800428 A
- GB 2328207 A
- WO 9322397 A
- EP 0261712 A
- DE 19504224
- WO 9522586 A
- WO 9700600 A
- US 5518652 A
- US 5750051 A
- US 5770107 A
- US 6514578 B
- US 7060200 B1
- US 20060172090 A1


### Non-patent literature cited in the description


- **MEYER et al.** *Liquid Crystals,* 1987, vol. 58, 15
- **CHANDRASEKHAR.** Liquid Crystals. Cambridge University Press, 1992
- **P.G. DEGENNES et al.** The Physics of Liquid Crystals. Oxford Science Publications, 1995
- Periodic anchoring condition for alignment of a short pitch cholesteric liquid crystal in uniform lying helix texture. *Appl. Phys. Lett.,* 2010, vol. 96, 113503
- Short pitch cholesteric electro-optical device based on periodic polymer structures. *Appl. Phys. Lett.,* 2009, vol. 95, 011102
- Effect of polymer concentration on stabilized large-tilt-angle flexoelectro-optic switching. *J. Appl. Phys.,* 2006, vol. 99, 023511
- Alignment of cholesteric liquid crystals using periodic anchoring. *J. Appl. Phys.,* 1999, vol. 86, 7
- Alignment of the Uniform Lying Helix Structure in Cholesteric Liquid Crystals. *Jap. J. Appl. Phys.,* 2009, vol. 48, 101302
- **CARBONE et al.** *Mol. Cryst. Liq. Cryst.,* 2011, vol. 544, 37-49
- **COLES et al.** *J. Appl. Phys.,* 2006, vol. 99, 034104
- **C. TSCHIERSKE ; G. PELZL ; S. DIELE.** *Angew. Chem.,* 2004, vol. 116, 6340-6368
- *J. Cognard, Mol.Cryst.Liq.Cryst.,* 1981, vol. 78 (1), 1-77
- **COLES et al.** *Physical Review E,* 2012, vol. 85, 012701
- **HORI, K. ; LIMURO, M. ; NAKAO, A. ; TORIUMI, H.** *J. Mol. Struc.,* 2004, vol. 699, 23-29
- **JOO-HOON PARK et al.** Liquid Crystalline Properties of Dimers Having o-, m- and p- Positional Molecular structures. *Bill. Korean Chem. Soc.,* 2012, vol. 33 (5), 1647-1652
- **COLES, H.J. ; MUSGRAVE, B. ; COLES, M.J. ; WILLMOTT, J.** *J. Mater. Chem.,* 2001, vol. 11, 2709-2716
- **LAGERWALL et al.** *Liquid Crystals,* 1998, vol. 24, 329-334
- Merck Liquid Crystals, Physical Properties of Liquid Crystals. Merck KGaA, November 1997